(19) Europäisches Patentamt
European Patent Office
Office européen des brevets

(11) EP 3 772 671 A1

(12) EUROPÄISCHE PATENTANMELDUNG

(43) Veröffentlichungstag:
**10.02.2021 Patentblatt 2021/06**

(21) Anmeldenummer: **19190170.1**

(22) Anmeldetag: **06.08.2019**

(51) Int Cl.:
***G03H 1/02*** (2006.01) ***B32B 7/06*** (2019.01)
***B32B 7/12*** (2006.01) ***B32B 27/20*** (2006.01)
***G02B 5/00*** (2006.01) ***C09J 11/00*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Roelle, Thomas, Dr.**
**51381 Leverkusen (DE)**
- **Berneth, Horst, Dr.**
**51373 Leverkusen (DE)**
- **Bayram, Nutkiye**
**51371 Leverkusen (DE)**
- **Rewitz, Christian, Dr.**
**50823 Köln (DE)**
- **Bruder, Friedrich-Karl, Dr.**
**47802 Krefeld (DE)**
- **Hansen, Sven, Dr.**
**50670 Köln (DE)**

(74) Vertreter: **Levpat**
**c/o Covestro AG**
**Gebäude 4825**
**51365 Leverkusen (DE)**

# (54) SCHICHTAUFBAU FÜR DIE BELICHTUNG VON HOLOGRAMMEN

(57) Die Erfindung betrifft einen Schichtaufbau geeignet zum Einschreiben eines Hologramms umfassend eine flächig vorliegende Photopolymerschicht A und einen Schichtverbund C-D bestehend aus einer gefärbten Substratschicht D und einer flächig mit der Substratschicht D verbundenen und mit mindestens einem Farbstoff eingefärbten Klebstoffschicht C, einen Schichtverbund C-D, ein Kit-of-parts, Verfahren zur Herstellung der Schichtverbünde sowie deren Verwendung.



Printed by Jouve, 75001 PARIS (FR)

## Beschreibung

Die Erfindung betrifft einen Schichtaufbau geeignet zum Einschreiben eines Hologramms umfassend eine flächig vorliegende Photopolymerschicht A und einen Schichtverbund C-D bestehend aus einer gefärbten Substratschicht D und einer flächig mit der Substratschicht D verbundenen und mit mindestens einem Farbstoff eingefärbten Klebstoffschicht C, einen Schichtverbund C-D, ein Kit-of-parts, Verfahren zur Herstellung der Schichtverbünde sowie deren Verwendung.

Für Transmissionshologramme in der industriellen Anwendung sind holographische Aufzeichnungsmaterialien bevorzugt, die als Folienverbund vorliegen und damit in Massenherstellungsprozesse, wie der Rolle-zu-Rolle Verarbeitung, verwendet werden können. Dazu gehören Silberhalogenid-Emulsionen, gehärtete Dichromat-Gelatine und Photopolymere. Photopolymere gelten als besonders bevorzugt, weil sie sich als lagerstabiler erwiesen haben und im Gegensatz zur Dichromat-Gelatine und dem Silberhalogenid ohne nasschemische Verarbeitungsschritte auskommen, die bei diesen Materialien der Entwicklung und Fixierung dienen. Die Nasschemie bedeutet einen zusätzlichen Verarbeitungsschritt bei der Hologrammherstellung und verschlechtert in der Regel die Qualität des Hologramms als Folge von Quellung und anschließendem Materialschrumpf. Photopolymere wurden in den vergangenen Jahrzehnten entwickelt. Hierzu wird exemplarisch auf US 4,942,112, US 5,759,721, EP 1 510 862, EP 1 231 511, EP 211 615, WO 2003/036389 A, sowie US 2002/142227 verwiesen. Der Stand der Technik weist selbstentwickelnde Photopolymerfilme aus, die für die Herstellung von Volumenhologrammen geeignet sind, wie beispielsweise in WO 2010/037515. Holographische Materialien sind beispielsweise auch aus der WO 2008/125229 A1 bekannt, wo eine Photopolymer-Zusammensetzung und ein daraus erhältliches Photopolymer beschrieben wird, die Polyurethanmatrixpolymere, mindestens ein Schreibmonomer auf Acrylatbasis sowie Photoinitiatoren enthaltend mindestens einen Coinitiator und mindestens einen Farbstoff umfassen.

Für z.B. die Massenherstellung von Hologrammen durch eine Kopierbelichtung insbesondere in Transmissions-Geometrie ist es erforderlich, dass das beim Belichten in die aktive holographische Schicht eingestrahlte Laserlicht nicht von der Rückseite der Substratschicht reflektiert wird. Hierzu ist es üblich, diese Rückseite mit einer lichtabsorbierenden Beschichtung zu versehen ("Blackbacking"), da sonst zusätzlich ein ungewolltes Reflektionshologramm entstehen kann. Hierfür sind sowohl eine gummi-artige Verformbarkeit der lichtabsorbierenden Beschichtung und ausreichende aber vollständig reversible Haftung zur Photoschicht oder einer Substratschicht mit einer verbundenen Photoschicht gefordert. Die lichtabsorbierende Beschichtung muss also rückstandsfrei von der Photoschicht oder Substratschicht zu lösen sein und einen sehr guten optischen Kontakt zwischen den Schichten herstellen. Der somit hergestellte optische Kontakt zwischen der Photoschicht oder Substratschicht und der lichtabsorbierenden Beschichtung verhindert also die streulichtartige Rückreflektion in die Photoschicht und erhöht damit den Gesamtkontrast des Kopierschrittes, weil sich z.B. optische Störungen in Form von Newton-Ringen oder -Streifen nicht oder nur sehr untergeordnet bilden. Das Herstellen dieses sehr guten optischen Kontakts erfordert eine sehr glatte Oberfläche der lichtabsorbierenden Beschichtung. Auch für verschiedene Anwendungen von Hologrammen wie z. B. als ein holographisches optisches Element oder als ein bildgebendes Medium kann eine solche lichtabsorbierende Rückseitenbeschichtung vorteilhaft sein.

US 5,985,490 beschreibt einen Reflexionshologramm-Master mit Anti-Halo-System und seine Herstellung: Das Medium weist einen Neutraldichtefilter angrenzend an die Masterplatte auf, der in Verbindung mit einer Anti-Reflexbeschichtung seine Funktion erfüllt. Der Träger des Anti-Halo-Systems ist ein 0.5 bis 1.5 mm dickes Glas. Der Kontakt zu der Aufzeichnungsschicht wird über eine elastische Polymerschicht, die als Spannungsaufnehmer und chemische Barriere dient, sowie über eine Kontaktflüssigkeit, die die Brechungsindexanpassung bewirkt. Würde man dieses Anti-Halo-System für die Herstellung von Transmissionshologrammen verwenden, müsste es vom Hologramm trennbar sein. Neutraldichteglas und Antireflexbeschichtung sind hochwertig und teuer, und sollten daher wiederverwendet werden. Ein dünnes Glas ist bruchempfindlich und die beschriebenen Oberflächen kratzempfindlich, was die Entwicklung eines technischen Verfahrens zum Trennen und Verbinden von Hologramm und Anti-Halo-System erschwert. Darüber hinaus erfordert das zur Brechungsindexanpassung verwendete Flüssigmaterial weitere Prozessschritte, die die Vorrichtung zur Herstellung des Hologramms komplexer werden lassen. Hinzu kommt, dass Flüssigkeiten zur Brechungsindexanpassung in der Regel lange Verweildauern bis zum Start der holographischen Belichtung erfordern, da sonst durch Flüssigkeitsbewegungen das Interferenzgitter während der holographischen Belichtung nicht stabil ist. Die Verwendung ist daher für ein wirtschaftlich lohnendes Aufnahmeverfahren nicht geeignet.

Es gibt verschiedene handelsübliche schwarze Folien hoher optischer Dichte. Färbendes Material ist hierbei meist Ruß, aber auch Titannitrid. Durch die enthaltenen dispergierten Pigmente auf organischer oder anorganischer Basis genügt die Glattheit der Oberfläche i.d.R. nicht den hier geforderten Anforderungen und die Pigmente dienen als lokale Streuzentren, so dass eine vollumfänglich Nutzung in den geforderten Schichtaufbauten nicht gegeben ist.

In der EP2801867 A1 sind holographische Materialien, die eine Anti-halo-Schicht enthalten, beschrieben. Ihre Verwendung liefert jedoch keine voll befriedigenden Resultate. Insbesondere ist es nachteilig, wenn, die holographische Schicht und die Anti-halo-Schicht nicht unmittelbar aneinander grenzen, sondern beispielsweise durch eine Glasplatte getrennt sind. Diese Trennung ist aber häufig notwendig, um die Anti-halo-Schicht wieder von dem belichteten Hologramm abziehen zu können.

Der vorliegenden Erfindung lag daher die Aufgabe zugrunde, einen verbesserten Schichtaufbau zur Verfügung zu stellen, bei dem störende Reflexionen bei der Belichtung weitestgehend unterbunden werden, die zu Fehlern in der Aufzeichnungsschicht führen könnten. Mit anderen Worten soll der Schichtaufbau eine wirksame Anti-Halo-Funktion besitzen. Zudem soll der Schichtaufbau so gehalten sein, dass eine spätere einfache Weiterverwendung der belichteten Aufzeichnungsschicht ermöglicht wird, indem weitere Schichten des Schichtaufbaus leicht wieder von der Aufzeichnungsschicht getrennt werden können, ohne dass die Aufzeichnungsschicht beschädigt wird.

Diese Aufgabe wird gelöst durch einen Schichtaufbau geeignet zum Einschreiben eines Hologramms umfassend eine flächig vorliegende Photopolymerschicht A und einen Schichtverbund CD bestehend aus einer gefärbten Substratschicht D und einer flächig mit der Substratschicht D verbundenen und mit mindestens einem Farbstoff eingefärbten Klebstoffschicht C, wobei die eingefärbte Klebstoffschicht C zwischen der Photopolymerschicht A und der gefärbten Substratschicht D liegt, dadurch gekennzeichnet, dass die eingefärbte Klebstoffschicht C bei der Wellenlänge des Laserlichts, welches zum Einschreiben eines Hologramms in die Photopolymerschicht A des Schichtaufbaus verwendet wird, eine optische Dichte von >2 aufweist, wobei die Wellenlänge des Laserlichts im Bereich von 350 nm bis 1200 nm liegt.

Unter einem Farbstoff im Sinne der vorliegenden Erfindung zum Einfärben der Schicht C wird ein in der Schicht C molekular gelöstes, i.d.R. organisches Farbmittel verstanden. In der Schicht C nicht molekular gelöste Farbmittel wie Pigmente sind nicht geeignet.

Es wurde überraschend gefunden, dass eine gefärbte Folie beschichtet mit einer gefärbten Klebstoffschicht, beispielsweise auf Basis von verdickten Polyurethan-Polyacrylat Dispersionen, die Aufgabe der oben genannten Schichten C und D bestens erfüllen kann. Die Klebrigkeit der Schicht C kann so eingestellt werden kann, dass sie zu einer sicheren Verklebung mit vorzugsweise den Schichten A oder B geeignet ist, d.h. eine ausreichende Klebefähigkeit aufweist, so dass sie auf die Schichten B, A oder ggf. E stabil und mit ausreichendem optischen Kontakt, insbesondere einem blasenfreien Kontakt, aufbracht werden kann, nach erfolgter Belichtung des Hologramms in Schicht A aber restlos und rückstandsfrei wieder abgezogen werden kann und insbesondere die Schicht A dabei nicht beschädigt oder verändert wird. Dies wird durch eine gummiartige Verformbarkeit der Schicht C erreicht. Ebenfalls ist bevorzugt, wenn die Schicht C einen Brechungsindex aufweist, der der jeweils zu kontaktierenden Schicht in den o.g. Schichtaufbauten möglichst nahe kommt, da dann die Lichtstrahlen optimal in das Material eindringen können und der Anteil reflektierter Strahlung minimiert wird.

Unter "flächig vorliegend" im Sinne der Erfindung wird eine Ausgestaltung als ebene Fläche oder auch als konkav oder konvex gewölbte oder wellige Fläche verstanden. Im Sinne der Erfindung muss das Photopolymer A insofern eine ebene, gewölbte oder gewellte Fläche aufweisen.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyisocyanat" gesprochen wird, ist das Wort "ein" lediglich als unbestimmter Artikel und nicht als Zahlwort aufzufassen, es ist also damit auch eine Ausführungsform umfasst, in der zwei oder mehr Polyisocyanate vorhanden sind die sich beispielsweise strukturell unterscheiden.

In einer bevorzugten Ausführungsform umfasst der erfindungsgemäße Schichtaufbau eine flächig vorliegende Photopolymerschicht A und einen Schichtverbund C-D bestehend aus einer gefärbten Substratschicht D und einer flächig mit der Substratschicht D verbundenen und mit mindestens einem Farbstoff eingefärbten Klebstoffschicht C, wobei die eingefärbte Klebstoffschicht C zwischen der Photopolymerschicht A und der gefärbten Substratschicht D liegt, dadurch gekennzeichnet, dass die eingefärbte Klebstoffschicht C bei der Wellenlänge des Laserlichts, welches zum Einschreiben eines Hologramms in die Photopolymerschicht A des Schichtaufbaus verwendet wird, eine optische Dichte von >2 aufweist, wobei die Wellenlänge des Laserlichts im Bereich von 400 nm bis 800 nm liegt.

In einer bevorzugten Ausführungsform umfasst der erfindungsgemäße Schichtaufbau eine flächig vorliegende Photopolymerschicht A und einen Schichtverbund C-D bestehend aus einer gefärbten Substratschicht D und einer flächig mit der Substratschicht D verbundenen und mit mindestens einem Farbstoff eingefärbten Klebstoffschicht C, wobei die eingefärbte Klebstoffschicht C zwischen der Photopolymerschicht A und der gefärbten Substratschicht D liegt, dadurch gekennzeichnet, dass die eingefärbte Klebstoffschicht C bei der Wellenlänge des Laserlichts, welches zum Einschreiben eines Hologramms in die Photopolymerschicht A des Schichtaufbaus verwendet wird, eine optische Dichte von >2 aufweist, wobei die Wellenlänge des Laserlichts im Bereich von 350 nm bis 1200 nm liegt, mit der Maßgabe dass die eingefärbte Klebstoffschicht C nicht schwarz ist.

In einer bevorzugten Ausführungsform umfasst der erfindungsgemäße Schichtaufbau eine flächig vorliegende Photopolymerschicht A und einen Schichtverbund C-D bestehend aus einer gefärbten Substratschicht D und einer flächig mit der Substratschicht D verbundenen und mit mindestens einem Farbstoff eingefärbten Klebstoffschicht C, wobei die eingefärbte Klebstoffschicht C zwischen der Photopolymerschicht A und der gefärbten Substratschicht D liegt, dadurch gekennzeichnet, dass die eingefärbte Klebstoffschicht C bei der Wellenlänge des Laserlichts, welches zum Einschreiben eines Hologramms in die Photopolymerschicht A des Schichtaufbaus verwendet wird, eine optische Dichte

von >2 aufweist, wobei die Wellenlänge des Laserlichts im Bereich von 400 nm bis 800 nm liegt, mit der Maßgabe dass die eingefärbte Klebstoffschicht C nicht schwarz ist.

In einer bevorzugten Ausführungsform des erfindungsgemäßen Schichtaufbaus sind gefärbte Klebstoffschicht C und die Substratschicht D frei von lichtstreuenden Partikeln.

Gegenstand der vorliegenden Erfindung ist auch ein Schichtverbund umfassend eine gefärbte Substratschicht D und eine flächig mit der Substratschicht D verbundene und mit mindestens einem anionischen Farbstoff eingefärbte Klebstoffschicht C, dadurch gekennzeichnet, dass die eingefärbte Klebstoffschicht C bei mindestens einer Wellenlänge im Bereich von 350 nm bis 1200 nm, vorzugsweise im Bereich von 400 nm bis 800 nm, eine optische Dichte von >2 aufweist, mit der Maßgabe dass die eingefärbte Klebstoffschicht C nicht schwarz ist.

In einer bevorzugten Ausführungsform des erfindungsgemäßen Schichtverbunds sind gefärbte Klebstoffschicht C und die Substratschicht D frei von lichtstreuenden Partikeln.

Gegenstand der vorliegenden Erfindung ist auch ein Kit-of-parts umfassend mindestens eine flächig vorliegende Photopolymerschicht A und einen Schichtverbund umfassend eine gefärbte Substratschicht D und eine flächig mit der Substratschicht D verbundene und mit mindestens einem Farbstoff eingefärbte Klebstoffschicht C, dadurch gekennzeichnet, dass die eingefärbte Klebstoffschicht C bei der Wellenlänge des Laserlichts, welches zum Einschreiben eines Hologramms in die Photopolymerschicht A des Schichtaufbaus verwendet wird, eine optische Dichte von >2 aufweist, wobei die Wellenlänge des Laserlichts im Bereich von 350 nm bis 1200 nm, vorzugsweise im Bereich von 400 nm bis 800 nm, liegt.

In einer bevorzugten Ausführungsform des erfindungsgemäßen Kit-of-Parts sind gefärbte Klebstoffschicht C und die Substratschicht D frei von lichtstreuenden Partikeln.

Vorzugsweise wird der Farbstoff der Klebstoffschicht C im erfindungsgemäßen Schichtaufbau, Schichtverbund und Kit-of-Parts so ausgewählt, dass seine maximale Absorption mit der benutzten Laserwellenlänge zusammenfällt oder von dieser um nicht mehr als 30 nm, vorzugsweise 20 nm, besonders bevorzugt 15 nm abweicht. Die bevorzugten Laserwellenlänge sind 355 nm, 457 nm, 460 nm, 473 nm, 480 nm, 532 nm, 633 nm, 635 nm, 670 nm, 780 nm, 850 nm und 1064 nm. Besonders bevorzugt sind 457 nm, 473 nm, 532 nm, 633 nm, 670 nm und 780 nm.

In einer bevorzugten Ausführungsform des erfindungsgemäßen Schichtaufbaus und / oder des erfindungsgemäßen Kit-of-parts liegt die Photopolymerschicht A auf einer transparenten Substratschicht B vor und ist mit dieser zumindest teilweise verbunden.

In einer bevorzugten Ausführungsform umfasst der erfindungsgemäße Schichtaufbau, das erfindungsgemäße Kit-of-parts und / oder der erfindungsgemäße Schichtverbund weiterhin ein transparente Substratschicht E.

In einer bevorzugten Ausführungsform des erfindungsgemäßen Schichtaufbaus besteht dieser

a) aus mindestens drei zumindest teilweise miteinander verbundenen Schichten, wobei die Schichten in der Reihenfolge A-C-D unmittelbar aufeinander angeordnet sind,
b) aus mindestens vier zumindest teilweise miteinander verbundenen Schichten, wobei die Schichten in der Reihenfolge A-B-C-D, B-A-C-D, A-E-C-D, A-C-D-E oder E-A-C-D unmittelbar aufeinander angeordnet sind, oder
c) aus mindestens fünf zumindest teilweise miteinander verbundenen Schichten, wobei die Schichten in der Reihenfolge B-A-E-C-D, A-B-E-C-D, E-B-A-C-D, E-A-B-C-D, B-A-C-D-E oder A-B-C-D-E unmittelbar aufeinander angeordnet sind.

In einer bevorzugten Ausführungsform des erfindungsgemäßen Schichtaufbaus, des erfindungsgemäßen Kit-of-parts und / oder des erfindungsgemäßen Schichtverbunds weist die eingefärbte Klebstoffschicht C bei mindestens einer der Wellenlängen von 355 nm, 457 nm, 460 nm, 473 nm, 480 nm, 532 nm, 633 nm, 635 nm, 670 nm, 780 nm, 850 nm und / oder 1064 nm eine optische Dichte von >2, vorzugsweise von > 2.5, besonders bevorzugt von > 3 auf.

In einer weiteren bevorzugten Ausführungsform des erfindungsgemäßen Schichtaufbaus, des erfindungsgemäßen Kit-of-parts und / oder des erfindungsgemäßen Schichtverbunds weist die eingefärbte Klebstoffschicht C bei mindestens einer der Wellenlängen von 457 nm, 460 nm, 473 nm, 480 nm, 532 nm, 633 nm, 635 nm, 670 nm und / oder 780 nm eine optische Dichte von >2, vorzugsweise von > 2.5, besonders bevorzugt von > 3 auf.

In einer bevorzugten Ausführungsform des erfindungsgemäßen Schichtaufbaus, des erfindungsgemäßen Schichtv und / oder des erfindungsgemäßen Kit-of-parts ist der mindestens eine Farbstoff in der eingefärbten Klebstoffschicht C ein anionischer Farbstoff.

In einer bevorzugten Ausführungsform des erfindungsgemäßen Schichtaufbaus, des erfindungsgemäßen Kit-of-parts und / oder des erfindungsgemäßen Schichtverbunds ist der mindestens eine anionische Farbstoff in der eingefärbten Klebstoffschicht C ausgewählt aus der Gruppe bestehend aus anionischen Stilben-Derivaten, anionischen Oxonol-Farbstoffen, anionischen Xanthen-Farbstoffen, anionischen Triphenylmethan-Farbstoffen, anionischen Cumarin-Farbstoffen, anionischen Methin-Farbstoffen, anionischen Azin-Farbstoffen und anionischen Azo-Farbstoffen oder einer Mischung von mindestens zweien hiervon.

In einer weiteren bevorzugten Ausführungsform des erfindungsgemäßen Schichtaufbaus, des erfindungsgemäßen Kit-of-parts und / oder des erfindungsgemäßen Schichtverbunds ist der mindestens eine anionische Farbstoff in der eingefärbten Klebstoffschicht C ausgewählt aus der Gruppe bestehend aus anionischen Stilben-Derivaten, anionischen Oxonol-Farbstoffen, anionischen Xanthen-Farbstoffen, anionischen Triphenylmethan-Farbstoffen, anionischen Methin-Farbstoffen und anionischen Azin-Farbstoffen oder einer Mischung von mindestens zweien hiervon.

In einer weiteren bevorzugten Ausführungsform des erfindungsgemäßen Schichtaufbaus, des erfindungsgemäßen Kit-of-parts und / oder des erfindungsgemäßen Schichtverbunds ist der mindestens eine anionische Farbstoff in der eingefärbten Klebstoffschicht C ausgewählt aus der Gruppe bestehend aus anionischen Oxonol-Farbstoffen, anionischen Xanthen-Farbstoffen, anionischen Triphenylmethan-Farbstoffen und anionische Methin-Farbstoffe oder einer Mischung von mindestens zweien hiervon

In einer weiteren bevorzugten Ausführungsform des erfindungsgemäßen Schichtaufbaus, des erfindungsgemäßen Kit-of-parts und / oder des erfindungsgemäßen Schichtverbunds ist der mindestens eine anionische Farbstoff in der eingefärbten Klebstoffschicht C ausgewählt aus der Gruppe bestehend aus anionischen Oxonol-Farbstoffen, anionischen Xanthen-Farbstoffen und anionischen Methin-Farbstoffen oder einer Mischung von mindestens zweien hiervon.

In einer weiteren bevorzugten Ausführungsform des erfindungsgemäßen Schichtaufbaus, des erfindungsgemäßen Kit-of-parts und / oder des erfindungsgemäßen Schichtverbunds ist der mindestens eine anionische Farbstoff in der eingefärbten Klebstoffschicht C ein anionischer Xanthen-Farbstoff oder eine Mischung von mindestens zwei verschiedenen anionischen Xanthen-Farbstoffen.

In einer weiteren bevorzugten Ausführungsform des erfindungsgemäßen Schichtaufbaus, des erfindungsgemäßen Kit-of-parts und / oder des erfindungsgemäßen Schichtverbunds ist der mindestens eine anionische Farbstoff in der eingefärbten Klebstoffschicht C ausgewählt aus der Gruppe bestehend aus

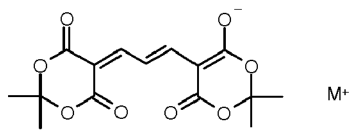
(1-a),

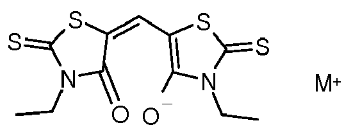
(2-a),

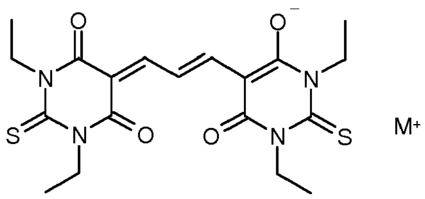
(2-b),

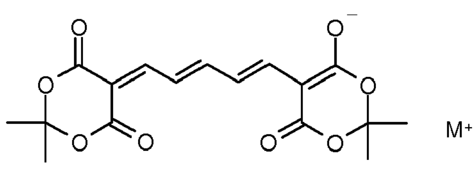
(2-c),

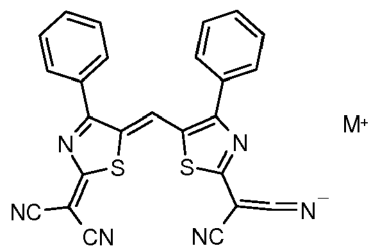
(3-a),

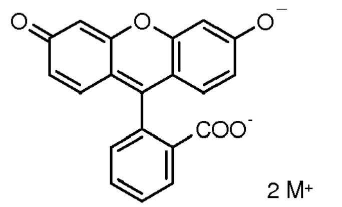

(4-a),

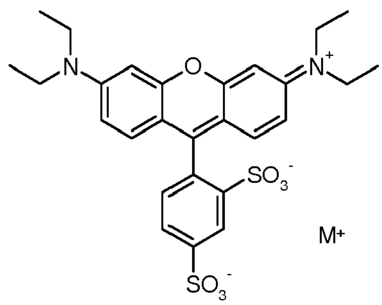

(5-a),

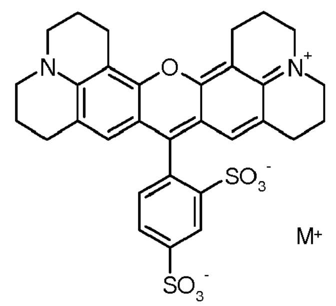

(5-b),

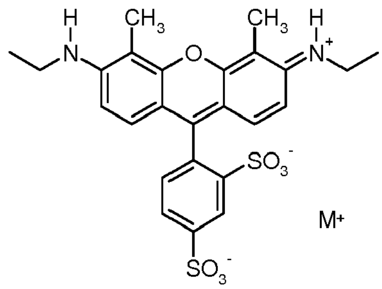

(5-c),

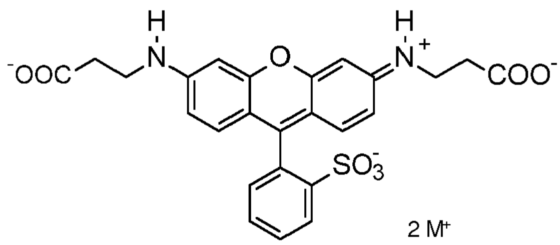

(5-d),

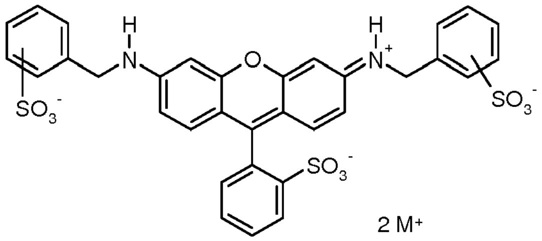

(5-e),

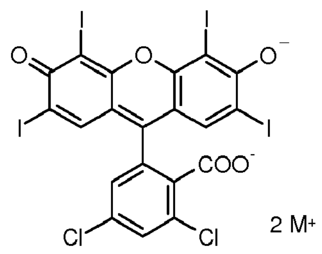

(5-f),

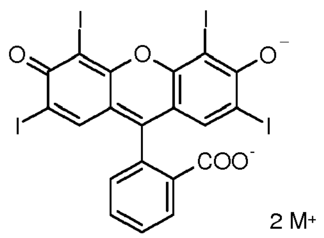

(5-g),

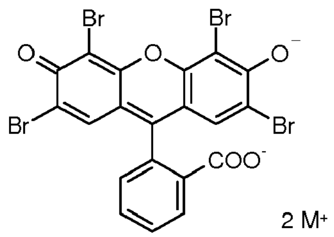

(5-h),

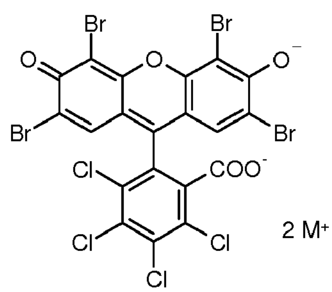

(5-i),

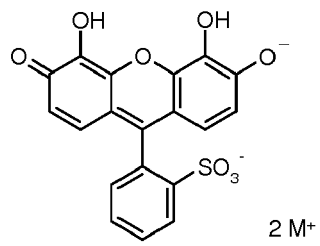
(5-j),

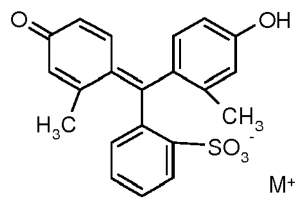
(6-a),

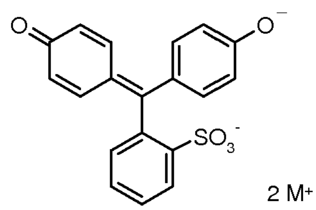
(7-a),

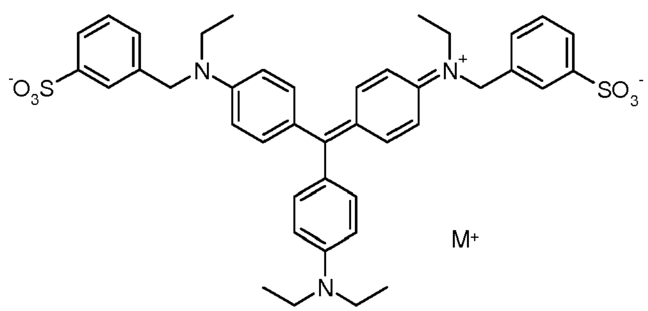
(7-b),

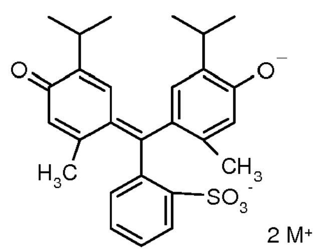
(8-a),

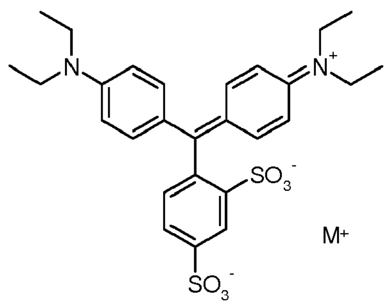

(8-b),

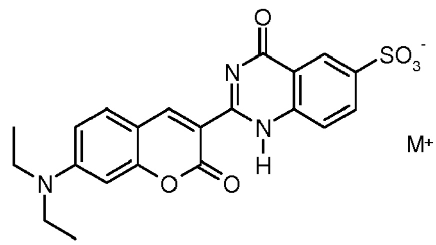

(9-a),

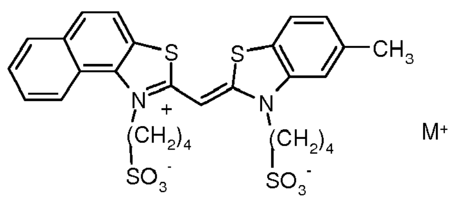

(10-a),

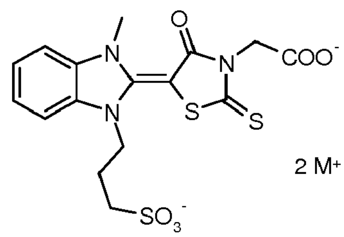

(10-b),

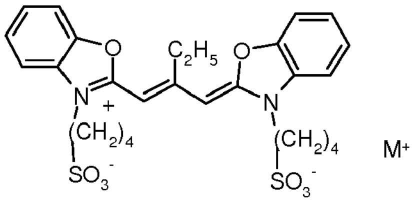

(11-a),

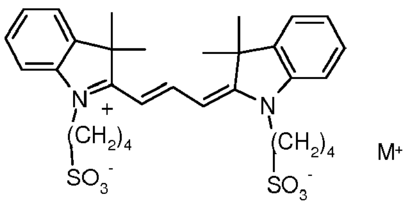

(11-b),

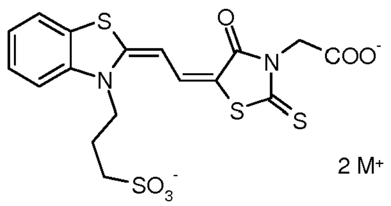

(11-c),

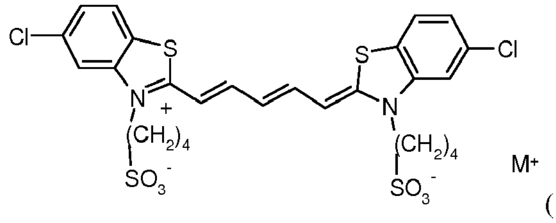

(12-a),

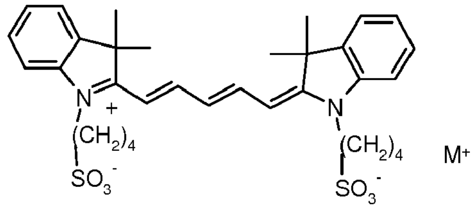

(12-b),

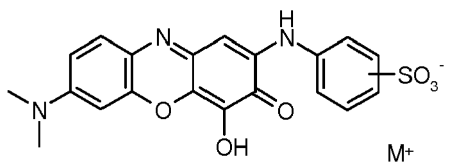

(13-c),

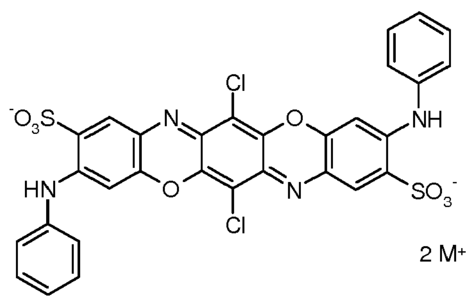

(13-a),

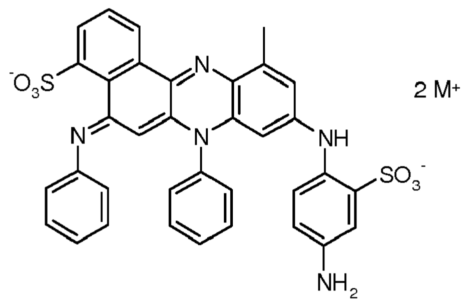

(13-b),

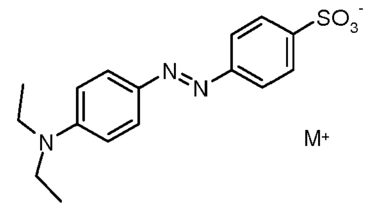

(14-a),

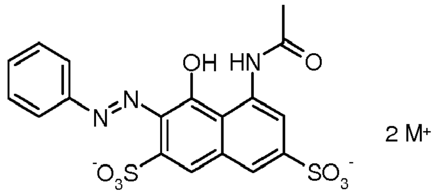

(15-a),

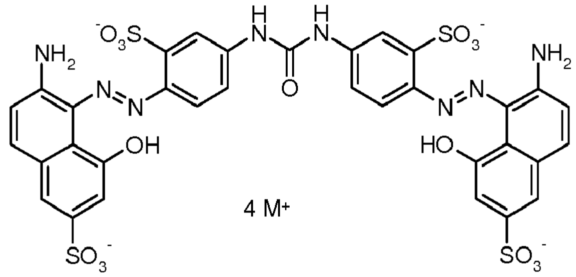

(15-b),

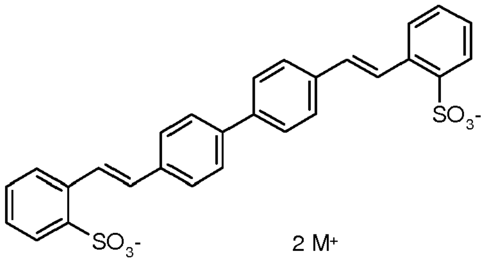

(16-a),

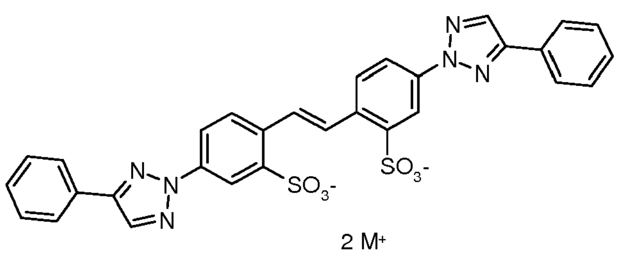

(16-b),

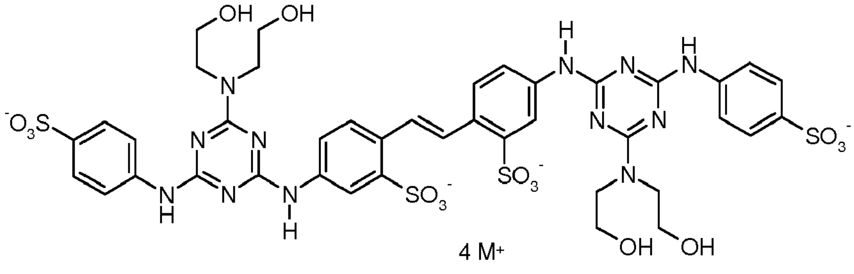

(16-c),

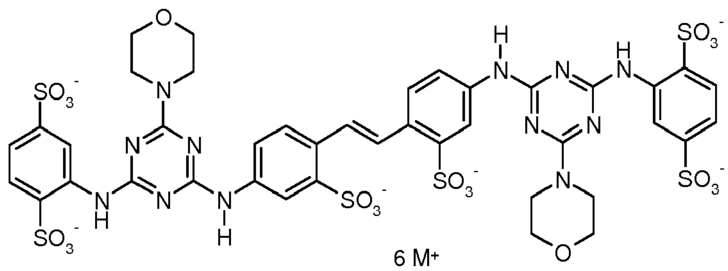

(16-d),

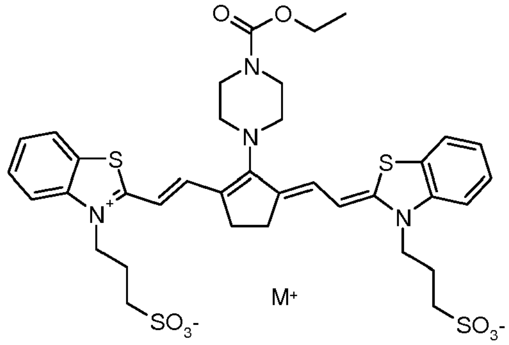

(17-a),

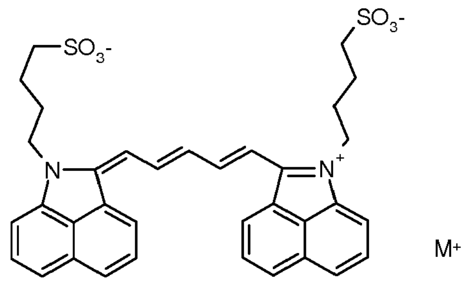

(17-b) und

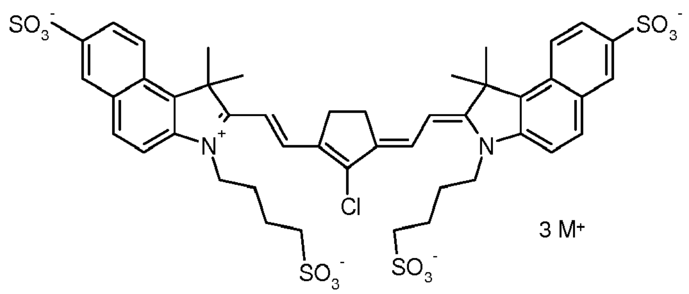

(17-c)

oder einer Mischung von mindestens zweien hiervon, wobei $M^+$ in den Formeln 1-a, 2-a, 2-b, 2-c, 3-a, 4-a, 5-a, 5-b, 5-c, 5-d, 5-e, 5-f, 5-g, 5-h, 5-i, 5-j, 6-a, 7-a, 7-b, 8-a, 8-b, 9-a, 10-a, 10-b, 11-a, 11-b, 11-c, 12-a, 12-b, 13-a, 13-b, 13-c, 14-a, 15-a, 15-b, 16-a, 16-b, 16-c, 16-d, 17-a, 17-b und 17-c für ein beliebiges Kation steht, vorzugsweise für ein Kation ausgewählt aus der Gruppe bestehend aus Ammonium-Ion, substituiertes Ammonium-Ion und Alkalimetallion oder einer Mischung von mindestens zweien hiervon, besonders bevorzugt ausgewählt aus der Gruppe bestehend aus Ammonium-Ion, Dimethyl(2-hydroxyethyl)ammonium, Bis(2-hydroxyethyl)ammonium, Tris(2-hydroxyethyl)ammonium, Bis(2-hydroxypropyl)ammonium, Tris(2-hydroxyproyl)ammonium, $Li^+$, $Na^+$, $K^+$ oder einer Mischung von mindestens zweien hiervon.

In einer weiteren bevorzugten Ausführungsform des erfindungsgemäßen Schichtaufbaus, des erfindungsgemäßen Kit-of-parts und / oder des erfindungsgemäßen Schichtverbunds ist der mindestens eine anionische Farbstoff in der eingefärbten Klebstoffschicht C ausgewählt aus der Gruppe bestehend aus

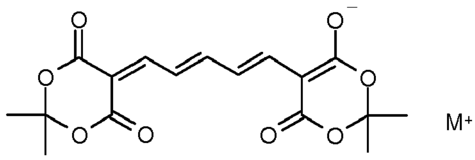

(2-c),

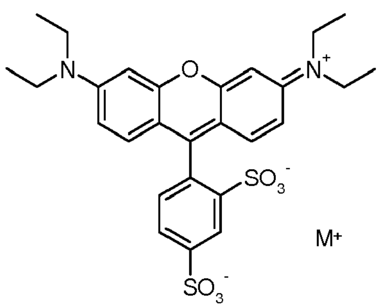

(5-a),

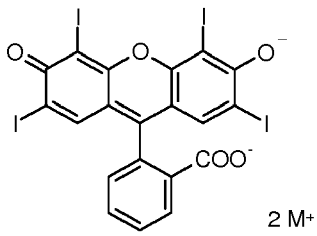

(5-g),

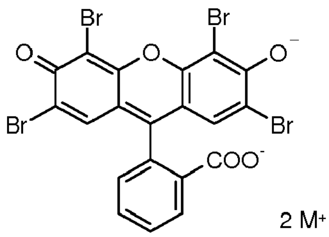

(5-h),

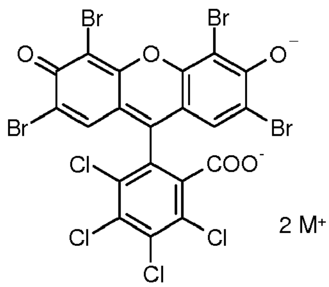

(5-i),

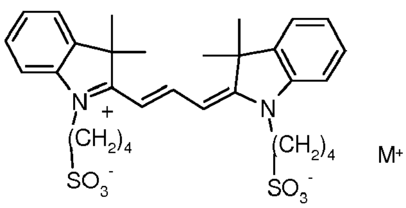

(11-b),

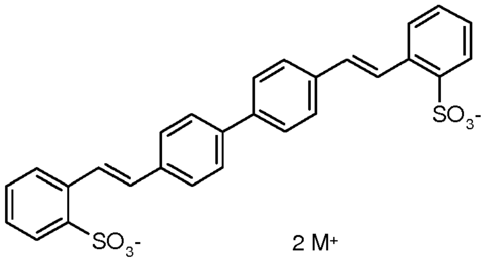

(16-a),

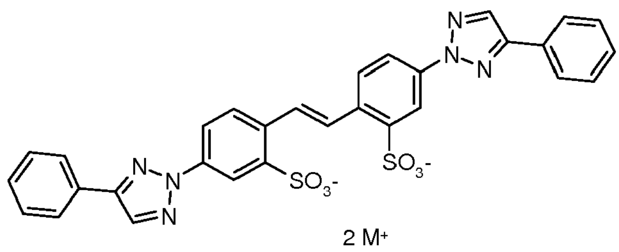

(16-b),

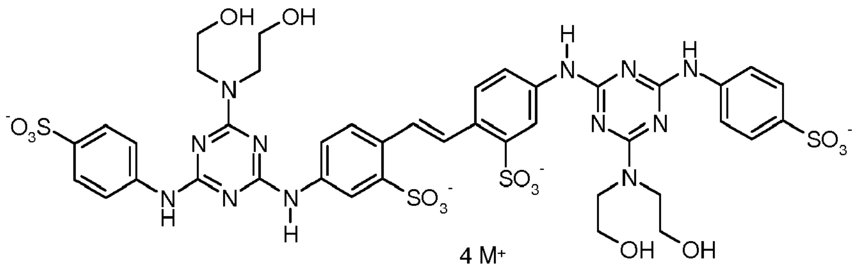

(16-c)

und

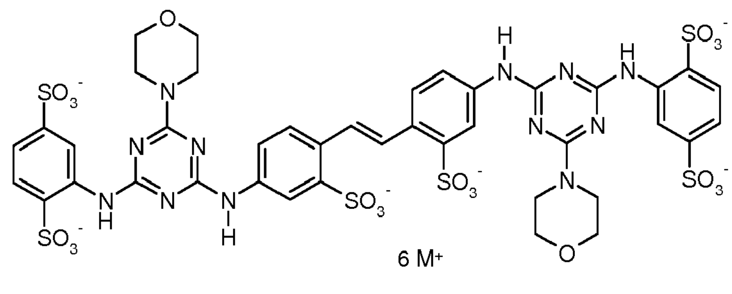

(16-d),

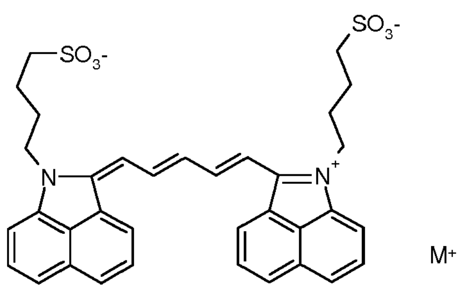

(17-b)

und

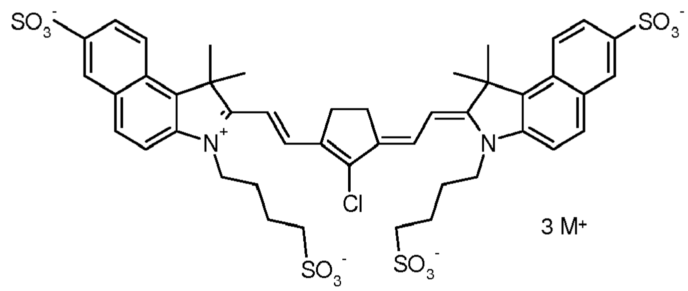

(17-c)

oder einer Mischung von mindestens zweien hiervon, wobei $M^+$ in den Formeln 2-c, 5-a, 5-g, 5-h, 5-i, 11-b, 16-a, 16-b, 16-c, 16-d, 17-b und 17-c für ein beliebiges Kation steht, vorzugsweise für ein Kation ausgewählt aus der Gruppe bestehend aus Ammonium-Ion, substituiertes Ammonium-Ion und Alkalimetallion oder einer Mischung von mindestens zweien hiervon, besonders bevorzugt ausgewählt aus der Gruppe bestehend aus Ammonium-Ion, Dimethyl(2-hydroxyethyl)ammonium, Bis(2-hydroxyethyl)ammonium, Tris(2-hydroxyethyl)ammonium, Bis(2-hydroxypropyl)ammonium, Tris(2-hydroxyproyl)ammonium, $Li^+$, $Na^+$ oder $K^+$ oder einer Mischung von mindestens zweien hiervon.

In einer weiteren bevorzugten Ausführungsform des erfindungsgemäßen Schichtaufbaus, des erfindungsgemäßen Kit-of-parts und / oder des erfindungsgemäßen Schichtverbunds ist der mindestens eine anionische Farbstoff in der eingefärbten Klebstoffschicht C ausgewählt aus der Gruppe bestehend aus

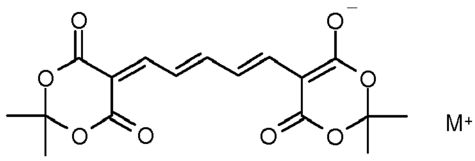

(2-c),

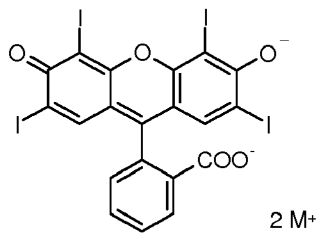

(5-g),

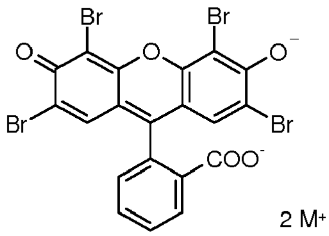

(5-h),

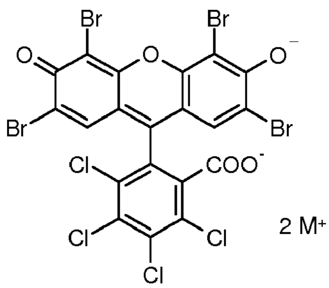

(5-i)

und

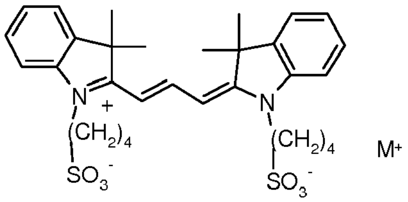

(11-b)

oder einer Mischung von mindestens zweien hiervon, wobei $M^+$ in den Formeln 2-c, 5-a, 5-g, 5-h, 5-i, 11-b, 16-a und 16-b für ein beliebiges Kation steht, vorzugsweise für ein Kation ausgewählt aus der Gruppe bestehend aus Ammonium-Ion, substituiertes Ammonium-Ion und Alkalimetallion oder einer Mischung von mindestens zweien hiervon, besonders bevorzugt ausgewählt aus der Gruppe bestehend aus Ammonium-Ion, Dimethyl(2-hydroxyethyl)ammonium, Bis(2-hydroxyethyl)ammonium, Tris(2-hydroxyethyl)ammonium, Bis(2-hydroxypropyl)ammonium, Tris(2-hydroxyproyl)ammonium, $Li^+$, $Na^+$ oder $K^+$ oder einer Mischung von mindestens zweien hiervon.

In einer weiteren bevorzugten Ausführungsform des erfindungsgemäßen Schichtaufbaus, des erfindungsgemäßen Kit-of-parts und / oder des erfindungsgemäßen Schichtverbunds ist der mindestens eine anionische Farbstoff in der eingefärbten Klebstoffschicht C ausgewählt aus der Gruppe bestehend aus

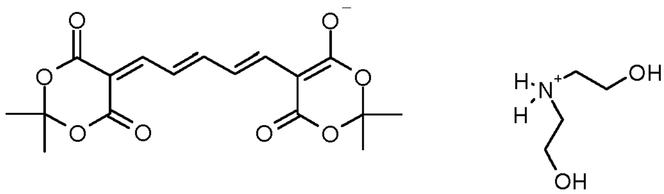

(2-d),

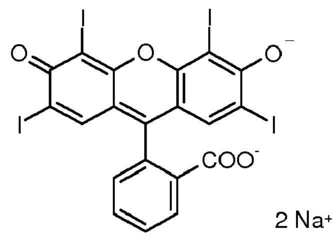

(5-k),

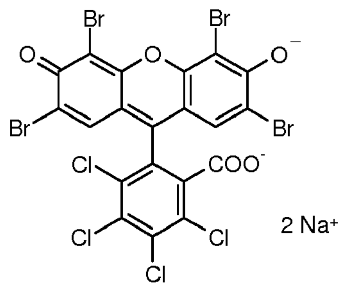

(5-l),

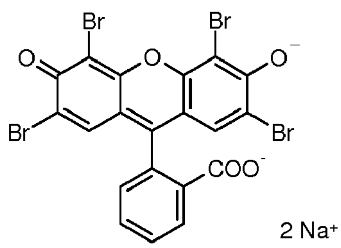

(5-m),

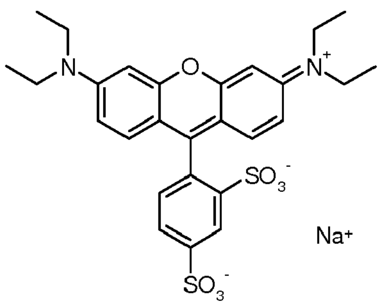

(5-n)

und

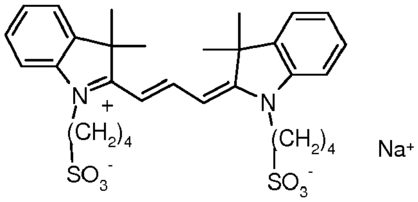

(11-d)

oder einer Mischung von mindestens zweien hiervon.

In einer weiteren bevorzugten Ausführungsform des erfindungsgemäßen Schichtaufbaus, des erfindungsgemäßen Kit-of-parts und / oder des erfindungsgemäßen Schichtverbunds ist der mindestens eine anionische Farbstoff in der eingefärbten Klebstoffschicht C ausgewählt aus der Gruppe bestehend aus

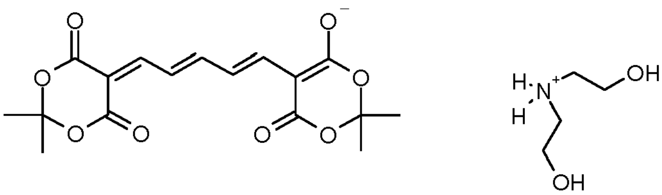

(2-d),

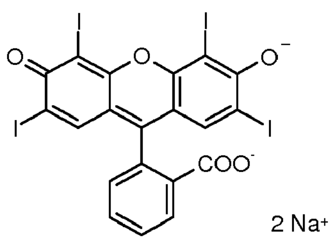

(5-k),

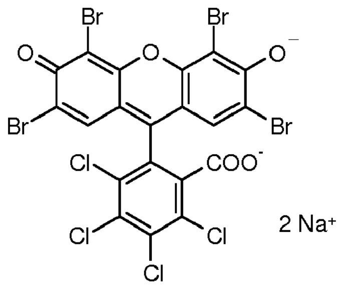

(5-l),

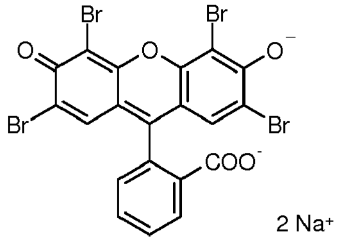

(5-m)

und

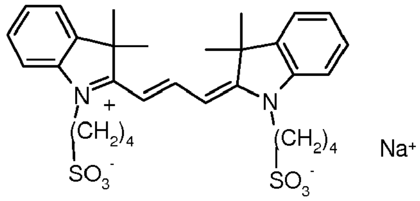

(11-d)

oder einer Mischung von mindestens zweien hiervon.

In einer bevorzugten Ausführungsform des erfindungsgemäßen Schichtaufbaus, des erfindungsgemäßen Kit-of-parts und / oder des erfindungsgemäßen Schichtverbunds beträgt die Gesamtmasse aller Farbstoffe in der eingefärbten Klebstoffschicht C 0.1 - 3.0 Gew.-% bezogen auf die Gesamtmasse der getrockneten Klebstoffschicht C.

In einer weiteren bevorzugten Ausführungsform des erfindungsgemäßen Schichtaufbaus, des erfindungsgemäßen Kit-of-parts und / oder des erfindungsgemäßen Schichtverbunds beträgt die Gesamtmasse aller Farbstoffe in der eingefärbten Klebstoffschicht 0.2 - 2.0 Gew.-% bezogen auf die Gesamtmasse der getrockneten Klebstoffschicht C.

In einer weiteren bevorzugten Ausführungsform des erfindungsgemäßen Schichtaufbaus, des erfindungsgemäßen Kit-of-parts und / oder des erfindungsgemäßen Schichtverbunds beträgt die Gesamtmasse aller Farbstoffe in der eingefärbten Klebstoffschicht 0.2 - 1 Gew.-% bezogen auf die Gesamtmasse der getrockneten Klebstoffschicht C.

In einer bevorzugten Ausführungsform des erfindungsgemäßen Schichtaufbaus, des erfindungsgemäßen Kit-of-parts und / oder des erfindungsgemäßen Schichtverbunds weist der gefärbte Schichtverbund C-D einen Reflektionskoeffizienten für die Prisma-Messung von $R \leq 0.1$ auf, wobei der Reflektionskoeffizient R das Verhältnis der reflektierten Intensität eines TIR (Total Internal Reflection)-Strahls innerhalb eines Prismas mit dem gefärbten Schichtverbund C-D im Vergleich zu demselben Prisma ohne den gefärbten Schichtverbund C-D bei Beleuchtung von einer transparenten Prismaseite aus mit einer der Farbstoff-Absorption angepassten Wellenlänge beschreibt, vorzugsweise ist $R \leq 0.08$ und besonders bevorzugt ist $R \leq 0.07$. Wird beispielsweise die Photopolymerschicht A mit Laserlicht einer Wellenlänge von 532 nm belichtet (beschrieben), dann wird die Klebstoffschicht C mit einem roten Farbstoff eingefärbt, welcher bei der Wellenlänge des verwendeten Laserlichts eine optische Dichte von >2 aufweist. Weitere Anpassungen sind dem Fachmann hinreichend bekannt.

Als Schichtverbund C-D sind generell alle gefärbten Schichten verwendbar, bei denen die optische Dichte >2 ist. Insbesondere sind solche gefärbten Schichten geeignet und bevorzugt bei welchen der Kontrast $K \leq 0.1$, bevorzugt $K \leq 0.08$ und besonders bevorzugt $K \leq 0.05$ beträgt. Der Kontrast K wird berechnet aus störenden Intensitätsvariationen beim Auslesen der Braggkurve eines edge-lit Transmisssions-Hologramms mit einer kohärenten Lichtquelle. Die detaillierte Beschreibung ist unter Messmethoden "Bestimmung des "read-out fringe"-Kontrasts K (K-Wert)" zu finden. Für die Auswahl der Messwellenlänge gelten dieselben Auswahlkriterien wie zu Bestimmung von R.

In einer bevorzugten Ausführungsform des erfindungsgemäßen Schichtaufbaus, des erfindungsgemäßen Kit-of-parts und / oder des erfindungsgemäßen Schichtverbunds ist die Substratschicht D mit einem schwarzen Pigment, einem schwarzen Farbstoff oder einer schwarzen Farbstoffmischung eingefärbt.

In einer bevorzugten Ausführungsform des erfindungsgemäßen Schichtaufbaus, des erfindungsgemäßen Kit-of-parts und / oder des erfindungsgemäßen Schichtverbunds umfasst die Photopolymerschicht A Polyurethanmatrixpolymere, Schreibmonomere und Photoinitiatoren.

Ebenfalls Gegenstand der Erfindung ist ein Verfahren zur Herstellung des erfindungsgemäßen Schichtaufbaus umfassend die Schritte:

- Bereitstellen einer Photopolymerschicht A, wobei die Photopolymerschicht A vorzugsweise auf einer transparenten Substratschicht B vorliegt;
- Bereitstellen eines Schichtverbundes bestehend aus einer gefärbten Substratschicht D und einer flächig mit der

Substratschicht D verbundenen und mit mindestens einem Farbstoff eingefärbten Klebstoffschicht C;

- ggf. Bereitstellen einer transparenten Substratschicht E;
- Zusammenfügen und zumindest teilweises Verbinden der Photopolymerschicht A oder ggf. des Schichtverbunds A-B und ggf. der Substratschicht E mit dem Schichtverbund C-D,

wobei die Schichten in der Reihenfolge A-C-D, A-B-C-D, B-A-C-D, A-E-C-D, A-C-D-E, E-A-CD, B-A-E-C-D, A-B-E-C-D, E-B-A-C-D, E-A-B-C-D, B-A-C-D-E oder A-B-C-D-E unmittelbar aufeinander angeordnet sind.

Ebenfalls Gegenstand der Erfindung ist ein Verfahren zur Herstellung des erfindungsgemäßen Schichtverbunds, dadurch gekennzeichnet, dass in einem Schritt mindestens ein anionischer Farbstoff in einer wässrigen Klebstoff-Dispersion gelöst wird, um eine gefärbte wässrige Klebstoff-Dispersion zu erhalten und in einem darauf folgenden Schritt die gefärbte Klebstoff-Dispersion auf einer gefärbten Substratschicht D aufgetragen und getrocknet wird, um einen Schichtverbund C-D zu erhalten.

In einer bevorzugten Ausführungsform des erfindungsgemäßen Verfahrens zur Herstellung des erfindungsgemäßen Schichtaufbaus ist die wässrige Klebstoff-Dispersion eine verdickte Polyurethan-Polyacrylat Dispersion.

In einer bevorzugten Ausführungsform des erfindungsgemäßen Verfahrens zur Herstellung des erfindungsgemäßen Schichtaufbaus werden die Schichten A, ggf. E und ggf. der Schichtverbund A-B mit dem Schichtverbund C-D durch Lamination verbunden. Vorzugsweise erfolgt die Lamination bei einem Arbeitsdruck von 1-6 bar.

Ebenfalls Gegenstand der Erfindung ist ein Verfahren zur Herstellung eines Hologramms umfassend die folgenden Schritte:

a) Bereitstellen eines erfindungsgemäßen Schichtaufbaus;

b) Erzeugung zumindest eines Hologramms in der Photopolymerschicht A des erfindungsgemäßen Schichtaufbaus;

c) Delaminieren und Entfernen des erfindungsgemäßen Schichtverbundes C-D oder C-D-E und ggf. E aus dem Schichtaufbau.

Ebenfalls Gegenstand der Erfindung ist belichteter Schichtaufbau enthaltend ein Hologramm, vorzugsweise ein Volumenhologramm, erhältlich durch das erfindungsgemäße Verfahren zur Herstellung eines Hologramms.

Ein erfindungswesentlicher Bestandteil der erfindungsgemäßen Schichtaufbauten ist der Schichtverbund C-D. Die gefärbte Klebstoffschicht C kann die gleiche oder einen andere Farbe wie die gefärbte Substratschicht D aufweisen. Vorzugsweise sind die Klebstoffschicht C und / oder die Substratschicht D so eingefärbt, dass deren maximale Absorption mit der zum Einschreiben des Hologramms verwendeten Laserwellenlänge zusammenfällt oder von dieser um nicht mehr als 30 nm, vorzugsweise 20 nm, besonders bevorzugt 15 nm abweicht. Bevorzugt sind Laserwellenlängen von 355 nm, 457 nm, 460 nm, 473 nm, 480 nm, 532 nm, 633 nm, 635 nm, 670 nm, 780 nm, 850 nm und / oder 1064 nm. Noch bevorzugter sind Laserwellenlängen von 457 nm, 473 nm, 532 nm, 633 nm, 670 nm und / oder 780 nm.

Beispiele für geeignete Schichtverbünde C-D sind Klebebänder mit gefärbter Substratschicht D und gefärbter Klebstoffschicht C, mit der Maßgabe, dass die Substratschicht D und die Klebstoffschicht C nicht beide schwarz sind. Als gefärbte Substratschicht D für Klebstoffbänder eignen sich die nachfolgend für Substratschicht D angegebenen Materialen, sofern diese eingefärbt sind, beispielsweise durch Pigmentierung geschwärzt wurden. Bevorzugt ist es, wenn die Substratschicht D eine Schichtdicke von 23 $\mu$m bis 175 $\mu$m besitzt, besonders bevorzugt 36 $\mu$m bis 80 $\mu$m.

Die Herstellung des erfindungsgemäßen Schichtverbunds C-D aus einer gefärbten Klebstoffschicht C und einer gefärbten Substratschicht D erfolgt durch gängige, dem Fachmann bekannte Beschichtungs- oder Druckverfahren, wie insbesondere Rakeln, Gießen, Schlitzdüse, Drucken, Siebdruck, Spritzen, oder Inkjet-Druck. Bevorzugt sind Kastenrakel, Spiralrakel, Siebdruck und Spritzen. Ganz besonders bevorzugt wird die gefärbte Klebstoffschicht C durch Gießen aufgetragen. Weiterhin ist es dabei bevorzugt, die Formulierung der Schicht C vorher durch geeignete Filter zu filtrieren und somit Partikel abzutrennen.

Die Erzeugung des erfindungsgemäßen Schichtverbundes aus Photopolymerschicht A und ggf. einer Substratschicht B sowie der gefärbten Klebstoffschicht C auf der gefärbten Substratschicht D erfolgt bevorzugt durch Lamination. In einer bevorzugten Ausführungsform wir ein Schichtverbund A-B und ein Schichtverbund C-D separat hergestellt und in einem darauf folgenden Schritt durch Lamination miteinander verbunden um einen Schichtaufbau A-B-C-D oder B-A-C-D zu ergeben. Der Schichtverbund A-B ist beispielsweise durch Auftragung einer Photopolymer-Formulierung auf eine Substratschicht B zugänglich. Zur Lamination sind im Prinzip alle Formen von Laminatoren ausgehend von einer Handrolle bis hin zu Laminationsmaschinen geeignet wie Sie dem Fachmann bekannt sind. Bevorzugt werden Rollen- und/oder Flachbettlaminatoren eingesetzt. Besonders bevorzugt werden Flachbettlaminatoren eingesetzt, insbesondere bevorzugt sind solche mit Druckwalze unter einem Arbeitsdruck zwischen 1 und 6 bar.

Der Schichtverbund A-B weist bevorzugt eine Schichtdicke von 1 $\mu$m bis 100 $\mu$m, besonders bevorzugt von 2 $\mu$m bis 30 $\mu$m, ganz besonders bevorzugt von 5 $\mu$m bis 25 $\mu$m auf.

Der erfindungsgemäße Schichtaufbau sollte partikel- und störstellenfrei hergestellt werden. Es ist daher von besonderem Vorteil, wenn alle Arbeitsschritte unter staubfreier, gereinigter Luft oder im Reinraum durchgeführt werden.

Photopolymerschicht A

In der Photopolymerschicht A können ein oder mehrere Hologramme an derselben Stelle oder nebeneinander einbelichtet werden/sein. Belichtet man an derselben Stelle ein, so können unterschiedliche Bildinhalte einbelichtet werden. Ebenfalls können auch verschiedene Ansichten eines Objektes mit leicht variierenden Rekonstruktionswinkeln einbelichtet werden, so dass Stereogramme entstehen. Ebenfalls ist es möglich versteckte Hologramme und Mikrotexte einzubelichten. Gleichermaßen ist es im Falle von Transmissionshologrammen möglich mehrere lichtleitende Funktionen und/ oder lichtleitende Funktionen für verschiedene spektrale Bereiche einzubelichten.

Die Photopolymerschicht A umfasst Matrixpolymere, Schreibmonomere und Photoinitiatoren. Als Matrixpolymere können amorphe Thermoplaste wie z.B. Polyacrylate, Polymethylmethacrylate oder Copolymere von Methylmethacrylat, Methacrylsäure oder andere Alkylacrylate und Alkylmethacrylate sowie Acrylsäure, wie z.B. Polybutylacrylat, weiterhin Polyvinylacetat und Polyvinylburyrat seine partiell hydrolysierten Derivate wie Polyvinylalkohole sowie Copolymerisate mit Ethylen und/oder weiteren (Meth)acrylaten, Gelatine, Celluloseester und Celluloseether wie Methylcellulose, Celluloseacetobutyrat, Silikone, wie z.B. Polydimethylsilicon, Polyurethane, Polybutadiene und Polyisoprene, sowie Polyethylenoxide,

Epoxyharze, insbesondere aliphatische Epoxyharze, Polyamide, Polycarbonate sowie die in US 4994347A und darin zitierten Systeme verwendet werden.

Epoxyharze können kationisch mit sich selbst vernetzt werden. Weiterhin können auch Säure/anhydride, Amine, Hydoxyalkylamide sowie Thiole als Vernetzer eingesetzt werden. Silicone können sowohl als Einkomponentensysteme durch Kondensation bei Anwesenheit von Wasser (und ggf. unter Broenstedtsäurenkatalyse) oder als zweikomponentige Systeme durch Zugabe von Kieselsäureester oder zinnorganische Verbindungen vernetzt werden. Ebenso ist die Hydrosilylierungen in Vinyl-Silansystemen möglich.

Ungesättigte Verbindungen, wie z.B. Acryloyl funktionelle Polymere oder ungesättigte Ester können mit Aminen oder Thiolen vernetzt werden. Eine kationische Vinyletherpolymerisation ist auch möglich.

Insbesondere bevorzugt ist aber, wenn die Matrixpolymere vernetzt, bevorzugt dreidimensional vernetzt und ganz besonders bevorzugt dreidimensional vernetzte Polyurethane sind.

Polyurethan-Matrixpolymere sind insbesondere durch Umsetzung wenigstens einer Polyisocyanat-Komponente a) mit wenigstens einer Isocyanat-reaktiven-Komponente b) erhältlich.

Die Polyisocyanat-Komponente a) umfasst wenigstens eine organische Verbindung mit wenigstens zwei NCO-Gruppen. Bei diesen organischen Verbindungen kann es sich insbesondere um monomere Di- und Triisocyanate, Polyisocyanate und / oder NCO-funktionelle Prepolymere handeln. Die Polyisocyanat-Komponente a) kann auch Mischungen monomerer Di- und Triisocyanate, Polyisocyanate und / oder NCO-funktioneller Prepolymere enthalten oder daraus bestehen.

Als monomere Di- und Triisocyanate können alle dem Fachmann an sich gut bekannten Verbindungen oder deren Mischungen eingesetzt werden. Diese Verbindungen können aromatische, araliphatische, aliphatische oder cycloaliphatische Strukturen aufweisen. In untergeordneten Mengen können die monomeren Di- und Triisocyanate auch Monoisocyanate, d.h. organische Verbindungen mit einer NCO-Gruppe umfassen.

Beispiele für geeignete monomere Di- und Triisocyanate sind 1,4-Butandiisocyanat, 1,5-Pentandiisocyanat, 1,6-Hexandiisocyanat (Hexamethylendiisocyanat, HDI), 2,2,4-Trimethylhexamethylendiisocyanat und / oder 2,4,4-Trimethylhexamethylendiisocyanat (TMDI), Isophorondiisocyanat (IPDI), 1,8-Diisocyanato-4-(isocyanatomethyl)-octan, Bis-(4,4'-isocyanatocyclohexyl)-methan und / oder Bis-(2,4isocyanatocyclohexyl)methan und /oder deren Mischungen beliebigen Isomerengehalts, 1,4-Cyclohexandiisocyanat, die isomeren Bis-(isocyanatomethyl)cyclohexane, 2,4- und / oder 2,6-Diisocyanato-1-methylcyclohexan, (Hexahydro-2,4- und / oder 2,6-toluylendiisocyanat, H6-TDI), 1,4-Phenylendiisocyanat, 2,4- und / oder 2,6-Toluylendiisocyanat (TDI), 1,5-Naphthylendiisocyanat (NDI), 2,4'-und / oder 4,4'-Diphenylmethandiisocyanat (MDI), 1,3-Bis(isocyanatomethyl)benzol (XDI) und / oder das analoge 1,4-Isomere oder beliebige Mischungen der vorgenannten Verbindungen.

Geeignete Polyisocyanate sind Verbindungen mit Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen, die aus den vorgenannten Di- oder Triisocyanaten erhältlich sind.

Besonders bevorzugt handelt es sich bei den Polyisocyanaten um oligomerisierte aliphatische und / oder cycloaliphatische Di- oder Triisocyanate, wobei insbesondere die oben stehenden aliphatischen und / oder cycloaliphatischen Di- oder Triisocyanate verwendet werden können.

Ganz besonders bevorzugt sind Polyisocyanate mit Isocyanurat-, Uretdion- und / oder Iminooxadiazindion-Strukturen sowie Biurete basierend auf HDI oder deren Mischungen.

Geeignete Prepolymere enthalten Urethan- und / oder Harnstoff-Gruppen sowie gegebenenfalls weitere durch Modifizierung von NCO-Gruppen entstandene Strukturen wie oben genannt. Derartige Prepolymere sind beispielsweise durch Umsetzung der oben genannten monomeren Di- und Triisocyanate und/oder Polyisocyanaten a1) mit isocyanatreaktiven Verbindungen b1) erhältlich.

Als isocyanatreaktive Verbindungen b1) können Alkohole, Amino oder Mercapto-Verbindungen, bevorzugt Alkohole, verwendet werden. Dabei kann es sich insbesondere um Polyole handeln. Ganz besonders bevorzugt können als isocyanatreaktive Verbindung b1) Polyester-, Polyether-, Polycarbonat-, Poly(meth)acrylat- und/oder Polyurethan-Polyole verwendet werden.

Als Polyesterpolyole sind beispielsweise lineare Polyesterdiole oder verzweigte Polyesterpolyole geeignet, die in bekannter Weise durch Umsetzung von aliphatischen, cycloaliphatischen oder aromatischen Di- bzw. Polycarbonsäuren bzw. ihren Anhydriden mit mehrwertigen Alkoholen einer OH-Funktionalität ≥ 2 erhalten werden können. Beispiele für geeignete Di- bzw. Polycarbonsäuren sind mehrwertige Carbonsäuren wie Bernstein-, Adipin-, Kork-, Sebacin-, Decandicarbon-, Phthal-, Terephthal-, Isophthal- Tetrahydrophthal- oder Trimellithsäure sowie Säureanhydride wie Phthal-, Trimellith- oder Bernsteinsäureanhydrid oder deren beliebige Gemische untereinander. Die Polyesterpolyole können auch auf natürlichen Rohstoffen wie Rizinusöl basieren. Es ist ebenfalls möglich, dass die Polyesterpolyole auf Homo- oder Mischpolymerisaten von Lactonen basieren, die bevorzugt durch Anlagerung von Lactonen bzw. Lactongemischen wie Butyrolacton, ε-Caprolacton und / oder Methyl-ε-caprolacton an hydroxyfunktionelle Verbindungen wie mehrwertige Alkohole einer OH-Funktionalität ≥ 2 beispielsweise der nachstehend genannten Art erhalten werden können.

Beispiele für geeignete Alkohole sind alle mehrwertigen Alkohole wie z.B. die $C_2$ - $C_{12}$-Diole, die isomeren Cyclohexandiole, Glycerin oder deren beliebige Gemische untereinander.

Geeignete Polycarbonatpolyole sind in an sich bekannter Weise durch Umsetzung von organischen Carbonaten oder Phosgen mit Diolen oder Diol-Mischungen zugänglich.

Geeignete organische Carbonate sind Dimethyl-, Diethyl- und Diphenylcarbonat.

Geeignete Diole bzw. Mischungen umfassen die an sich im Rahmen der Polyestersegmente genannten mehrwertigen Alkohole einer OH-Funktionalität ≥ 2, bevorzugt Butandiol-1,4, Hexandiol-1,6 und / oder 3-Methylpentandiol. Auch Polyesterpolyole können zu Polycarbonatpolyolen umgearbeitet werden.

Geeignete Polyetherpolyole sind gegebenenfalls blockweise aufgebaute Polyadditionsprodukte cyclischer Ether an OH- oder NH-funktionelle Startermoleküle.

Geeignete cyclische Ether sind beispielsweise Styroloxide, Ethylenoxid, Propylenoxid, Tetrahydrofuran, Butylenoxid, Epichlorhydrin sowie ihre beliebigen Mischungen.

Als Starter können die an sich im Rahmen der Polyesterpolyole genannten mehrwertigen Alkohole einer OH-Funktionalität ≥ 2 sowie primäre oder sekundäre Amine und Aminoalkohole verwendet werden.

Bevorzugte Polyetherpolyole sind solche der vorgenannten Art ausschließlich basierend auf Propylenoxid oder statistische oder Block-Copolymere basierend auf Propylenoxid mit weiteren 1-Alkylenoxiden. Besonders bevorzugt sind Propylenoxid-homopolymere sowie statistische oder Block-Copolymere, die Oxyethylen-, Oxypropylen- und / oder Oxybutyleneinheiten aufweisen, wobei der Anteil der Oxypropyleneinheiten bezogen auf die Gesamtmenge aller Oxyethylen-, Oxypropylen- und Oxybutyleneinheiten mindestens 20 Gew.-%, bevorzugt mindestens 45 Gew.-% ausmacht. Oxypropylen- und Oxybutylen umfasst hierbei alle jeweiligen linearen und verzweigten $C_3$- und $C_4$-Isomere.

Daneben sind als Bestandteile der Polyol-Komponente b1) als polyfunktionelle, isocyanatreaktive Verbindungen auch niedermolekulare, d.h. mit Molekulargewichten ≤ 500 g/mol, kurzkettige, d.h. 2 bis 20 Kohlenstoffatome enthaltende aliphatische, araliphatische oder cycloaliphatische di-, tri- oder polyfunktionelle Alkohole geeignet.

Dies können beispielsweise in Ergänzung zu den oben genannten Verbindungen Neopentylglykol, 2-Ethyl-2-butylpropandiol, Trimethylpentandiol, stellungs-isomere Diethyloctandiole, Cyclohexandiol, 1,4-Cyclohexandimethanol, 1,6-Hexandiol, 1,2- und 1,4-Cyclohexandiol, hydriertes Bisphenol A, 2,2-Bis(4-hydroxy-cyclohexyl)-propan oder 2,2-Dimethyl-3-hydroxypropionsäure, 2,2-dimethyl-3-hydroxypropyl-ester sein. Beispiele geeigneter Triole sind Trimethylolethan, Trimethylolpropan oder Glycerin. Geeignete höherfunktionelle Alkohole sind Di-(trimethylolpropan), Pentaerythrit, Dipenta-erythrit oder Sorbit.

Besonders bevorzugt ist, wenn die Polyolkomponente ein difunktioneller Polyether-, Polyester oder ein Polyether-polyester-block-copolyester oder ein Polyether-Polyester-Blockcopolymer mit primären OH-Funktionen ist.

Es ist ebenfalls möglich, als isocyanatreaktive Verbindungen b1) Amine einzusetzen. Beispiele geeigneter Amine sind Ethylendiamin, Propylendiamin, Diaminocyclohexan, 4,4'-Dicylohexylmethandiamin, Isophorondiamin (IPDA), difunktionelle Polyamine wie z.B. die Jeffamine®, aminterminierte Polymere, insbesondere mit zahlenmittleren Molmassen ≤ 10.000 g/Mol. Mischungen der vorgenannten Amine können ebenfalls verwendet werden.

Es ist ebenfalls möglich, als isocyanatreaktive Verbindungen b1) Aminoalkohole einzusetzen. Beispiele geeigneter Aminoalkohole sind die isomeren Aminoethanole, die isomere Aminopropanole die isomeren Aminobutanole und die isomeren Aminohexanole oder deren beliebige Mischungen.

Alle vorgenannten isocyanatreaktiven Verbindungen b1) können untereinander beliebig vermischt werden.

Bevorzugt ist auch, wenn die isocyanatreaktiven Verbindungen b1) eine zahlenmittlere Molmasse von ≥ 200 und ≤ 10.000 g/Mol, weiter bevorzugt ≥ 500 und ≤ 8.000 g/Mol und ganz besonders bevorzugt ≥ 800 und ≤ 5.000 g/Mol aufweisen. Die OH-Funktionalität der Polyole beträgt bevorzugt 1.5 bis 6,0, besonders bevorzugt 1.8 bis 4.0.

Die Prepolymere der Polyisocyanat-Komponente a) können insbesondere einen Restgehalt an freiem monomeren Di- und Triisocyanaten < 1 Gew.-%, besonders bevorzugt < 0.5 Gew.-% und ganz besonders bevorzugt < 0.3 Gew.-% aufweisen.

Es ist gegebenenfalls auch möglich, dass die Polyisocyanat-Komponente a) vollständig oder anteilsmäßig organische Verbindung enthält, deren NCO-Gruppen ganz oder teilweise mit aus der Beschichtungstechnologie bekannten Blockierungsmitteln umgesetzt sind. Beispiel für Blockierungsmittel sind Alkohole, Lactame, Oxime, Malonester, Pyrazole sowie Amine, wie z.B. Butanonoxim, Diisopropylamin, Malonsäurediethylester, Acetessigester, 3,5-Dimethylpyrazol, ε-Caprolactam, oder deren Mischungen.

Besonders bevorzugt ist, wenn die Polyisocyanat-Komponente a) Verbindungen mit aliphatisch gebundenen NCO-Gruppen umfasst, wobei unter aliphatisch gebundenen NCO-Gruppen derartige Gruppen verstanden werden, die an ein primäres C-Atom gebunden sind. Die isocyanatreaktive Komponente b) umfasst bevorzugt wenigstens eine organische Verbindung, die im Mittel wenigstens 1.5 und bevorzugt 2 bis 3 isocyanatreaktive Gruppen aufweist. Im Rahmen der vorliegenden Erfindung werden als isocyanatreaktive Gruppen bevorzugt Hydroxy-, Amino- oder MercaptoGruppen angesehen.

Die isocyanatreaktive Komponente kann insbesondere Verbindungen umfassen, die im Zahlenmittel wenigstens 1.5 und bevorzugt 2 bis 3 isocyanatreaktive Gruppen aufweisen.

Geeignete polyfunktionelle, isocyanatreaktive Verbindungen der Komponente b) sind beispielsweise die oben beschriebenen Verbindungen b1).

Erfindungsgemäß geeignete Photoinitiatoren sind üblicherweise durch aktinische Strahlung aktivierbare Verbindungen, die eine Polymerisation der Schreibmonomere auslösen können. Bei den Photoinitiatoren kann zwischen unimolekularen (Typ I) und bimolekularen (Typ II) Initiatoren unterschieden werden. Des Weiteren werden sie je nach ihrer chemischen Natur in Photoinitiatoren für radikalische, anionische, kationische oder gemischte Art der Polymerisation unterschieden.

Typ I-Photoinitiatoren (Norrish-Typ-I) für die radikalische Photopolymerisation bilden beim Bestrahlen durch eine unimolekulare Bindungsspaltung freie Radikale. Beispiele für Typ I-Photoinitiatoren sind Triazine, Oxime, Benzoinether, Benzilketale, Bis-imidazole, Aroylphosphinoxide, Sulfonium- und Iodoniumsalze.

Typ II-Photoinitiatoren (Norrish-Typ-II) für die radikalische Polymerisation bestehen aus einem Farbstoff als Sensibilisator und einem Coinitiator und durchlaufen bei der Bestrahlung mit auf den Farbstoff angepasstem Licht eine bimolekulare Reaktion. Zunächst absorbiert der Farbstoff ein Photon und überträgt aus einem angeregten Zustand Energie auf den Coinitiator. Dieser setzt durch Elektronen- oder Protonentransfer oder direkte Wasserstoffabstraktion die polymerisationsauslösenden Radikale frei.

Im Sinne dieser Erfindung werden bevorzugt Typ II-Photoinitiatoren verwendet.

Farbstoff und Coinitiator der Typ II-Photoinitiatoren können entweder unmittelbar gemeinsam mit den weiteren Komponenten des Photopolymers vermischt werden oder aber auch jeweils mit Einzelkomponenten vorvermischt werden. Insbesondere wenn das Photopolymer Polyurethan-Matrixpolymere enthalten soll, kann der Farbstoff mit der Isocyanat-reaktiven Komponente und der Coinitiator mit der Isocyanat-Komponente vorvermischt werden. Ebenso ist es aber auch möglich den Coinitiator mit der Isocyanat-reaktiven Komponente und den Farbstoff mit der Isocyanat-Komponente vorher zu vermischen.

Solche Photoinitiatorsysteme sind prinzipiell in der EP 0 223 587 A beschriebenen und bestehen bevorzugt aus einer Mischung von einem oder mehreren Farbstoffen mit Ammoniumalkylarylborat(en).

Geeignete Farbstoffe, die zusammen mit einem Ammoniumalkylarylborat einen Typ II-Photoinitiator bilden, sind die in der WO 2012062655 beschriebenen kationischen Farbstoffe in Kombination mit den eben dort beschriebenen Anionen.

Geeignete Ammoniumalkylarylborate sind beispielsweise (Cunningham et al., RadTech'98 North America UV/EB Conference Proceedings, Chicago, Apr. 19-22, 1998): Tetrabutylammonium Triphenylhexylborat, Tetrabutylammonium Triphenylbutylborat, Tetrabutylammonium Trinapthylhexylborat, Tetrabutylammonium Tris(4-tert.butyl)-phenylbutylborat, Tetrabutylammonium Tris-(3-fluorphenyl)-hexylborat hexylborat ([191726-69-9], CGI 7460, Produkt der BASF SE, Basel, Schweiz), 1-Methyl-3-octylimidazolium Dipentyldiphenylborat und Tetrabutylammonium Tris-(3-chlor-4-methylphenyl)-hexylborat ([1147315-11-4], CGI 909, Produkt der BASF SE, Basel, Schweiz).

Es kann vorteilhaft sein, Gemische dieser Photoinitiatoren einzusetzen. Je nach verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Ganz besonders bevorzugt ist, wenn der Photoinitiator eine Kombination von Farbstoffen, deren Absorptionsspektren zumindest teilweise den Spektralbereich von 350 nm bis 1200 nm abdecken, mit wenigstens einem auf die Farbstoffe abgestimmten Coinitiator umfasst.

Bevorzugt ist auch, wenn wenigstens ein für die Laserlichtwellenlänge von 350 nm - 1200 nm geeigneter Photoinitiator in der Photopolymer-Formulierung enthalten ist.

Weiter bevorzugt ist auch, wenn die Photopolymer-Formulierung für wenigstens zwei Laserlichtwellenlängen

ausgewählt aus dem Bereich von 350 nm - 1200 nm je einen geeigneten Photoinitiator enthält.

Ganz besonders bevorzugt ist schließlich, wenn die Photopolymer-Formulierung für jede der Laserlichtwellenlängen im Bereich von 350 nm - 1200 nm jeweils einen geeigneten Photoinitiator enthält.

Insbesondere bevorzugt ist der spektrale Bereich von 400 nm - 800 nm für die Laserlichtwellenlänge.

Herausragend bevorzugt ist der spektrale Bereich von 450 nm - 700 nm für die Laserlichtwellenlänge.

Bei einer weiteren bevorzugten Ausführungsform ist vorgesehen, dass die Schreibmonomere ein mono- und / oder ein multifunktionelles (Meth)acrylat-Schreibmonomere umfassen. Ganz besonders bevorzugt können die Schreibmonomere zusätzlich wenigstens ein mono- und / oder ein multifunktionelles Urethan(meth)acrylat umfassen.

Geeignete Acrylat-Schreibmonomere sind insbesondere Verbindungen der allgemeinen Formel (I)

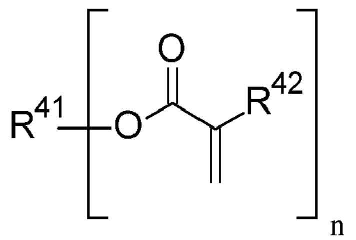

(I)

bei denen n≥1 und n≤4 ist und $R^{41}$ ein linearer, verzweigter, cyclischer oder heterocyclischer unsubstituierter oder gegebenenfalls auch mit Heteroatomen substituierter organischer Rest und/oder $R^{42}$ Wasserstoff, ein linearer, verzweigter, cyclischer oder heterocyclischer unsubstituierter oder gegebenenfalls auch mit Heteroatomen substituierter organischer Rest ist. Besonders bevorzugt ist $R^{42}$ Wasserstoff oder Methyl und/oder $R^{41}$ ein linearer, verzweigter, cyclischer oder heterocyclischer unsubstituierter oder gegebenenfalls auch mit Heteroatomen substituierter organischer Rest.

Als Acrylate bzw. Methacrylate werden vorliegend Ester der Acrylsäure bzw. Methacrylsäure bezeichnet. Beispiele bevorzugt verwendbarer Acrylate und Methacrylate sind Phenylacrylat, Phenylmethacrylat, Phenoxyethylacrylat, Phenoxyethylmethacrylat, Phenoxyethoxyethylacrylat, Phenoxyethoxyethylmethacrylat, Phenylthioethylacrylat, Phenylthioethylmethacrylat, 2-Naphthylacrylat, 2-Naphthylmethacrylat, 1,4-Bis-(2-thionaphthyl)-2-butylacrylat, 1,4-Bis-(2-thionaphthyl)-2-butylmethacrylat, Bisphenol A Diacrylat, Bisphenol A Dimethacrylat, sowie deren ethoxylierte Analogverbindungen, N-Carbazolylacrylate.

Als Urethanacrylate werden vorliegend Verbindungen mit mindestens einer Acrylsäureestergruppe und mindestens eine Urethanbindung verstanden. Solche Verbindungen können beispielsweise durch Umsetzung eines Hydroxy-funktionellen Acrylats oder Methacrylats mit einer Isocyanatfunktionellen Verbindung erhalten werden.

Beispiele hierfür verwendbarer Isocyanat-funktionelle Verbindungen sind Monoisocyanate sowie die unter a) genannten monomeren Diisocyanate, Triisocyanate und / oder Polyisocyanate. Beispiele geeigneter Monoisocyanate sind Phenylisocyanat, die isomeren Methylthiophenylisocyanate. Di-, Tri- oder Polyisocyanate sind oben genannt sowie Triphenylmethan-4,4',4"-triisocyanat und Tris-(p-isocyanatophenyl)thiophosphat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind dabei aromatische Di-, Tri- oder Polyisocyanate.

Als hydroxyfunktionelle Acrylate oder Methacrylate für die Herstellung von Urethanacrylaten kommen beispielsweise Verbindungen wie 2-Hydroxyethyl(meth)acrylat, Polyethylenoxid-mono-(meth)acrylate, Polypropylenoxidmono(meth)acrylate, Polyalkylenoxidmono(meth)-acrylate, Poly-(ε-caprolacton)mono(meth)acrylate, wie z.B. Tone® M100 (Dow, Schwalbach, DE), 2-Hydroxypropyl(meth)acrylat, 4-Hydroxybutyl(meth)acrylat, 3-Hydroxy-2,2-dimethylpropyl-(meth)acrylat, Hydroxypropyl(meth)acrylat, Acrylsäure-(2-hydroxy-3-phenoxypropylester), die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Bevorzugt sind 2-Hydroxyethylacrylat, Hydroxypropylacrylat, 4-Hydroxybutylacrylat und Poly(ε-caprolacton)mono-(meth)acrylat.

Ebenfalls verwendet werden können die an sich bekannten hydroxylgruppenhaltigen Epoxy(meth)-acrylate mit OH-Gehalten von 20 bis 300 mg KOH/g oder hydroxylgruppenhaltige Polyurethan-(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten.

Bevorzugt sind insbesondere Urethanacrylate erhältlich aus der Umsetzung von Tris(p-isocyanatophenyl)thiophosphat und / oder m-Methylthiophenylisocyanat mit alkoholfunktionellen Acrylaten wie Hydroxyethyl(meth)acrylat, Hydroxypropyl(meth)acrylat und / oder Hydroxybutyl(meth)-acrylat.

Ebenso ist es möglich, dass das Schreibmonomer weitere ungesättigte Verbindungen wie α,β-ungesättigte Carbonsäurederivate wie beispielsweise Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, α-Methylstyrol, Vinyltoluol und / oder Olefine, umfasst.

Gemäß einer weiteren bevorzugten Ausführungsform ist vorgesehen, dass die Photopolymer-Formulierung zusätzlich monomere Urethane als Additive enthält, wobei die Urethane insbesondere mit wenigstens einem Fluoratom substituiert sein können.

Bevorzugt können die Urethane die allgemeine Formel (II)

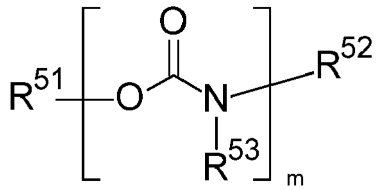

(II)

haben, in der m≥1 und m≤8 ist und $R^{51}$, $R^{52}$ und $R^{53}$ lineare, verzweigte, cyclische oder heterocyclische unsubstituierte oder gegebenenfalls auch mit Heteroatomen substituierte organische Reste und/oder $R^{52}$, $R^{53}$ unabhängig voneinander Wasserstoff sind, wobei bevorzugt mindestens einer der Reste $R^{51}$, $R^{52}$, $R^{53}$ mit wenigstens einem Fluoratom substituiert ist und besonders bevorzugt $R^{51}$ ein organischer Rest mit mindestens einem Fluoratom ist. Besonders bevorzugt ist $R^{52}$ ein linearer, verzweigter, cyclischer oder heterocyclischer unsubstituierter oder gegebenenfalls auch mit Heteroatomen wie beispielsweise Fluor substituierter organischer Rest.

Gemäß einer weiteren bevorzugten Ausführungsform der Erfindung ist vorgesehen, dass das Photopolymer 10 bis 89.999 Gew.-%, bevorzugt 20 bis 70 Gew.-% Matrixpolymere, 3 bis 60 Gew.-%, bevorzugt 10 bis 50 Gew.-% Schreibmonomere, 0.001 bis 5 Gew.-%, bevorzugt 0.5 bis 3 Gew.-% Photoinitiatoren und gegebenenfalls 0 bis 4 Gew.-%, bevorzugt 0 bis 2 Gew.-% Katalysatoren, 0 bis 5 Gew.-% , bevorzugt 0.001 bis 1 Gew.-% Stabilisatoren, 0 bis 40 Gew.-%, bevorzugt 10 bis 30 Gew.-% monomere Fluorurethane und 0 bis 5 Gew.-%, bevorzugt 0.1 bis 5 Gew.-% weitere Additive enthält, wobei die Summe aller Bestandteile 100 Gew.-% beträgt.

Besonders bevorzugt werden Photopolymer mit 20 bis 70 Gew.-% Matrixpolymeren, 20 bis 50 Gew.-% Schreibmonomere, 0.001 bis 5 Gew.-% Photoinitiatoren, 0 bis 2 Gew.-% Katalysatoren, 0.001 bis 1 Gew.-% Radikalstabilisatoren gegebenenfalls 10 bis 30 Gew.-% Fluorurethane und gegebenenfalls 0.1 bis 5 Gew.-% weiterer Additive eingesetzt.

Als Katalysatoren können Urethanisierungskatalysatoren, wie z.B. organische oder anorganischen Derivate des Bimuths, des Zinns, des Zinks oder des Eisens (siehe dazu auch die in der US 2012/062658 genannten Verbindungen) verwendet werden. Besonders bevorzugte Katalysatoren sind Butylzinn-tris(2-ethylhexanoat), Eisen(III) - trisacetylacetonat, Bismuth(III)tris(2-ethylhexanoat), und Zinn(II) bis(2-ethylhexanoat). Weiterhin können auch sterisch gehinderte Amine als Katalysatoren eingesetzt werden.

Als Stabilisatoren können Radikalinhibitoren wie HALS-Amine, N-Alkyl-HALS, N-Alkoxy-HALS- und N-Alkoxyethyl-HALS-Verbindungen sowie Antioxidantien und / oder UV Absorber zum Einsatz kommen.

Als weitere Additive können Verlaufshilfsmittel und / oder Antistatika und / oder Thixotropiermittel und / oder Verdicker und / oder Biozide eingesetzt werden.

Substratschicht B

Die Substratschicht B ist eine transparente Substratschicht/Substratfolie oder ein transparenter Träger wie beispielsweise Glas, vorzugsweise ausgewählt aus Folien auf Basis von Polycarbonat (PC), Polyethylenterephthalat (PET), Polybutylenterephthalat (PBT), Celluloseacetat, Cellulosehydrat, Cellulosenitrat, Polystyrol, Polyepoxide, Polysulfon, Cellulosetriacetat (CTA), Polyamid, Polymethylmethacrylat, Polyvinylchlorid, Polyvinylbutyral, sowie deren Mischungen und/ oder Laminaten. Besonders bevorzugt sind Folien auf Basis von Polycarbonat, Polyethylenterephthalat, Polyamid, Cellulosetriacetat sowie deren Mischungen und/ oder Laminaten. Bei Cellulosetriacetat-Folien sind markgängige Typen mit integriertem UV Schutz bevorzugt, da diese in der Regel zusätzlich ein vorteilhaftes Eigenschaften-Profil bei der Lagerung unter feucht-warmen Bedingungen liefern. Bevorzugte Laminate sind Duplex- und Triplexfolien aufgebaut nach einem der Schemata A/B, A/B/A oder A/B/C. Besonders bevorzugt sind PC/PET, PET/PC/PET und PC/TPU (TPU = Thermoplastisches Polyurethan). Vorzugsweise ist die Substratschicht B im spektralen Bereich von 350-1200 nm, vorzugsweise im Bereich von 400-800 nm transparent.

Klebstoffschicht C

Die erfindungsgemäße Klebstoffschicht C kann aus vielerlei Bindemittelsystemen aufgebaut werden. Typischerweise können wässrige oder lösungsmittel-haltige Bindemittelsysteme verwendet werden. Diese Bindemittelsysteme können dabei aus einer, zwei oder mehreren Einzelkomponenten erhalten werden. Grundsätzlich geeignete Bindemittelsysteme sind z.B. in Kittel, Lehrbuch der Lacke und Beschichtungen, Bd. 2 "Bindemittel für lösemittelhaltige und lösemittelfreie Systeme", Bd. 2 "Bindemittel für wasserverdünnbare Systeme", S. Hirzel Verlag, Stuttgart/Leipzig sowie in Ulrich Meier-Westhues, "Polyurethane", Vincentz Network GmbH Verlag beschrieben.

Bevorzugt wird die erfindungsgemäße Klebstoffschicht C aus Polymerdispersionen aufgebaut.

Besonders bevorzugt wird die erfindungsgemäße Klebstoffschicht C aus wässrigen Polymerdispersionen aufgebaut, die ein wasser-dispergierbares Polyurethan und ein Vinylpolymer enthalten.

Die Dispergierung des Polyurethans in dem wässrigen System wird dadurch erreicht, dass entweder äußere Tenside verwendet werden oder dass geeignete ionische oder nichtionische Gruppen in das Polyurethan eingearbeitet werden, um dieses selbst-dispergierbar zu machen. So beschreibt beispielsweise die US-PS 4 066 591 wässrige Dispersionen, die dadurch erhalten werden, dass ein isocyanat-terminiertes Polyurethan-Prepolymer, das anionische Gruppen enthält, in einem wässrigen Medium dispergiert wird und hierauf das dispergierte Prepolymer mit geeigneten Kettenverlängerer umgesetzt wird.

Es ist auch bekannt, die Eigenschaften von Polyurethandispersionen durch den Einschluss von Vinylpolymeren zu modifizieren. Verschiedene Patente, wie z.B. US 3.705.164, 4.198.330 und 4.318.833 beschreiben Verfahren, bei denen das Vinylpolymer *in situ* dadurch gebildet wird, dass ein oder mehrere Vinylmonomere in Gegenwart einer wässrigen Dispersion eines Polyurethans, das anionische Salzgruppen enthält, polymerisiert werden. In einigen Fällen wird das Polyurethan-Prepolymer in Gegenwart eines organischen Lösungsmittels gebildet oder anschließend damit verdünnt, was die Viskosität des Prepolymers herabsetzt und/oder seine Dispergierung in Wasser erleichtert. Das Lösungsmittel kann dann aus der Dispersion durch Destillation entfernt werden oder es kann in der Dispersion verbleiben.

Typischerweise enthalten derartig erhältliche tensidfreie wässrige Polymerdispersionen anionische wasserdispergierbare Polyurethane und Vinylpolymer in einem Gewichtsverhältnis von 10:90 bis 90:10.

Bevorzugte tensidfreie wässrige Polymerdispersionen enthalten anionische wasser-dispergierbare Polyurethane und Vinylpolymer in einem Gewichtsverhältnis von 20:80 bis 80:20.

Das anionische, wasser-dispergierbare, isocyanat-terminierte Polyurethan ist ein Polyurethan-Prepolymer mit sauren Resten, welche die Wasserdispergierbarkeit vermitteln. Solche Prepolymere und Verfahren zu ihrer Herstellung sind in der technischen Literatur ausführlich beschrieben.

Polyurethan-Prepolymere mit sauren Zentren sind z.B. isocyanat-terminierte Reaktionsprodukte aus i) einem organischen Polyisocyanat, ii) einem polymeren Polyol mit einem Molekulargewicht von 500 bis 6000, iii) einer isocyanatreaktiven Verbindung mit mindestens einer Säuregruppe und mindestens zwei Gruppen, die gegenüber Isocyanaten reaktiver sind als die Säuregruppe, und gegebenenfalls und iv) einem niedermolekularen Polyol mit einem Molekulargewicht unter 500.

Das bei der Herstellung des Prepolymers verwendete Polyisocyanat kann ein aliphatisches, cycloaliphatisches, araliphatisches oder aromatisches Polyisocyanat sein. Beispiele für geeignete Polyisocyanate sind Ethylendiisocyanat, 1,6-Hexamethylendiisocyanat, Isophorondiisocyanat, Cyclohexan-1,4-diisocyanat, 4,4'-Dicyclohexylmethandiisocyanat, p-Xylylendiisocyanat, 1,4-Phenylendiisocyanat, 2,4-Toluoldiisocyanat, 2, 6-Toluoldiisocyanat, 4,4'-Diphenylmethandiisocyanat, 2,4'-Diphenylmethandiisocyanat, Polymethylenpolyphenylpolyisocyanate und 1,5-Naphthylendiisocyanat. Gemische von Polyisocyanaten können ebenfalls verwendet werden. Das gleiche gilt für Polyisocyanate, die durch die Einführung von Urethan-, Allophanat-, Harnstoff-, Biuret-, Carbodiimid-, Uretonimin- oder Isocyanuratresten modifiziert worden sind.

Polymere Polyole mit Molekulargewichten im Bereich von 500 bis 6.000, die bei der Herstellung des Prepolymers verwendet werden können, sind insbesondere Diole und Triole und Gemische derselben, aber es können auch Polyole mit höherer Funktionalität verwendet werden, beispielsweise als untergeordnete Bestandteile in Mischung mit Diolen. Die Polyole können Mitglieder von irgendwelchen der chemischen Klassen von polymeren Polyolen sein, die in Polyurethanformulierungen verwendet oder für solche vorgeschlagen worden sind. Insbesondere können die Polyole Polyester, Polyesteramide, Polyether, Polythioether, Polycarbonate, Polyacetale, Polyolefine oder Polysiloxane sein. Bevorzugte Molekulargewichte für die Polyole sind 700 bis 3.000.

Polyesterpolyole, die verwendet werden können, sind z.B. hydroxylabgeschlossene Reaktionsprodukte von mehrwertigen Alkoholen, wie z.B. Ethylenglycol, Propylenglycol, Diethylenglycol, Neopentylglycol, 1,4-Butandiol, Furandimethanol, Cyclohexandimethanol, Glycerin, Trimethylolpropan oder Pentaerythrit oder Gemische davon, mit Polycarbonsäuren, insbesondere Dicarbonsäuren, oder deren esterbildenden Derivaten, wie z.B. Bernstein-, Glutar- und Adipinsäure oder deren Methylester, Phthalsäureanhydrid oder Dimethylterphthalat. Polyester, die durch Polymerisation von Lactonen, wie z.B. Caprolacton, gemeinsam mit einem Polyol erhalten werden, können ebenfalls verwendet werden. Polyesteramide können durch den Einschluss von Aminoalkoholen, wie z.B. Ethanolamin, in die der Polyveresterung unterliegenden Gemische erhalten werden. Polyetherpolyole, die verwendet werden können, sind z.B. Produkte, die dadurch erhalten werden, dass man ein cyclisches Oxid, wie z.B. Ethylenoxid, Propylenoxid und Tetrahydrofuran, polymerisiert, oder dass man ein oder mehrere solche Oxide zu polyfunktionellen Initiatoren, wie z.B. Wasser, Ethylenglycol, Propylenglycol, Diethylenglycol, Cyclohexandimethanol, Glycerin, Trimethylolpropan, Pentaerythrit oder Bisphenol-A,

zugibt. Beispiele für geeignete Polyether sind z.B. Polyoxypropylendiole und -triole, Poly(oxyethylen-oxypropylen) diole und -triole, die durch gleichzeitige oder aufeinanderfolgende Zugabe von Ethylen- und Propylenoxid zu entsprechenden Initiatoren erhalten werden, und Polytetramethylenetherglycole, die durch Polymerisation von Tetrahydrofuran erhalten werden.

Polythioetherpolyole, die verwendet werden können, sind z.B. Produkte, die dadurch erhalten werden, dass man Thiodiglycol entweder alleine oder mit anderen Glycolen, Dicarbonsäuren, Formaldehyd, Aminoalkoholen oder Aminocarbonsäuren kondensiert.

Polycarbonatpolyole, die verwendet werden können, sind z.B. Produkte, die dadurch erhalten werden, dass man Diole, wie z.B. 1,3-Propandiol, 1,4-Butandiol, 1,6-Hexandiol, Diethylenglycol oder Tetraethylenglycol, mit Diarylcarbonaten, wie z.B. Diphenylcarbonat, oder mit Phosgen umsetzt.

Polyacetalpolyole, die verwendet werden können, sind z.B. solche, die hergestellt werden durch Umsetzung von Glycolen, wie z.B. Diethylenglycol, Triethylenglycol oder Hexandiol, mit Formaldehyd. Geeignete Polyacetale können auch durch Polymerisation von cyclischen Acetalen hergestellt werden.

Geeignete Polyolefinpolyole sind z.B. hydroxyabgeschlossene Butadienhomo und -copolymere.

Polyole mit Molekulargewichten unter 500, die gegebenenfalls bei der Herstellung der Prepolymere verwendet werden können, sind z.B. insbesondere Diole und Triole und Gemische derselben, aber es können auch höherfunktionelle Polyole verwendet werden. Beispiele für solche niedermolekulare Polyole sind Ethylenglycol, Diethylenglycol, Tetraethylenglycol, Bis(hydroxyethyl)-terephthalat, Cyclohexandimethanol, Furandimethanol, Glycerin und die Reaktionsprodukte mit einem Molekulargewicht bis hinauf zu 499 von solchen Polyolen mit Propylenoxid und/oder Ethylenoxid.

Isocyanatreaktive Verbindungen, die Säuregruppen enthalten und die bei der Herstellung von Prepolymeren mit sauren Zentren verwendet werden können, sind Carboxygruppen enthaltende Diole und Triole. Brauchbare Materialien sind z.B. die Fumaratpolyetherglycole, weitere brauchbare saure Gruppen enthaltende Verbindungen sind Aminocarbonsäuren, wie z.B. Lysin, Cystin und 3,5-Diaminobenzoesäure, und Sulfonsäuren, wie z.B. 4,6- Diaminobenzol-1,3-disulfonsäure.

Das anionische, wasserdispergierbare, isocyanat-terminierte Polyurethan-Prepolymer kann in üblicher Weise hergestellt werden durch Umsetzung eines stöchiometrischen Überschusses des organischen Polyisocyanats mit dem ein Molekulargewicht im Bereich von 500 bis 6.000 aufweisenden polymeren Polyol und den anderen erforderlichen isocyanatreaktiven Verbindungen unter im wesentlichen wasserfreien Bedingungen bei einer Temperatur zwischen ungefähr 30 und ungefähr 130 °C, bis die Reaktion zwischen den Isocyanatgruppen und den Hydroxylgruppen im Wesentlichen zu Ende ist. Das Polyisocyanat und die aktiven Wasserstoff enthaltenden Komponenten werden in geeigneter Weise in solchen Verhältnissen umgesetzt, dass das Verhältnis der Anzahl der Isocyanatgruppen zur Anzahl der Hydroxylgruppen im Bereich von ungefähr 1.1:1 bis ungefähr 6:1, vorzugsweise im Bereich von 1.5:1 bis 3:1, liegt. Gegebenenfalls können Katalysatoren, wie z.B. Dibutylzinndilaurat und Zinn(II)-octoat, verwendet werden, um die Prepolymerbildung zu unterstützen.

Die Lösung des wasserdispergierbaren Polyurethan-Prepolymers im Vinylmonomer kann dadurch hergestellt werden, dass man ein oder mehrere Vinylmonomere zum Prepolymer zugibt, oder dadurch, was bevorzugt wird, dass man das Prepolymer in Gegenwart eines oder mehrerer Vinylmonomere herstellt.

Geeignete Vinylmonomere, in denen das Prepolymer gelöst werden kann, enthalten eine oder mehrere polymerisierbare ethylenisch ungesättigte Gruppen. Bevorzugte Monomere sind unter den Temperaturbedingungen der Prepolymerbildung flüssig, obwohl die Möglichkeit der Verwendung von festen Monomeren gemeinsam mit organischen Lösungsmitteln nicht ausgeschlossen ist. Es wird auch bevorzugt, Monomere zu verwenden, die keine Isocyanatgruppen oder mit Isocyanat reaktive Gruppen enthalten.

Somit sind beispielsweise geeignete Monomere ethylenisch ungesättigte Kohlenwasserstoffe, Ester und Ether, insbesondere Ester von Acrylsäure und Methacrylsäure, Ester und Ether von Vinylalkohol und Styrol. Spezielle Beispiele hierfür sind Butadien, Isopren, Styrol, substituierte Styrole, die ($C_1$-$C_6$)-Niederalkylester von Acryl-, Methacryl- und Maleinsäure, Vinylacetat, -butyrat, -acrylat und -methacrylat, Acrylonitril, Allylmethacrylat, Vinyl-methyl, -propyl- und -butyl-ether, Divinylether, Divinylsulfid, Vinylchlorid, Vinylidenchlorid, Hexandioldiacrylat, Trimethylolpropantriacrylat und dergleichen. Freie Säuren sollten nicht verwendet werden, da sie die Dispersion destabilisieren können.

Die Prepolymer/Vinylmonomer-Lösung kann in Wasser unter Verwendung an sich bekannter Techniken dispergiert werden. Vorzugsweise wird die Lösung unter Rühren dem Wasser hinzugefügt. Es kann aber auch alternativ Wasser in die Lösung eingerührt werden.

Der aktiven Wasserstoff enthaltende Kettenverlängerer, der mit dem Prepolymer umgesetzt wird, ist in geeigneter Weise ein Polyol, ein Aminoalkohol, Ammoniak, ein primäres oder sekundäres aliphatisches, alicyclisches, aromatisches, araliphatisches oder heterocyclisches Amin, insbesondere ein Diamin, Hydrazin oder substituiertes Hydrazin. Wasserlösliche Kettenverlängerer werden bevorzugt. Wasser selbst kann ebenfalls brauchbar sein.

Beispiele für geeignete Kettenverlängerer, die hier verwendet werden können, sind Ethylendiamin, Diethylentriamin, Triethylentetramin, Propylendiamin, Butylendiamin, Hexamethylendiamin, Cyclohexylendiamin, Piperazin, 2-Methylpiperazin, Phenylendiamin, Tolylendiamin, Xylylendiamin, Tris(2-aminoethyl)amin, 3,3'-Dinitrobenzidin, 4,4'-Methylen- bis(2-chloroanilin), 3,3'-Dichloro-4,4'-biphenyl-diamin, 2,6- Diaminopyridin, 4,4'-Diamino-diphenylmethan, Methandiamin, m-Xyloldiamin, Isophorondiamin und Addukte von Diethylentriamin mit Acrylat oder hydrolysierte Produkte davon. Hierher gehören auch Materialien wie Hydrazin, Azine, z.B. Acetonazin, substituierte Hydrazine, z.B. Dimethylhydrazin, 1,6-Hexamethylen-bis-hydrazin, Carbodihydrazin, Hydrazide von Dicarbonsäuren und Sulfonsäuren, z.B. Adipinsäure-mono- oder -di-hydrazid, Oxalsäuredihydrazid, Isophthalsäuredihydrazid, Weinsäuredihydrazid, 1,3-Phenylendisulfonsäuredihydrazid, omega-Amino-capronsäuredihydrazid, Hydrazide, die durch Umsetzung von Lactonen mit Hydrazin erhalten werden, wie z.B. gamma-Hydroxylbuttersäurehydrazid, Bis-semi-carbazid, Bis- hydrazidkohlensäureester von Glycolen, wie z.B. beliebige der oben erwähnten Glycole.

Wenn der Kettenverlängerer aus etwas anderem als Wasser besteht, beispielsweise aus einem Diamin oder Hydrazin, dann kann er der wässrigen Dispersion des Prepolymers und Vinylmonomers zugegeben werden, oder er kann auch alternativ in dem wässrigen Medium anwesend sein, wenn das Prepolymer und das Monomer darin dispergiert werden.

Die Kettenverlängerung kann bei einer erhöhten, erniedrigten oder bei Raumtemperatur ausgeführt werden. Zweckmäßige Temperaturen sind beispielsweise von ungefähr 5 bis 95 °C oder mehr, insbesondere von ungefähr 10 bis ungefähr 45°C.

Die verwendete Menge Kettenverlängerer sollte annähernd den freien NCO-Gruppen in Prepolymer-Äquivalent sein, wobei das Verhältnis von aktiven Wasserstoffen in Kettenverlängerer zu NCO-Gruppen in Prepolymer vorzugsweise im Bereich von 0.7 bis 2.00:1 liegt. Wenn Wasser als Kettenverlängerer verwendet wird, dann sind natürlich die Verhältnisse nicht anwendbar, da Wasser sowohl als Kettenverlängerer als auch als Dispergiermedium wirkt und in einem großen Überschuss im Verhältnis zu den freien NCO-Gruppen vorliegen wird.

Die Umwandlung von beliebiger Säuregruppen, die in Prepolymer anwesend sind, in anionische Gruppen kann dadurch erreicht werden, dass man die sauren Gruppen vor, nach oder gleichzeitig mit der Bildung der wässrigen Dispersion neutralisiert. Geeignete Neutralisierungsmittel sind z.B. tertiäre Amine, z.B. Triethylamin.

Die Polymerisation des Vinylmonomers oder der Vinylmonomere kann durch eines von zwei Verfahren ausgeführt werden.

Beim ersten Verfahren wird weiteres Monomer (das gleiche oder ein anderes Vinylmonomer oder Vinylmonomergemisch) zugegeben, welches das Polyurethan gegebenenfalls quellen kann. Das Monomer kann dann unter Verwendung eines herkömmlichen radikalischen Initiatorsystems polymerisiert werden. Der Anteil des als Lösungsmittel für das Prepolymer verwendeten Monomers liegt üblicherweise zwischen 1.5 und 95 Gew.-%, vorzugsweise zwischen 2.5 und 80 Gew.-% und insbesondere zwischen 7 und 50 Gew.-%, bezogen auf die gesamten Monomere.

Beim zweiten Verfahren werden die Polymerisation des Vinylmonomerverdünnungsmittels und die Zufuhr des gleichen oder eines anderen Vinylmonomers oder Vinylmonomergemischs bis zur Beendigung fortgesetzt. Der als Lösungsmittel für das Prepolymer verwendete Monomeranteil kann so sein, wie dies beim ersten Verfahren angegeben wurde.

Bei beiden Polymerisationsverfahren können diejenigen Vinylmonomere, die zugegeben und polymerisiert werden, verwendet werden, die oben genannt wurden. Funktionelle Monomere, wie z.B. Hydroxyalkylacrylate und -methacrylate, können ebenfalls zu diesem Zeitpunkt einverleibt werden, da die freien Isocyanatgruppen des Prepolymers mit dem Kettenverlängerer reagiert haben.

Geeignete radikalische Initiatoren sind Gemische, die sich zwischen der wässrigen und der organischen Phase verteilen, wie z.B. eine Kombination aus t-Butylhydroperoxid, Isoascorbinsäure und Fe-EDTA.

Die durch das erfindungsgemäße Verfahren hergestellten wässrigen Polymerdispersionen sind trotz der Abwesenheit von Emulgatoren lange Zeiten stabil. Gegebenenfalls können kleinere Mengen Lösungsmittel in die Dispersionen eingebaut sein.

Geeignete lösliche Farbstoffe für die erfindungsgemäße Klebstoffschicht C sind beispielsweise Oxonol-Farbstoffe, wie sie z. B. aus H. Berneth in Ullmann's Encyclopedia of Industrial Chemistry, Methine Dyes and Pigments, Wiley-VCH Verlag, 2008, bekannt sind. Als Beispiele, die aber nicht einschränken sollen, seien genannt:

Gelbe und orange Oxonol-Farbstoffe:

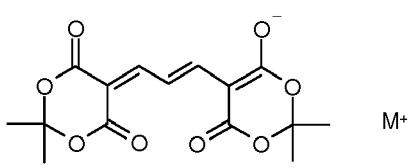

(1-a).

Rote Oxonol-Farbstoffe:

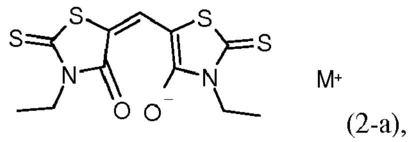

(2-a),

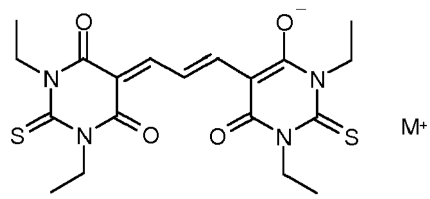

(2-b)

und

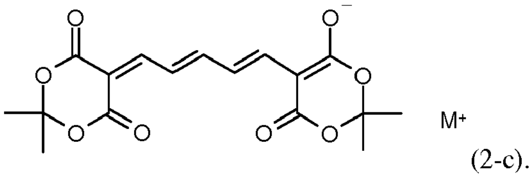

(2-c).

Blaue und blaugrüne Oxonol-Farbstoffe:

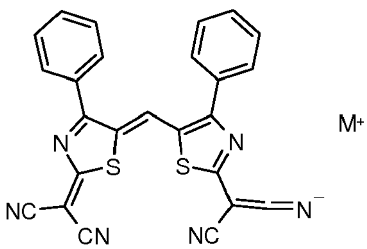

(3-a).

In den Formeln steht $M^+$ für ein beliebiges Kation.

Geeignete lösliche Farbstoffe für die erfindungsgemäße Klebstoffschicht C sind beispielsweise auch anionische Xanthen-Farbstoffe, wie sie z. B. aus T. Gessner, U. Mayer in Ullmann's Encyclopedia of Industrial Chemistry, Triarylmethane and Diarylmethane Dyes, Wiley-VCH Verlag, 2000, bekannt sind. Als Beispiele, die aber nicht einschränken sollen, seien genannt:

Gelbe und orange Xanthen-Farbstoffe:

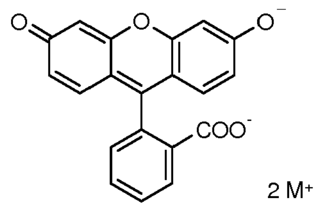

(4-a).

Rote Xanthen-Farbstoffe:

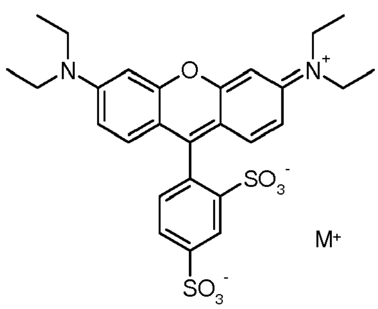

(5-a),

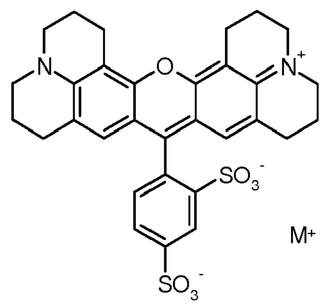

(5-b),

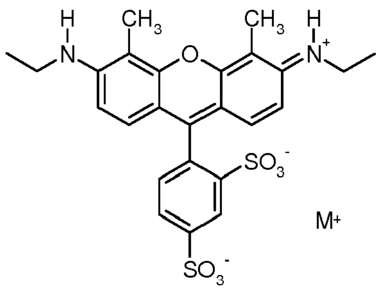

(5-c),

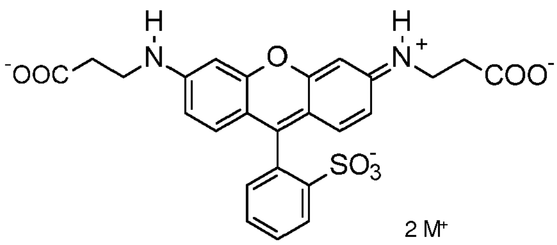

(5-d),

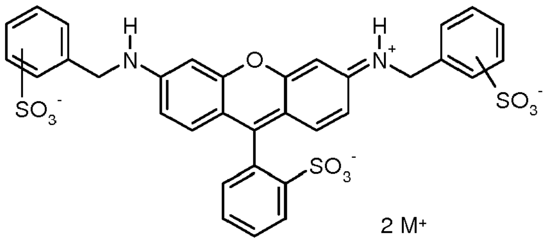

(5-e),

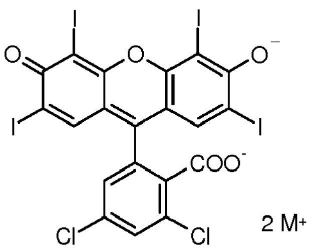 (5-f), 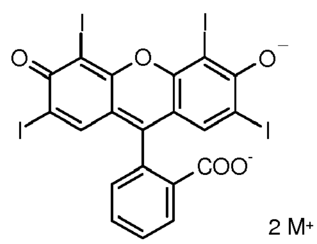 (5-g),

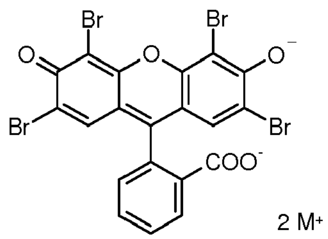 (5-h), 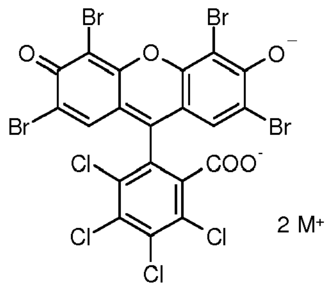 (5-i)

und

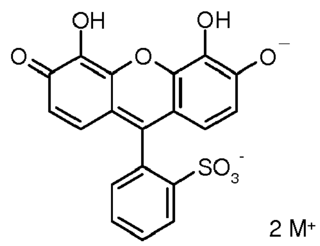 (5-j).

In den Formeln steht $M^+$ für ein beliebiges Kation.

Geeignete lösliche Farbstoffe für die erfindungsgemäße Klebstoffschicht C sind beispielsweise auch anionische Triphenylmethan-Farbstoffe, wie sie z. B. aus T. Gessner, U. Mayer in Ullmann's Encyclopedia of Industrial Chemistry, Triarylmethane and Diarylmethane Dyes, Wiley-VCH Verlag, 2000, bekannt sind. Als Beispiele, die aber nicht einschränken sollen, seien genannt:

Gelbe und orange Triphenylmethan-Farbstoffe:

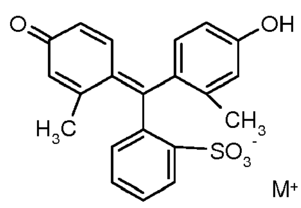 (6-a).

Rote und violette Triphenylmethanfarbstoffe:

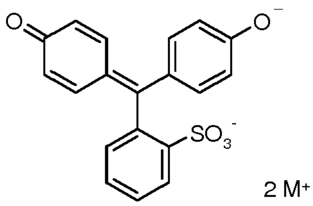

2 M+ (7-a)

und

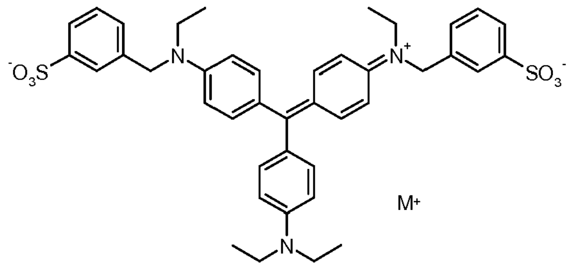

M+

(7-b).

Blaue und blaugrüne Triphenylmethan-Farbstoffe:

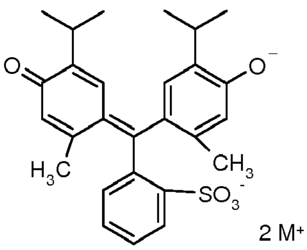

2 M+ (8-a) und

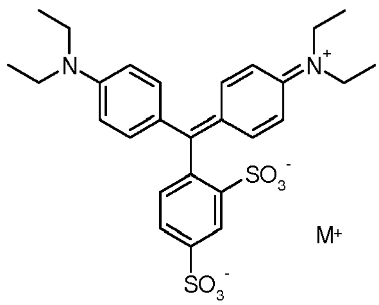

M+

(8-b).

In den Formeln steht $M^+$ für ein beliebiges Kation.

Geeignete lösliche Farbstoffe für die erfindungsgemäße Klebstoffschicht C sind beispielsweise auch anionische Cumarin-Farbstoffe, wie sie z. B. aus H. Berneth in Ullmann's Encyclopedia of Industrial Chemistry, Methine Dyes and Pigments, Wiley-VCH Verlag, 2008, bekannt sind. Als Beispiele, die aber nicht einschränken sollen, seien genannt:

Gelbe und orange Cumarin-Farbstoffe:

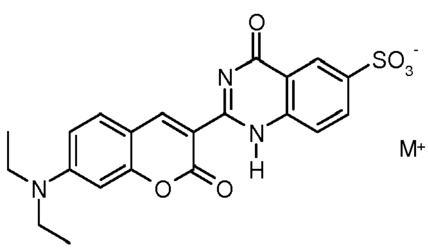

M+

(9-a).

In der Formel steht $M^+$ für ein beliebiges Kation.

Geeignete lösliche Farbstoffe für die erfindungsgemäße Klebstoffschicht C sind beispielsweise auch anionische Methin-Farbstoffe, wie sie z. B. aus H. Berneth in Ullmann's Encyclopedia of Industrial Chemistry, Methine Dyes and Pigments, Wiley-VCH Verlag, 2008, bekannt sind. Als Beispiele, die aber nicht einschränken sollen, seien genannt:

Gelbe und orange Methin-Farbstoffe:

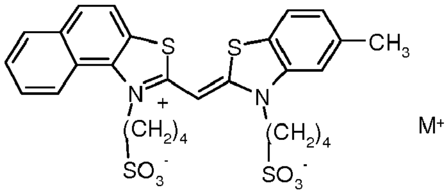

(10-a)

und

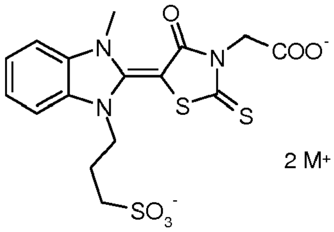

(10-b).

Rote Methin-Farbstoffe:

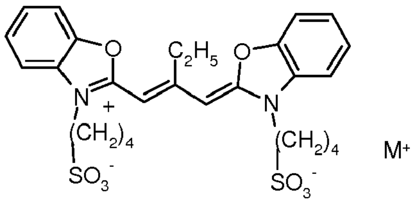

(11-a),

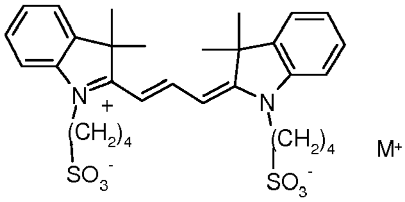

(11-b)

und

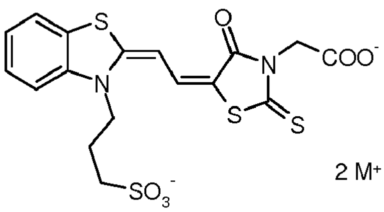

(11-c).

Blaue und blaugrüne Methin-Farbstoffe:

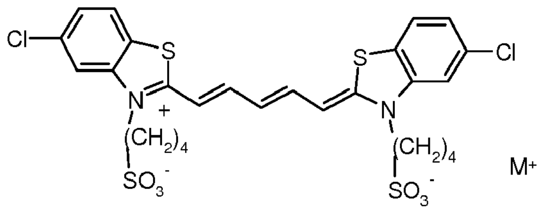

(12-a)

und

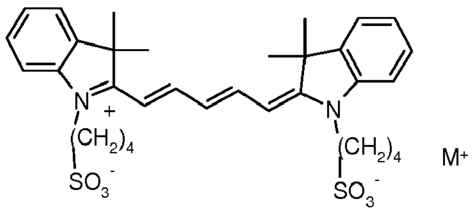

(12-b).

In den Formeln steht $M^+$ für ein beliebiges Kation.

Geeignete lösliche Farbstoffe für die erfindungsgemäße Klebstoffschicht C sind beispielsweise auch anionische Azin-Farbstoffe, wie sie z. B. aus H. Berneth in Ullmann's Encyclopedia of Industrial Chemistry, Azine Dyes, Wiley-VCH Verlag, 2008, bekannt sind. Als Beispiele, die aber nicht einschränken sollen, seien genannt:

Blaue und blaugrüne Azin-Farbstoffe:

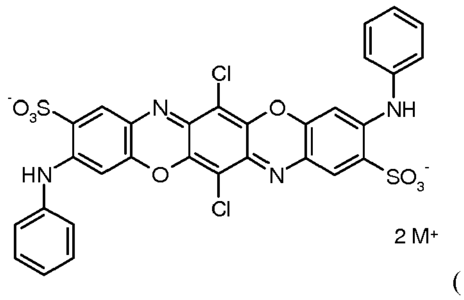

(13-a),

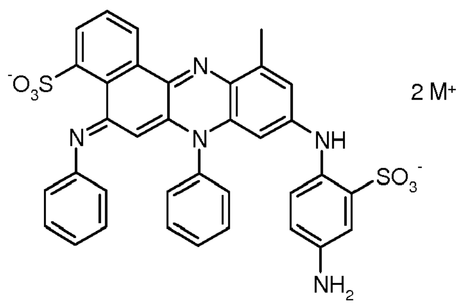

(13-b)

und

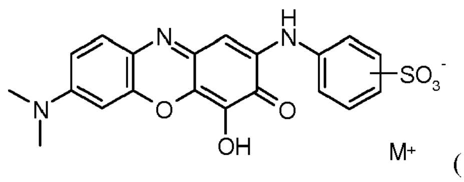

(13-c).

In den Formeln steht $M^+$ für ein beliebiges Kation.

Geeignete lösliche Farbstoffe für die erfindungsgemäße Klebstoffschicht C sind beispielsweise auch anionische Azo-Farbstoffe, wie sie z. B. aus K. Hunger, P. Mischke, W. Rieper, R. Raue, K. Kunde, A. Engel, in Ullmann's Encyclopedia of Industrial Chemistry, Azo Dyes, Wiley-VCH Verlag, 2002, bekannt sind. Als Beispiele, die aber nicht einschränken sollen, seien genannt:

Gelbe und orange Azo-Farbstoffe:

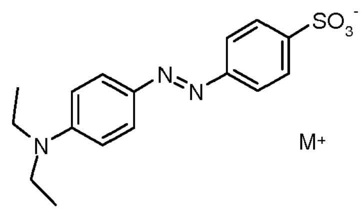

(14-a).

Rote Azo-Farbstoffe:

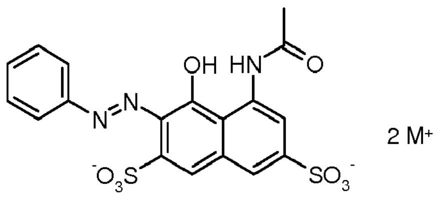

(15-a)

und

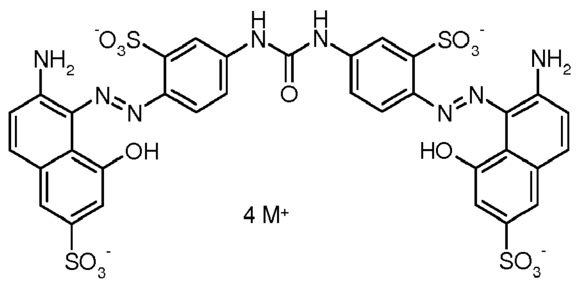

(15-b)

In den Formeln steht $M^+$ für ein beliebiges Kation.

Geeignete lösliche Farbstoffe für die erfindungsgemäße Klebstoffschicht C, die im UV absorbieren, sind beispielsweise auch anionische Stilbenderivate, wie sie beispielsweise aus A. E. Siegrist, C. Eckardt, J. Kaschig und E. Schmidt, in Ullmann's Encyclopedia of Industrial Chemistry, Optical Brighteners, Wiley-VCH Verlag, 2012, bekannt sind. Als Beispiele, die aber nicht einschränken sollen, seien genannt:

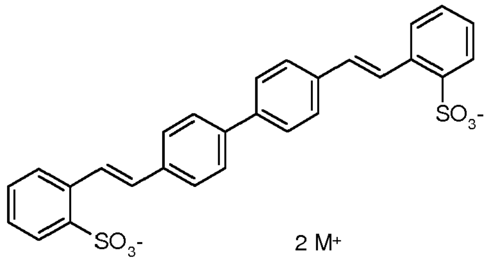

2 M+ (16-a),

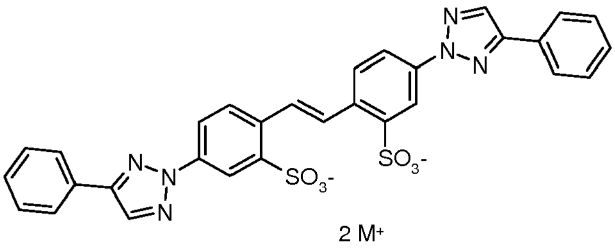

2 M+ (16-b)

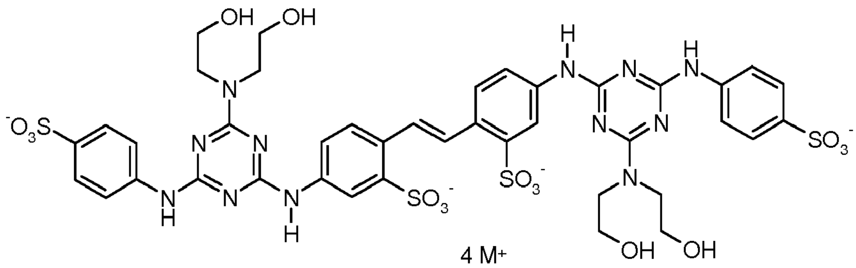

4 M+ (16-c)

und

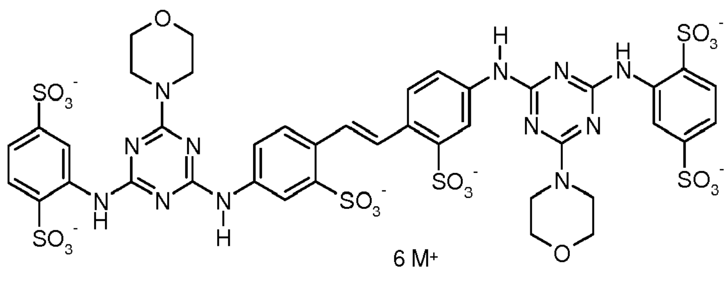

6 M+ (16-d).

In den Formeln steht $M^+$ für ein beliebiges Kation.

Geeignete lösliche Farbstoffe für die erfindungsgemäße Klebstoffschicht C, die im IR absorbieren, sind beispielsweise auch anionische Methinfarbstoffe, wie sie beispielsweise aus H. Berneth in Ullmann's Encyclopedia of Industrial Chemistry, Methine Dyes and Pigments, Wiley-VCH Verlag, 2008, bekannt sind. Als Beispiele, die aber nicht einschränken sollen, seien genannt:

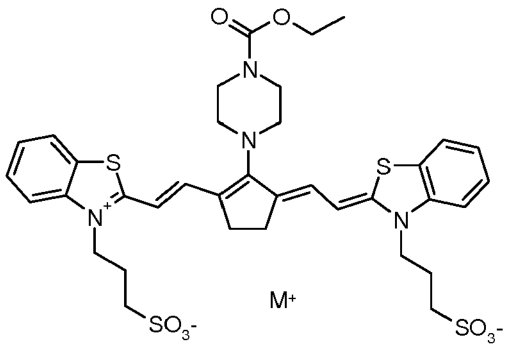

(17-a),

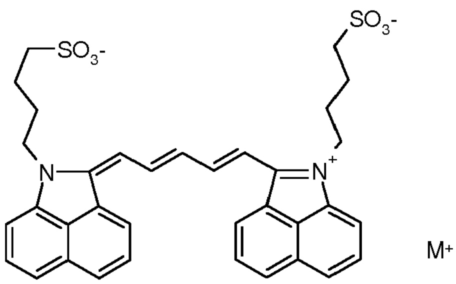

(17-b)

und

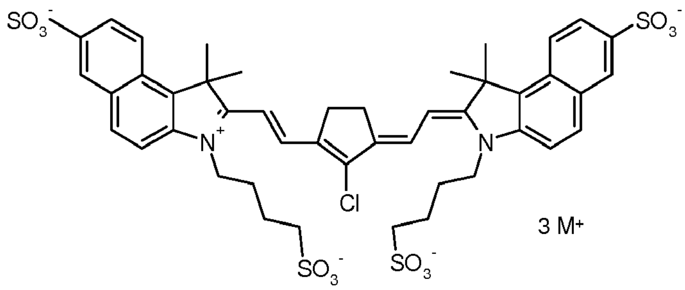

(17-c).

In den Formeln steht $M^+$ für ein beliebiges Kation.

Bevorzugte Kationen für die löslichen Farbstoffe der erfindungsgemäßen Klebstoffschicht C, insbesondere die oben aufgeführten beispielhaften Farbstoffe, sind solche, die eine gute Löslichkeit in der wasserbasierten Rezeptur der erfindungsgemäßen Klebstoffschicht C sicherstellen. Ammonium oder substituiertes Ammonium wie Dimethyl(2-hydroxyethyl)-ammonium, Bis(2-hydroxyethyl)-ammonium, Tris(2-hydroxyethyl)ammonium, Bis(2-hydroxypropyl)-ammonium, Tris(2-hydroxypropyl)-ammonium oder Alkalimetallionen wie $Li^+$, $Na^+$ oder $K^+$ sind bevorzugt.

Diese Farbstoffe können einzeln oder aber als Mischung eingesetzt werden. Sie sind in der erfindungsgemäßen Klebstoffschicht C in einer Gesamtkonzentration von 0.1 bis 3.0 Gew.-%, vorzugsweise 0.2 bis 2.0 Gew.-%, besonders bevorzugt 0.2 bis 1.0 Gew.-% gelöst.

Bevorzugte Farbstoffe sind anionische Farbstoffe, wobei es unwesentlich ist, ob die negative Ladung lokalisiert oder delokalisiert vorliegt. Im ersteren Falle wird sie von einem mit dem eigentlichen chromophoren System nicht konjugativ verbundenen Substituenten getragen, beispielsweise von einer $SO_3^-$- oder $COO^-$-Gruppe. Im zweiten Falle ist sie Bestandteil des farbgebenden chromophoren Systems selbst. Beide Typen können auch in einem Molekül vereint sein. So einen kombinierten Typ findet man beispielsweise bei Xanthen-Farbstoffen.

Bevorzugt sind Stilben-Derivate, Oxonol-Farbstoffe, Xanthen-Farbstoffe, Triphenylmethan-Farbstoffe, Methin-Farbstoffe, Azin-Farbstoffe. Besonders bevorzugt sind Stilben-Derivate, Oxonol-Farbstoffe, Xanthen-Farbstoffe, Triphenylmethan-Farbstoffe, Methin-Farbstoffe. Ganz besonders bevorzugt sind Oxonol-Farbstoffe, Xanthen-Farbstoffe, Methin-Farbstoffe. Herausragend bevorzugt sind Xanthen-Farbstoffe.

Ein ganz besonders gut geeigneter Oxonol-Farbstoff ist der Farbstoff der Formel

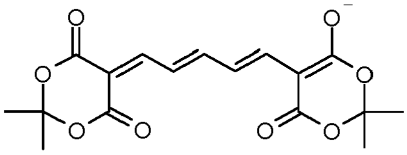

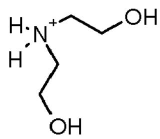

(2-d).

Ein ganz besonders gut geeigneter Xanthen-Farbstoff ist Erythrosin (Acid Red 51) der Formel

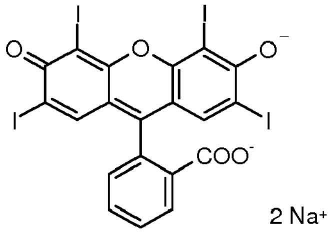

2 Na+ (5-k).

Ebenfalls ein ganz besonders gut geeigneter Xanthen-Farbstoff ist Phloxin B (Acid Red 92) der Formel

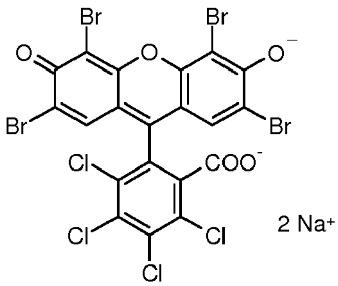

2 Na+ (5-l).

Ebenfalls ein ganz besonders gut geeigneter Xanthen-Farbstoff ist Eosin Y (Eosin G, Acid Red 87) der Formel

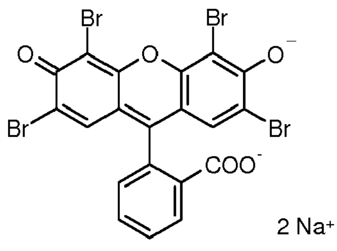

2 Na+ (5-m).

Ebenfalls ein ganz besonders gut geeigneter Xanthen-Farbstoff ist Sulforhodamin B (Acid Red 52) der Formel.

Die erfindungsgemäße Klebstoffschicht C enthält in einer bevorzugten Ausführungsform Erythrosin (Acid Red 51) als Farbstoff bzw. die ist mit diesem Farbstoff eingefärbt.

Ein ganz besonders gut geeigneter Methin-Farbstoff ist der Farbstoff der Formel

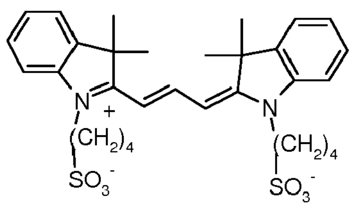

Na+ (11-d).

Der in der erfindungsgemäßen Klebstoffschicht enthaltende Farbstoff bzw. die eingefärbte Klebstoffschicht C ist an die Wellenlänge des Laserlichts angepasst. Vorzugsweise wird der Farbstoff so ausgewählt, dass seine maximale Absorption mit der benutzten Laserwellenlänge zusammenfällt oder von dieser um nicht mehr als 30 nm, vorzugsweise 20 nm, besonders bevorzugt 15 nm abweicht. Bevorzugt sind Laserwellenlängen von 355 nm, 457 nm, 460 nm, 473 nm, 480 nm, 532 nm, 633 nm, 635 nm, 670 nm, 780 nm, 850 nm und / oder 1064 nm. Noch bevorzugter sind Laserwellenlängen von 457 nm, 473 nm, 532 nm, 633 nm, 670 nm und / oder 780 nm.

Die gefärbte Klebstoffschicht C ist vorzugsweise frei von lichtstreuenden Partikeln ist. Dies ist vorteilhaft, weil hierdurch neben der eigentlichen Reflexion sichtbaren Lichts auch die Entstehung von Streustrahlung beim Belichten weitestgehend unterbunden wird, die ebenfalls zu Ungenauigkeiten bei der Belichtung führen könnte.

Substratschicht D

Die Substratschicht D eine gefärbte Substratschicht/Substratfolie. Die Substratschicht D ist vorzugsweise ausgewählt aus Folien auf Basis von Polycarbonat (PC), Polyethylenterephthalat (PET), Polybutylenterephthalat (PBT), Celluloseacetat, Cellulosehydrat, Cellulosenitrat, Polystyrol, Polyepoxide, Polysulfon, Cellulosetriacetat (CTA), Polyamid, Polymethylmethacrylat, Polyvinylchlorid, Polyvinylbutyral, sowie deren Mischungen und/ oder Laminaten. Besonders bevorzugt sind Folien auf Basis von Polycarbonat, Polyethylenterephthalat, Polyamid, Cellulosetriacetat sowie deren Mischungen und/ oder Laminaten. Als Material sind Polycarbonat, Polyethylen, Polypropylen, PET sowie Folien Copolymere aus 1-Olefinen besonders bevorzugt. Bevorzugte Laminate sind Duplex- und Triplexfolien aufgebaut nach einem der Schemata A/B, A/B/A oder A/B/C. Besonders bevorzugt sind PC/PET, PET/PC/PET und PC/TPU (TPU = Thermoplastisches Polyurethan).

Die Substratschicht D ist mit einem Pigment oder einem Farbstoff oder einer Farbstoffmischung eingefärbt. Entsprechende Pigmente, Farbstoffe oder Mischungen können aus den bekannten Sortimenten von Pigmenten und Farbstoffen zum Einfärben von Kunststoffen zusammengestellt werden. Die Substratschicht D kann jede Farbe aufweisen, beispielsweise kann die Substratschicht D rot, gelb, grün, blau oder schwarz sein

In einer bevorzugten Ausführungsform ist die Substratschicht D mit einem schwarzen Pigment oder einem schwarzen Farbstoff oder einer schwarzen Farbstoffmischung eingefärbt. Als schwarzes Pigment wird vorteilhaft Ruß verwendet. Schwarze Farbstoffe oder Mischungen können aus den bekannten Sortimenten von Farbstoffen zum Einfärben von Kunststoffen zusammengestellt werden. Beispielsweise können Produkte aus dem MACROLEX®-Sortiment der Fa. Lanxess Deutschland GmbH verwendet werden. Geeignete schwarze Folien sind im Handel erhältlich, z. B. die PET-Folie HOSTAPHAN® BHO 25 der Fa. Mitsubishi Polyester Film, die eine optische Dichte von > 4.5 aufweist.

Die Substratschicht D ist vorzugsweise frei von lichtstreuenden Partikeln ist. Dies hat den Vorteil, dass neben der eigentlichen Reflexion sichtbaren Lichts auch die Entstehung von Streustrahlung beim Belichten weitestgehend unterbunden wird, die ebenfalls zu Ungenauigkeiten bei der Belichtung führen könnte.

Substratschicht E

Die transparente Substratschicht E ist eine transparente Substratschicht/Substratfolie oder ein transparenter Träger wie beispielsweise Glas, vorzugsweise ausgewählt aus Folien auf Basis von Polycarbonat (PC), Polyethylenterephthalat (PET), Polybutylenterephthalat (PBT), Celluloseacetat, Cellulosehydrat, Cellulosenitrat, Cycloolefinpolymere, Polystyrol, Polyepoxide, Polysulfon, Cellulosetriacetat (CTA), Polyamid, Polymethylmethacrylat, Polyvinylchlorid, Polyvinylbutyral, sowie deren Mischungen und/ oder Laminaten. Besonders bevorzugt sind Folien auf Basis von Polycarbonat, Polyethylenterephthalat, Polyamid, Cellulosetriacetat sowie deren Mischungen und/ oder Laminaten. Bevorzugte Laminate sind Duplex- und Triplexfolien aufgebaut nach einem der Schemata A/B, A/B/A oder A/B/C. Besonders bevorzugt sind PC/PET, PET/PC/PET und PC/TPU (TPU = Thermoplastisches Polyurethan).

Ebenfalls Gegenstand der Erfindung ist die Verwendung des erfindungsgemäßen Schichtaufbaus, des erfindungsgemäßen Kit-of-parts und / oder des erfindungsgemäßen Schichtverbunds zur Herstellung von Hologrammen, insbesondere zur Herstellung von In-Line Hologrammen, Off-Axis Hologrammen, Full-Aperture Transfer Hologrammen, Weißlicht-Transmissionshologrammen, Denisyukhologrammen, Off-Axis Reflektionshologrammen, Edge-Lit Hologrammen sowie holographischen Stereogrammen.

Ebenfalls Gegenstand der Erfindung ist die Verwendung des erfindungsgemäßen Schichtverbunds als Anti-Halo-Schicht bei der Belichtung von holographisch beschreibbaren Photoschichten, vorzugsweise Photopolymerschichten.

Bei der Verwendung von Photopolymeren spielt die durch die holographische Belichtung erzeugte Brechungsindexmodulation $\Delta n$ die entscheidende Rolle. Bei der holographischen Belichtung wird das Interferenzfeld aus Signal- und Referenzlichtstrahl (im einfachsten Fall das zweier ebener Wellen) durch die lokale Photopolymerisation von Schreibmonomeren wie z.B. hochbrechenden Acrylate an Orten hoher Intensität im Interferenzfeld in ein Brechungsindexgitter abgebildet. Das Brechungsindexgitter im Photopolymer (das Hologramm) enthält alle Information des Signallichtstrahls.

Durch Beleuchtung des Hologramms nur mit dem Referenzlichtstrahl kann dann das Signal wieder rekonstruiert werden. Im einfachsten Fall eines Hologramms, das aus der Überlagerung zweier ebener Wellen entsteht, ergibt sich die sogenannte Beugungseffizienz, im Folgenden DE wie Diffraction Efficiency, genannt, aus dem Quotienten der Intensität des bei der Rekonstruktion abgebeugten Lichtes und der Summe der Intensitäten aus nicht gebeugten und abgebeugtem Licht. Je höher die DE ist, desto effizienter ist ein Hologramm in Bezug auf die Lichtmenge des Referenzlichtes, die notwendig ist, um das Signal mit einer vorgegebenen Helligkeit sichtbar zu machen.

Um ein möglichst hohes $\Delta n$ und eine möglichst hohe DE bei Hologrammen realisieren zu können, sollten grundsätzlich die Matrixpolymere und die Schreibmonomere einer Photopolymer-Zusammensetzung so gewählt werden, dass sie sich in ihren Brechungsindizes möglichst stark unterscheiden. Eine Möglichkeit zur Realisierung ist, Matrixpolymere mit einem möglichst niedrigen und Schreibmonomere mit einem möglichst hohen Brechungsindex zu verwenden. Geeignete Matrixpolymere mit niedrigem Brechungsindex sind beispielsweise durch Umsetzung einer Polyolmit einer Polyisocyanat-Komponente erhältliche Polyurethane.

Neben hohen DE- und $\Delta n$- Werten ist es für holographische Medien aus Photopolymer-Zusammensetzungen aber auch von großer Bedeutung, dass die Matrixpolymere im fertigen Medium hoch vernetzt sind. Falls der Vernetzungsgrad zu niedrig ist, weist das Medium keine ausreichende Stabilität auf. Dies kann dazu führen, dass die Qualität von in die Medien eingeschriebenen Hologrammen erheblich vermindert ist. Im schlimmsten Fall können die Hologramme sogar nachträglich zerstört werden.

Ebenfalls Gegenstand der vorliegenden Erfindung ist ein holographisches Medium enthaltend einen erfindungsgemäßen belichteten Schichtaufbau enthaltend ein Hologramm.

In einer Ausführungsform enthält das erfindungsgemäße holographische Medium eine Hologramm enthaltende Photopolymerschicht A mit einer Schichtdicke von 0.3 $\mu$m bis 500 $\mu$m, bevorzugt von 0.5 $\mu$m bis 200 $\mu$m und besonders bevorzugt von 1 $\mu$m bis 100 $\mu$m.

Insbesondere kann das Hologramm ein Reflektions-, Transmissions-, In-Line-, Off-Axis-, Full-Aperture Transfer-, Weißlicht-Transmissions-, Denisyuk-, Off-Axis Reflektions- oder Edge-Lit Hologramm sowie ein holographisches Stereogramm und bevorzugt ein Reflektions-, Transmissions- oder Edge-Lit Hologramm sein. Bevorzugt sind Reflektionshologramme, Denisyukhologramme und / oder Transmissionshologramme.

In der Photopolymerschicht A können ein oder mehrere Hologramme an derselben Stelle oder nebeneinander einbelichtet werden/sein. Belichtet man an derselben Stelle ein, so können unterschiedliche Bildinhalte einbelichtet werden. Ebenfalls können auch verschiedene Ansichten eines Objektes mit leicht variierenden Rekonstruktionswinkeln einbelichtet werden, so dass Stereogramme entstehen. Ebenfalls ist es möglich versteckte Hologramme und Mikrotexte einzubelichten. Gleichermaßen ist es im Falle von Transmissionshologrammen möglich mehrere lichtleitende Funktionen und/ oder lichtleitende Funktionen für verschiedene spektrale Bereiche einzubelichten.

Mögliche optische Funktionen der Hologramme entsprechen den optischen Funktionen von Lichtelementen wie Linsen, Spiegel, Umlenkspiegel, Filter, Streuscheiben, gerichteten Streuelemente, Beugungselemente, Lichtleiter (light guides), Lichtlenker (waveguides), Projektionsscheiben und/oder Masken. Zudem können mehrere derartiger optischer Funktionen in einem solchen Hologramm kombiniert werden, z.B. so dass je nach Lichteinfall das Licht in eine andere Richtung abgebeugt wird. So kann man beispielsweise mit derartigen Aufbauten autostereoskopische oder holographische elektronische Displays bauen, die es erlauben einen stereoskopischen visuellen Eindruck ohne weitere Hilfsmittel wie z.B. einer Polarisator- oder Shutterbrille zu erleben, der Verwendung in automobilen Head-up Displays oder Head-mounted Displays.

Häufig zeigen diese optischen Elemente eine spezifische Frequenzselektivität, je nachdem wie die Hologramme belichtet wurden und welche Dimensionen das Hologramm hat. Dies ist insbesondere wichtig, wenn man monochromatische Lichtquellen wie LED oder Laserlicht verwendet. So benötigt man ein Hologramm pro Komplementärfarbe (RGB), um Licht frequenzselektiv zu lenken und gleichzeitig vollfarbige Displays zu ermöglichen. Daher sind in bestimmten Displayaufbauten mehrere Hologramme ineinander im Medium zu belichten.

Zudem können mittels der erfindungsgemäßen versiegelten holographischen Medien auch holographische Bilder oder Darstellungen, wie zum Beispiel für persönliche Portraits, biometrische Darstellungen in Sicherheitsdokumenten, oder allgemein von Bilder oder Bildstrukturen für Werbung, Sicherheitslabels, Markenschutz, Markenbranding, Etiketten, Designelementen, Dekorationen, Illustrationen, Sammelkarten, Bilder und dergleichen sowie Bilder, die digitale Daten repräsentieren können u.a. auch in Kombination mit den zuvor dargestellten Produkten hergestellt werden. Holographische Bilder können den Eindruck eines dreidimensionalen Bildes haben, sie können aber auch Bildsequenzen, kurze Filme oder eine Anzahl von verschiedenen Objekten darstellen, je nachdem aus welchem Winkel, mit welcher (auch bewegten) Lichtquelle etc. diese beleuchtet wird. Aufgrund dieser vielfältigen Designmöglichkeiten stellen Hologramme, insbesondere Volumenhologramme, eine attraktive technische Lösung für die oben genannten Anwendungen dar. Auch ist es möglich derartige Hologramme zur Speicherung digitaler Daten zu verwenden, wobei verschiedenste Belichtungsverfahren (Shift-, Spatial- oder Angular- Multiplexing) verwendet werden.

Ebenfalls Gegenstand der Erfindung ist eine optische Anzeige, umfassend einen erfindungsgemäßen belichteten Schichtaufbau enthaltend einen Hologramm oder ein erfindungsgemäßes holographisches Medium, wobei die

optische Anzeige vorzugsweise ausgewählt ist aus der Gruppe bestehend aus optischen Bauelementen, autostereoskopischen oder holographischen Displays, Projektionsleinwänden, Projektionsscheiben, Displays mit schaltbarem eingeschränktem Abstrahlverhalten für Privacyfilter und bidirektionalen Multiuserbildschirmen, virtuellen Bildschirmen, Headup-Displays, Head-mounted Displays, Leuchtsymbolen, Warnlampen, Signallampen, Scheinwerfern und Schautafeln.

Beispiele für derartige optische Anzeigen sind bildgebende Anzeigen auf Basis von Flüssigkristallen, organischen lichtemittierenden Dioden (OLED), LED-Displaytafeln, Microelektromechanische Systeme (MEMS) auf Basis von diffraktiver Lichtselektion, Electrowettingdisplays (E-ink) und Plasmabildschirmen. Derartige optische Anzeigen können autostereoskopische und/oder holographische Displays, transmittive und reflektive Projektionsleinwände oder Projektionsscheiben, Displays mit schaltbaren eingeschränkten Abstrahlverhalten für Privacyfilter und bidirektionalen Multiuserbildschirmen, virtuelle Bildschirme, Headup-Displays, Head-mounted Displays, Leuchtsymbole, Warnlampen, Signallampen, Scheinwerfer und Schautafeln sein.

Ebenfalls Gegenstand der Erfindung sind autostereoskopische und/oder holographische Displays, Projektionsleinwände, Projektionsscheiben, Displays mit schaltbaren eingeschränkten Abstrahlverhalten für Privacyfilter und bidirektionalen Multiuserbildschirmen, virtuelle Bildschirme, Headup-Displays, Head-mounted Displays, Leuchtsymbole, Warnlampen, Signallampen, Scheinwerfer und Schautafeln umfassend ein erfindungsgemäßes holographisches Medium.

Noch weitere Gegenstände der Erfindung sind ein Sicherheitsdokument und ein holographisch optisches Element umfassend ein erfindungsgemäßes holographisches Medium oder einen erfindungsgemäßen belichteten Schichtaufbau.

Darüber hinaus ist auch die Verwendung eines erfindungsgemäßen holographischen Mediums zur Herstellung von Chipkarten, Ausweisdokumenten, 3D-Bildern, Produktschutzetiketten, Labeln, Banknoten oder holographisch optischen Elementen insbesondere für optische Anzeigen sind Gegenstand der Erfindung.

Ein weiterer Gegenstand der vorliegenden Erfindung ist die Verwendung des erfindungsgemäßen Schichtaufbaus, des erfindungsgemäßen Kit-of-parts und / oder des erfindungsgemäßen Schichtverbunds zur Herstellung von Hologrammen, insbesondere zur Herstellung von In-Line Hologrammen, Off-Axis Hologrammen, Full-Aperture Transfer Hologrammen, Weißlicht-Transmissionshologrammen, Denisyukhologrammen, Off-Axis Reflektionshologrammen, Edge-Lit Hologrammen sowie holographischen Stereogrammen.

Ein weiterer Gegenstand der vorliegenden Erfindung ist die Verwendung des erfindungsgemäßen Schichtverbunds als Anti-Halo-Schicht bei der Belichtung von holographisch beschreibbaren Photoschichten, vorzugsweise Photopolymerschichten.

Die Abbildung 1 zeigt einen schematischen Versuchsaufbau zur Messung der Reflektion (R-Wert) und des "read-out fringe"-Kontrasts K (K-Wert) eines Schichtaufbaus und / oder eines Schichtverbunds.

Die Erfindung wird im Folgenden anhand von Beispielen näher erläutert.

**Messmethoden:**

Bestimmung der optischen Dichte

Die optische Dichte wird als dekadischer Logarithmus der Transmission einer Probe bestimmt, wobei Po die Leistung vor der Probe und $P_1$ die Leistung nach dem Durchgang durch die Probe beschreibt. Die Leistung wird mit einem Spektrometer bei der jeweiligen Wellenlänge gemessen:

$$\mathrm{OD} = -\log 10 \frac{\mathrm{P_1}}{\mathrm{P_0}}$$

<u>Bestimmung des "read-out fringe"-Kontrasts K (K-Wert):</u>

Wird beim Belichten eines sogenannten edge-lit Transmisssions-Hologramms die Rückseite der Trägerfolie nicht mit einer lichtabsorbierenden Beschichtung ("Blackbacking") versehen, kann zusätzlich ein ungewolltes Reflektionshologramm entstehen. Das vom störenden Reflektionshologramm bei der Rekonstruktion abgebeugte Licht ist bei der Verwendung einer inkohärenten Lichtquelle zur Rekonstruktion nicht vom abgebeugtem Licht des gewollten Transmissionshologramms zu unterscheiden.

Wird allerdings eine kohärente Lichtquelle zur Rekonstruktion benutzt und die Beugungseffizienz (DE) gegenüber dem Auslesewinkel aufgetragen, so ist diese sogenannte Bragg-Kurve innerhalb des Hauptmaximums (der sogenannten Winkelbandbreite) stark moduliert, da der Phasenunterschied beider Rekonstruktionsstrahlen bei der Rekonstruktion abgebeugten Strahlen stark variiert. Details dazu finden sich bei P. Ehbets, H.P. Herzig, R. Dändliker, TIR holography analyzed with coupled wave theory, Optics Communications, Volume 89, Issue 1, 1992, Pages 5-11, ISSN

0030-4018, https://doi.org/10.1016/0030-4018(92)90238-M.

Wird hingegen eine optimal funktionierende lichtabsorbierende Beschichtung beim Belichten verwendet, tritt diese Modulation bei der Rekonstruktion (read-out fringes) nicht auf, da das ungewollte Reflektionshologramm gar nicht erst entsteht.

Zur Bestimmung der Eignung eines erfindungsgemäßen Schichtaufbaus wurden daher wie folgt Hologramme geschrieben und ausgelesen:

- Zwei Laserstrahlen eines Lasers (Wellenlänge 532 nm) werden auf eine Grenzfläche F-1 (Luft/Glas) eines 90°-Prismas so ausgerichtet, so dass beide Strahlen im Glaskörper propagieren können. Beim Auftreffen auf die Grenzfläche F-2 (Glas/Luft) werden die Strahlen total reflektiert (TIR - Total Internal Reflection) und treten über die Grenzfläche F-3 (Glas/Luft) wieder aus dem Glaskörper aus. Die Winkel W-1 und W-2 beider Laserstrahlen beim Auftreffen auf Grenzfläche F-2 sind also jeweils größer als der kritische Winkel, sie unterscheiden sich allerdings voneinander. Dieser Aufbau ist in der Abbildung 1 schematisch dargestellt.
- Auf die Grenzfläche F-2 des Prismas wird eine Photopolymer-Schicht laminiert, es resultiert ein Schichtaufbau B-A-G (Schicht G stellt das Glasprisma dar).
- Die beiden Strahlen belichten als Signal- und Referenzstrahl ein edge-lit Transmissions-Hologramm.
- Zum Auslesen wird nur einer der beiden Strahlen benutzt und zunächst das Maximum der Bragg-Kurve eingestellt, indem die Leistung des bei der Rekonstruktion abgebeugten Lichtes, welches über Grenzfläche F-3 aus dem Prisma austritt, gemessen und über die Rotation des Prismas (Variation des Auslesewinkels) maximiert wird ($P_{max}$).
- Anschließend wird der Auslesewinkel zum Beispiel maximal um 1° geändert, um das nächstgelegene Minimum der stark modulierten Bragg-Kurve innerhalb des Hauptmaximums der Winkelbandbreite zu finden ($P_{min}$).

Aus diesen beiden Messwerten wird der "read-out fringe"-Kontrast K gemäß

$$K = \frac{P_{max} - P_{min}}{P_{max} + P_{min}}$$

berechnet.

Im Falle der Verwendung der zu untersuchenden Schichtaufbauten wird die Anordnung D-C-B-AG während der Belichtung verwendet und vor dem Auslesen der Schichtverbund D-C wieder entfernt (Schicht G stellt das Glasprisma dar).

Die Anpassungen an andere Schreibwellenlängen erfolgt durch eine dem Fachmann hinreichend bekannte Auswahl geeigneter Farbstoffe für die Klebstoffschicht C sowie die verknüpfte Auswahl der Messwellenlängen für den K-Wert.

<u>Messung der Reflektion mit dem Schichtverbund C-D (R-Wert)</u>

- Zwei Laserstrahlen eines Lasers (Wellenlänge 532 nm) werden auf eine Grenzfläche F-1 (Luft/Glas) eines 90°-Prismas so ausgerichtet, so dass der Strahl im Glaskörper propagieren kann. Beim Auftreffen auf die Grenzfläche F-2 (Glas/Luft) wird der Strahl total reflektiert (TIR - Total Internal Reflection) und tritt über die Grenzfläche F-3 (Glas/Luft) wieder aus dem Glaskörper aus. Der Winkel W-1 des Laserstrahls beim Auftreffen auf Grenzfläche F-2 ist also größer als der kritische Winkel.

- Es wird die Leistung des Lichtes gemessen, welches über Grenzfläche F-3 aus dem Prisma austritt ($P_0$).

- Auf die Grenzfläche F-2 des Prismas wird der Schichtverbund D-C laminiert, es resultiert ein Schichtaufbau D-C-G (Schicht G stellt das Glasprisma dar). Anschließend wird wieder die Leistung des Lichtes gemessen, welches über Grenzfläche F-3 aus dem Prisma austritt ($P_1$).

- Der R-Wert ergibt sich aus dem Quotienten der Lichtleistung mit Schichtverbund D-C und der Lichtleistung ohne den Schichtverbund D-C:

$$R = \frac{P_1}{P_0}$$

Die Anpassungen an andere Schreibwellenlängen erfolgt durch eine dem Fachmann hinreichend bekannte Auswahl geeigneter Farbstoffe für die Klebstoffschicht C sowie die verknüpfte Auswahl der Messwellenlängen für den R-Wert.

## Chemikalien:

In eckigen Klammern ist jeweils, soweit bekannt, die CAS-Nummer angegeben.

**Rohstoffe der holographischen Schicht A**

| | |
|---|---|
| Fomrez® UL 28 | Urethanisierungskatalysator, Handelsprodukt der Momentive Perfor-mance Chemicals, Wilton, CT, USA. |
| Borchi® Kat 22 | Urethanisierungskatalysator, [85203-81-2] Handelsprodukt der OMG Borchers GmbH, Langenfeld, Deutschland. |
| BYK-310 | Silikonhaltiges Oberflächenadditiv, Produkt der BYK-Chemie GmbH, Wesel, Deutschland. |
| Desmodur® N 3900 | Produkt der Covestro AG, Leverkusen, DE, Hexandiisocyanatbasiertes Polyisocyanat, Anteil an Iminooxadiazindion mindestens 30 %, NCO-Gehalt: 23.5%. |
| CGI-909 | Tetrabutylammonium-tris(3-chlor-4-methylphenyl)-(hexyl)borat, [1147315-11-4], Produkt der BASF SE. |

Farbstoff 1 (3,7-Bis(diethylamino)-phenoxazin-5-ium bis(2-ethylhexyl)sulfobernsteinsäureester) wurde wie in WO 2012062655 beschrieben hergestellt.

Polyol 1 entspricht Polyol 1 in WO2015091427 und wurde wie dort beschrieben hergestellt.

Urethanacrylat 1, (Phosphorothioyltris(oxybenzol-4,1-diylcarbamoyloxyethan-2,1-diyl)trisacrylat, [1072454-85-3]) wurde wie in WO2015091427 beschrieben hergestellt.

Urethanacrylat 2, (2-({[3-(Methylsulfanyl)phenyl]carbamoyl}oxy)-ethylprop-2-enoat, [1207339-61-4]) wurde wie in WO2015091427 beschrieben hergestellt.

Additiv 1, Bis(2,2,3,3,4,4,5,5,6,6,7,7-dodecafluorheptyl)-(2,2,4-trimethylhexan-1,6-diyl)biscarbamat [1799437-41-4] wurde wie in WO2015091427 beschrieben hergestellt.

**Rohstoffe der Schicht C**

| | |
|---|---|
| Wasser | deionisiertes Wasser. |
| Bayhydrol® A 145 | Produkt der Covestro AG, Leverkusen, DE, OH-PAC-Dispersion: wässriger 2K-Klar/Decklack mit AL-PICs für Autoreparatur, Großfahrzeug- und Industrielackierung bzw. wässrige 1K-EB-Lacke mit Aminoharzen/BL-PICs für die Industrielackierung. |
| Bayhdyrol® A 2861 | Produkt der Covestro AG, Leverkusen, DE, wasserverdünnbare, OH-funktionelle Polyacrylatdispersion für wässrige 2K-PUR-Lacke mit sehr hoher Flexibilität. |
| Bayhydrol® UA 2856 XP | Produkt der Covestro AG, Leverkusen, DE, aliphatische, acrylatmodifizierte Polyurethandispersion. Bindemittel für wässrige, luft- und ofentrocknende Basislacke für 2-Schicht-Fahrzeuglackierung, Kunststofflackierung, Autoreparaturlackierung, Industrielackierung sowie für niedertemperaturtrocknende Steinschlagfunktionsschichten. |
| Borchi® Gel L 75 N | Produkt der Borchers GmbH, Langenfeld,, DE, ist ein flüssiges Verdickungsmittel auf Polyurethanbasis, frei von Alkylphenol-Ethoxylaten (APEO), zinnorganischen Verbindungen und VOC. |
| Erythrosin B | Solvent Red 140, [15905-32-5], Produkt der Fa. Sigma-Aldrich Chemie GmbH, Taufkirchen, Deutschland. |
| Phloxine B | Acid Red 92, [18472-87-2], Produkt der Fa. Sigma-Aldrich Chemie GmbH, Taufkirchen, Deutschland. |
| Sulforhodamin B | Acid Red 52, [3520-42-1], Produkt der Fa. Sigma-Aldrich Chemie GmbH, Taufkirchen, Deutschland. |
| Eosin Y | Acid Red 87, [17372-87-1], Produkt der Fa. Sigma-Aldrich Chemie GmbH, Taufkirchen, Deutschland. |
| BLANKOPHOR P liq. 01 | (Fluorescent Brightener 220) Farbstoff der Blankophor GmbH & Co. KG, Postfach 10 02 40, 51302 Leverkusen, DE und ein Derivat der Flavonsäure (4,4'-Diaminostilben-2,2'-disulfonsäure), vom Tetrasulfo-Typ mit der Molmasse von 1165 (Na-Salz). Erhältlich als 22%-ige Lösung bezogen auf die freie Säure. |

(fortgesetzt)

| | |
|---|---|
| BLANKOPHOR UWS liq. | Farbstoff der Blankophor GmbH & Co. KG, Postfach 10 02 40, 51302 Leverkusen, DE und ein Derivat der Flavonsäure (4,4'-Diaminostilben-2,2'-disulfonsäure), vom Hexasulfo-Typ mit der Molmasse von 1361 (Na-Salz). Erhältlich als 15%-ige Lösung bezogen auf die freie Säure. |
| S 2493 | Farbstoff der FEW Chemicals GmbH, Bitterfeld-Wolfen, DE. |
| S 0522 | [120724-84-7], Farbstoff der FEW Chemicals GmbH, Bitterfeld-Wolfen, DE. |
| Farbstoff 2 | 5-[5-(6-Hydroxy- 2,2-dimethyl-4-oxo-4*H*-1,3-dioxin-5-yl)-2,4-pentadien-1-yliden]-2,2-dimethyl-1,3-dioxan-4,6-dion, [251984-72-2], wurde analog EP 0 963 923 hergestellt: 5.76 g Meldrumsäure und 4.67 g Glutaconaldehyd-dianilid hydrochlorid wurden in 12 ml Methanol mit 5.70 g Triethylamin versetzt und 3 h bei Raumtemperatur gerührt. 70 ml Wasser und 7 ml konzentrierte Salzsäure werden nacheinander zugetropft. Es wurde 30 min gerührt, abgesaugt, mit 5 ml Essigsäureethylester gewaschen und bei 50 °C i. Vak. getrocknet. Man erhielt 3.58 g (51,1 % d. Th.) eines blaustichig roten Pulvers der Formel (Farbstoff 2) |

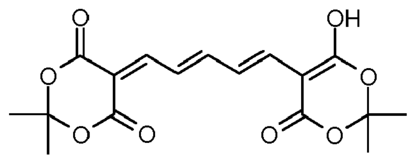

.

**Substratfolien**

| | |
|---|---|
| Hostaphan PET BHO | Produkt der Mitsubishi Polyester Films GmbH, Wiesbaden, DE, erhältlich und eingesetzt in 50 μm Stärke. |
| Hostaphan PET RNK | Produkt der Mitsubishi Polyester Films GmbH, Wiesbaden, DE, erhältlich und eingesetzt in 36 μm Stärke. |

**Herstellung Photopolymerfolie (Schichtverbund A-B)**

7.90 g der oben beschriebenen Polyol-Komponente 1 wurden aufgeschmolzen und mit 7.65 g des jeweiligen Urethanacylats 2, 2.57 g des oben beschriebenen Urethanacrylats 1, 5.10 g des oben beschriebenen fluorierten Urethans (Additiv 1), 0.91 g CGI 909, 0.232 g des Farbstoffs 1, 0.230 g BYK 310, 0.128 g Fomrez UL 28 und 3.789 g Ethylacetat gemischt, so dass eine klare Lösung erhalten wurde. Anschließend wurden 1.50 g Desmodur® N 3900 zugegeben und erneut gemischt.

Nun gab man diese Lösung in einer Rolle zu Rolle Beschichtungsanlage auf eine 36 μm dicke PET Folie, wo mittels eines Rakels das Produkt in einer Nassschichtdicke von 19 μm appliziert wurde. Bei einer Trocknungstemperatur von 85 °C und einer Trocknungszeit von 5 Minuten wurde die beschichtete Folie getrocknet und anschließend mit einer 40 μm dicken Polyethylenfolie geschützt. Anschließend wurde dieser Film (Photopolymerfolie mit Schichtaufbau A-B) lichtdicht verpackt.

**Herstellung Lichtabsorptions-Schicht (Schichtverbund C-D)**

Erfindungsgemäße Beispiele

Beispiel 1

74.2 g Bayhydrol UA 2856 XP wurden mit 24.8 g Bayhydrol U 2861 und 0.50 g Borchi Gel L 75 N gemischt, so dass eine klare Lösung erhalten wurde. Anschließend wurden 0.50 g Erythrosin B zugegeben und erneut gemischt.

Nun gab man diese Lösung in einer Rolle zu Rolle Beschichtungsanlage auf eine 50 μm dicke schwarze PET Folie, wo mittels eines Rakels das Produkt in einer Nassschichtdicke von 100 μm appliziert wurde. Bei einer Trocknungstemperatur von 100 °C und einer Trocknungszeit von 5 Minuten wurde die beschichtete Folie getrocknet und anschließend mit einer 40 μm dicken Polyethylenfolie geschützt. Anschließend wurde dieser Film (Lichtabsorptions-Schicht (Schichtverbund C-D)) luftdicht verpackt.

Beispiel 2

74.2 g Bayhydrol UA 2856 XP wurden mit 24.8 g Bayhydrol U 2861 und 0.50 g Borchi Gel L 75 N gemischt, so dass eine klare Lösung erhalten wurde. Anschließend wurden 0.50 g Phloxine B zugegeben und erneut gemischt.

Nun gab man diese Lösung in einer Rolle zu Rolle Beschichtungsanlage auf eine 50 $\mu$m dicke schwarze PET Folie, wo mittels eines Rakels das Produkt in einer Nassschichtdicke von 100 $\mu$m appliziert wurde. Bei einer Trocknungstemperatur von 100 °C und einer Trocknungszeit von 5 Minuten wurde die beschichtete Folie getrocknet und anschließend mit einer 40 $\mu$m dicken Polyethylenfolie geschützt. Anschließend wurde dieser Film (Lichtabsorptions-Schicht (Schichtverbund C-D)) luftdicht verpackt.

Beispiel 3

Es wurde gearbeitet wie in Beispiel 1, aber das Erythrosin B wurde ersetzt durch 0.5 g des Farbstoffs 2 der Formel

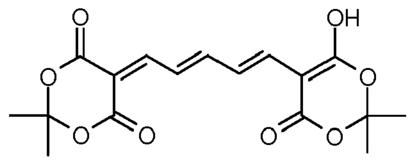

,

der mit 0.2 g Diethanolamin unter Bildung des Salzes der Formel

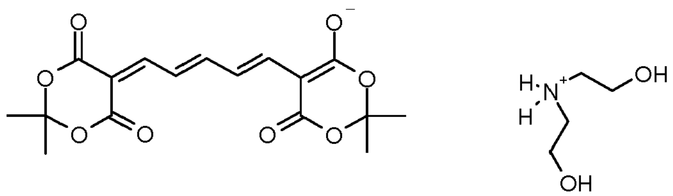

in Lösung gebracht wurde. Vom Borchi Gel L 75 N wurden hier 1.00 g eingesetzt.

Beispiel 4

Es wurde gearbeitet wie in Beispiel 1, aber das Erythrosin B wurde ersetzt durch 0.5 g des Farbstoffs S 0522 der Formel

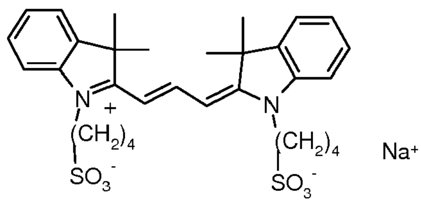

.

Vom Borchi Gel L 75 N wurden hier 1.00 g eingesetzt.

Beispiel 5

Es wurde gearbeitet wie in Beispiel 1, aber das Erythrosin B wurde ersetzt durch 0.5 g Eosin Y.

Beispiel 6

Es wurde gearbeitet wie in Beispiel 1, aber das Erythrosin B wurde ersetzt durch 0.5 g Sulforhodamin B.

Beispiel 7

Es wurde gearbeitet wie in Beispiel 1, aber das Erythrosin B wurde ersetzt durch 0.5 g BLANKOPHOR P liq. 01 (Fluorescent Brightener 220).

Beispiel 8

Es wurde gearbeitet wie in Beispiel 1, aber das Erythrosin B wurde ersetzt durch 0.5 g BLANKOPHOR UWS liq.

Beispiel 9

Es wurde gearbeitet wie in Beispiel 1, aber das Erythrosin B wurde ersetzt durch 0.5 g Farbstoff S 2493.

Nicht erfindungs gemäße Beispiele

Beispiel I:

Als Beispiel I wurde ein Hologramm ohne jegliche Schicht C-D belichtet.

Beispiel II:

Es wurde gearbeitet wie in Beispiel 1, aber es wurde kein Farbstoff zugesetzt.

Die Beispiele 1-9 weisen eine optische Dichte > 2 auf und eignen sich gut zum Erstellen eines erfindungsgemäßen Schichtaufbaus A-B-C-D. Die nicht erfindungsgemäßen Beispiele I-II dagegen weisen eine optische Dichte ≤ 2 auf und eignen sich nicht zum Erstellen eines erfindungsgemäßen Schichtaufbaus A-B-C-D. Für das Erstellen eines erfindungsgemäßen Schichtaufbaus A-B-C-D ist es darüber hinaus wichtig, diesen Verbund reversibel aufzubauen. Die Haftkraft muss also so eingestellt werden, dass ein vollflächiger, blasenfreier optischer Kontakt entsteht und dieser Verbund muss sich voneinander lösen lassen ohne dass Rückstände auf der Schicht A oder B entstehen. Ein Maß für die Haftkraft ist daher der optische Kontakt des Schichtverbundes A-B-C-D. Dieser wird visuell beurteilt. Ein Maß für die Ablösbarkeit ist die unveränderte Wiedergewinnung des Schichtverbundes C-D. Eine wie oben beschrieben beschichtete Folie wurde bei Raumtemperatur blasenfrei auf eine Poylamid-Folie laminiert. Dieser Verbund wurde nach 24 h delaminiert und dabei die Haftkraft, Ablösbarkeit und eventuelle Rückstände auf der Polyamid-Folie visuell beurteilt. Ein Maß für Rückstände auf der Schicht A oder B ist die Abwesenheit von bekannten Inhaltsstoffen der Schicht C, hier insbesondere von Farbstoffen. Dies wird visuell oder mittels high-pressure liquid chromatography (HPLC) eines Eluats der Schicht A oder B beurteilt.

Die Beispiele 1-9 weisen eine geeignete Haftkraft, eine geeignete Ablösbarkeit auf und sind insbesondere rückstandsfrei vom Schichtverbund A-B abzulösen. Die Ergebnisse sind in der Tabelle 1 zusammengefasst.

Tabelle 1: Charakterisierung der Schicht C und Prüfung des Schichtaufbaus A-B-C-D

| **Beispiel** | optische Dichte der Schicht C* | **Bewertung des Verbunds A-B mit C-D und Eignung nach Ablösen der Schicht C-D** | | |
|---|---|---|---|---|
| | | **Haftkraft** | **Ablösbarkeit** | **Rückstand auf Schicht A oder B** |
| erfindungs gemäß | | | | |
| 1 | >3 | geeignet | geeignet | Nein |
| 2 | >3 | geeignet | geeignet | Nein |
| 3 | >3 | geeignet | geeignet | Nein |
| 4 | >3 | geeignet | geeignet | Nein |
| 5 | >3 | geeignet | geeignet | Nein |
| 6 | >3 | geeignet | geeignet | Nein |
| 7 | >3 | geeignet | geeignet | Nein |
| 8 | >3 | geeignet | geeignet | Nein |

(fortgesetzt)

| Beispiel | optische Dichte der Schicht C* | Bewertung des Verbunds A-B mit C-D und Eignung nach Ablösen der Schicht C-D | | |
|---|---|---|---|---|
| | | **Haftkraft** | **Ablösbarkeit** | **Rückstand auf Schicht A oder B** |
| erfindungs gemäß | | | | |
| 9 | >3 | geeignet | geeignet | Nein |
| nicht erfindungsgemäß | | | | |
| I | n/a | Nicht geeignet | | |
| II | 0.10 | geeignet | geeignet | Nein |
| * Die optische Dichte der Schicht C im Absorptionsmaximum des verwendeten Farbstoffs wurde bestimmt, in dem die Schicht C auf eine transparente PET (PET RNK) Folie aufgetragen und spektral vermessen wurde. | | | | |

Tabelle 2: Messung des "read-out fringe" Kontrasts bei der holographischen Belichtung im Schichtaufbau D-C-B-A-G

| Beispiel | Schicht C | Reflektionskoeffizient R bei 532 nm | Kontrast K bei 532 nm |
|---|---|---|---|
| Erfindungsgemäße Beispiele | | | |
| 1 | Monochromatisch gefärbter Polyacrylatbinder | 0.06 | 0.03 |
| 2 | Monochromatisch gefärbter Polyacrylatbinder | 0.05 | 0.03 |
| Nicht erfindungsgemäße Beispiele | | | |
| I | ohne | 1.00 | 0.95 |
| II | Pol yacrylatbinder | 0.11 | 0.11 |

Die Beispiele 1-2 weisen einen Reflektionskoeffizienten $R \leq 0.1$ auf und eignen sich gut zum Erstellen eines erfindungsgemäßen Schichtaufbaus A-B-C-D. Die nicht erfindungsgemäßen Beispiele I-II dagegen weisen einen Reflektionskoeffizienten $R > 0.1$ auf und eignen sich nicht zum Erstellen eines erfindungsgemäßen Schichtaufbaus A-B-C-D. Folienaufbauten mit einem Kontrast $K > 0.10$ beinhalten nach der holographischen Belichtung störende Effekte auf und eignen sich daher nicht für die Verwendung bei der Herstellung von Transmissionshologrammen. Die Ergebnisse sind in der Tabelle 2 zusammengefasst.

**Patentansprüche**

1. Schichtaufbau geeignet zum Einschreiben eines Hologramms umfassend eine flächig vorliegende Photopolymerschicht A und einen Schichtverbund C-D bestehend aus einer gefärbten Substratschicht D und einer flächig mit der Substratschicht D verbundenen und mit mindestens einem Farbstoff eingefärbten Klebstoffschicht C, wobei die eingefärbte Klebstoffschicht C zwischen der Photopolymerschicht A und der gefärbten Substratschicht D liegt, **dadurch gekennzeichnet, dass** die eingefärbte Klebstoffschicht C bei der Wellenlänge des Laserlichts, welches zum Einschreiben eines Hologramms in die Photopolymerschicht AB des Schichtaufbaus verwendet wird, eine optische Dichte von >2 aufweist, wobei die Wellenlänge des Laserlichts im Bereich von 350 nm bis 1200 nm liegt.

2. Schichtverbund umfassend eine gefärbte Substratschicht D und eine flächig mit der Substratschicht D verbundene und mit mindestens einem anionischen Farbstoff eingefärbte Klebstoffschicht C, **dadurch gekennzeichnet, dass** die eingefärbte Klebstoffschicht C bei mindestens einer Wellenlänge im Bereich von 350 nm bis 1200 nm, vorzugsweise im Bereich von 400 nm bis 800 nm, eine optische Dichte von >2 aufweist, mit der Maßgabe dass die eingefärbte Klebstoffschicht C nicht schwarz ist.

3. Kit-of-parts umfassend mindestens eine flächig vorliegende Photopolymerschicht A und einen Schichtverbund umfassend eine gefärbte Substratschicht D und eine flächig mit der Substratschicht D verbundene und mit mindestens einem Farbstoff eingefärbte Klebstoffschicht C, **dadurch gekennzeichnet, dass** die eingefärbte Klebstoffschicht C bei der Wellenlänge des Laserlichts, welches zum Einschreiben eines Hologramms in die Photopolymerschicht A des Schichtaufbaus verwendet wird, eine optische Dichte von >2 aufweist, wobei die Wellenlänge des Laserlichts im Bereich von 350 nm bis 1200 nm, vorzugsweise im Bereich von 400 nm bis 800 nm, liegt.

4. Schichtaufbau nach Anspruch 1 oder Kit-of-parts nach Anspruch 3, **dadurch gekennzeichnet, dass** die Photopolymerschicht A auf einer transparenten Substratschicht B vorliegt und mit dieser zumindest teilweise verbunden ist.

5. Schichtaufbau nach einem der Ansprüche 1 oder 4, Kit-of-parts nach einem der Ansprüche 3 bis 4, oder Schichtverbund nach Anspruch 2 weiterhin umfassend eine transparente Substratschicht E.

6. Schichtaufbau nach einem der Ansprüche 1, 4 oder 5, **dadurch gekennzeichnet, dass** der Schichtaufbau

   a) aus mindestens drei zumindest teilweise miteinander verbundenen Schichten besteht, wobei die Schichten in der Reihenfolge A-C-D unmittelbar aufeinander angeordnet sind,
   b) aus mindestens vier zumindest teilweise miteinander verbundenen Schichten besteht, wobei die Schichten in der Reihenfolge A-B-C-D, B-A-C-D, A-E-C-D, A-C-D-E oder E-A-C-D unmittelbar aufeinander angeordnet sind, oder
   c) aus mindestens fünf zumindest teilweise miteinander verbundenen Schichten besteht, wobei die Schichten in der Reihenfolge B-A-E-C-D, A-B-E-C-D, E-B-A-C-D, E-A-B-C-D, B-A-C-D-E oder A-B-C-D-E unmittelbar aufeinander angeordnet sind.

7. Schichtaufbau nach einem der Ansprüche 1 oder 4 bis 6, Schichtverbund nach einem der Ansprüche 2 oder 5, oder Kit-of-parts nach einem der Ansprüche 3 bis 5, **dadurch gekennzeichnet, dass** die eingefärbte Klebstoffschicht C bei mindestens einer der Wellenlängen von 355 nm, 457 nm, 460 nm, 473 nm, 480 nm, 532 nm, 633 nm, 635 nm, 670 nm, 780 nm, 850 nm und / oder 1064 nm eine optische Dichte von >2, vorzugsweise von > 2.5, besonders bevorzugt von > 3 aufweist.

8. Schichtaufbau nach einem der Ansprüche 1 oder 4 bis 7, oder Kit-of-parts nach einem der Ansprüche 3 bis 5 oder 7, **dadurch gekennzeichnet, dass** der mindestens eine Farbstoff in der eingefärbten Klebstoffschicht C ein anionischer Farbstoff ist.

9. Schichtaufbau nach Anspruch 8, Schichtverbund nach einem der Ansprüche 2, 5 oder 7, oder Kit-of-parts nach Anspruch 8, **dadurch gekennzeichnet, dass** der mindestens eine anionische Farbstoff in der eingefärbten Klebstoffschicht C ausgewählt ist aus der Gruppe bestehend aus anionischen Stilben-Derivaten, anionischen Oxonol-Farbstoffen, anionischen Xanthen-Farbstoffen, anionischen Triphenylmethan-Farbstoffen, anionischen Cumarin-Farbstoffen, anionischen Methin-Farbstoffen, anionischen Azin-Farbstoffen und anionischen Azo-Farbstoffen oder einer Mischung von mindestens zweien hiervon, vorzugsweise ausgewählt ist aus der Gruppe bestehend aus anionischen Stilben-Derivaten, anionischen Oxonol-Farbstoffen, anionischen Xanthen-Farbstoffen, anionischen Triphenylmethan-Farbstoffen, anionischen Methin-Farbstoffen und anionischen Azin-Farbstoffen oder einer Mischung von mindestens zweien hiervon, besonders bevorzugt ausgewählt ist aus der Gruppe bestehend aus anionischen Oxonol-Farbstoffen, anionischen Xanthen-Farbstoffen, anionischen Triphenylmethan-Farbstoffen und anionische Methin-Farbstoffe oder einer Mischung von mindestens zweien hiervon, noch bevorzugter ausgewählt ist aus der Gruppe bestehend aus anionischen Oxonol-Farbstoffen, anionischen Xanthen-Farbstoffen und anionischen Methin-Farbstoffen oder einer Mischung von mindestens zweien hiervon und ganz besonders bevorzugt ist der mindestens eine anionische Farbstoff ein anionischer Xanthen-Farbstoff oder eine Mischung von mindestens zwei verschiedenen anionischen Xanthen-Farbstoffen.

10. Schichtaufbau nach Anspruch 8, Schichtverbund nach einem der Ansprüche 2, 5 oder 7, oder Kit-of-parts nach Anspruch 8, **dadurch gekennzeichnet, dass** der mindestens eine anionische Farbstoff in der eingefärbten Klebstoffschicht C ausgewählt ist aus der Gruppe bestehend aus

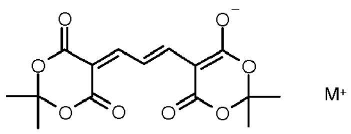

(1-a),

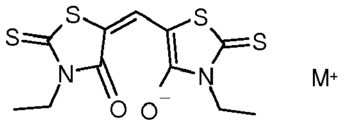

(2-a),

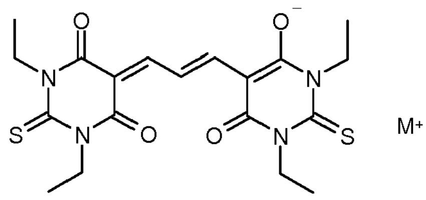

(2-b),

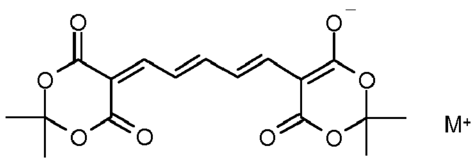

(2-c),

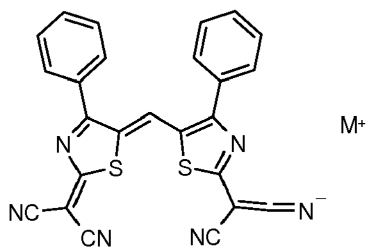

(3-a),

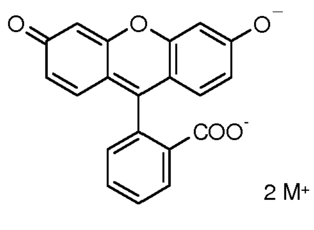

(4-a),

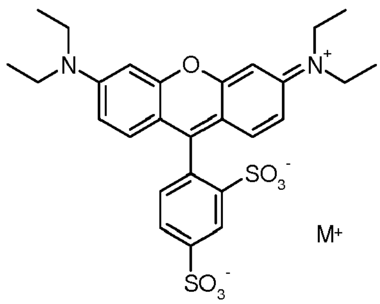

(5-a),

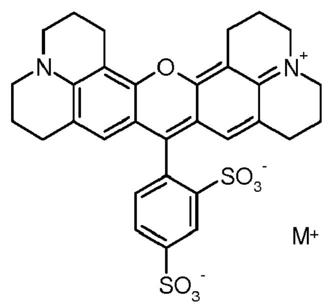

(5-b),

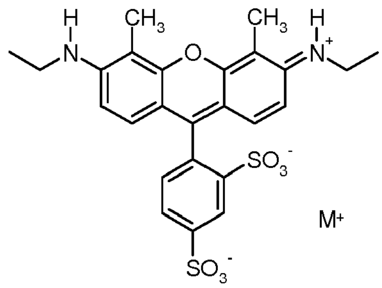

(5-c),

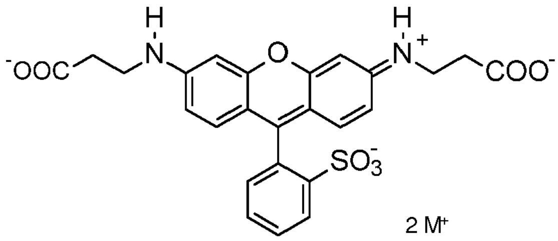

(5-d),

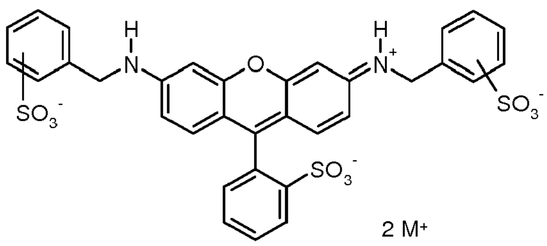

(5-e),

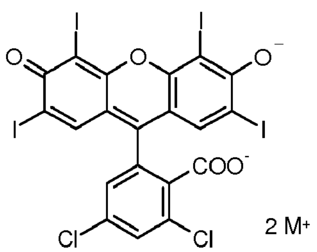

(5-f),

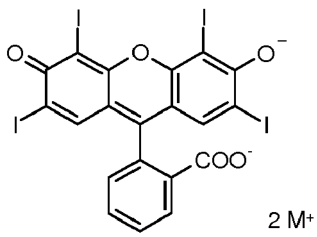

(5-g),

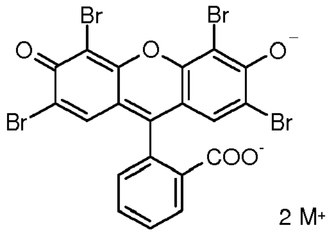

(5-h),

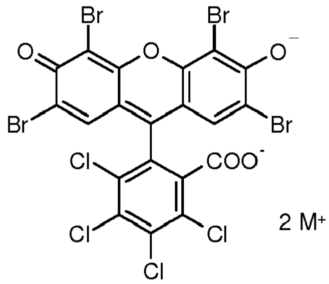

(5-i),

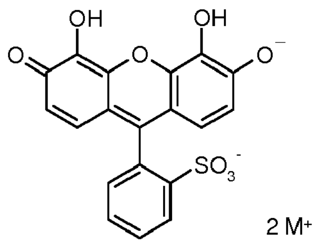

(5-j),

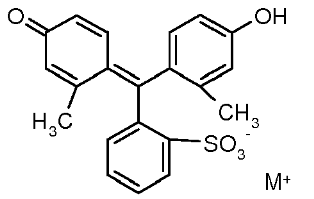

(6-a),

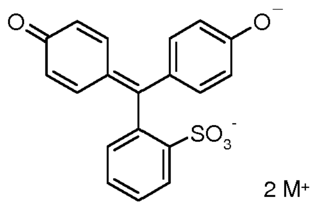

(7-a),

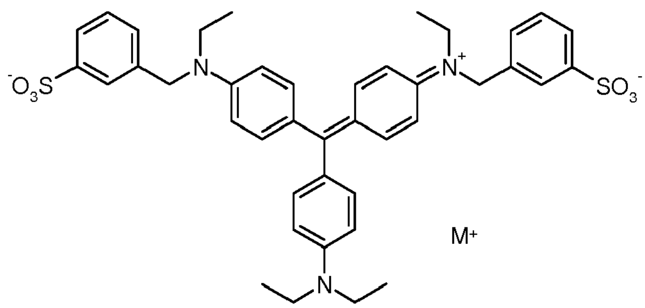

(7-b),

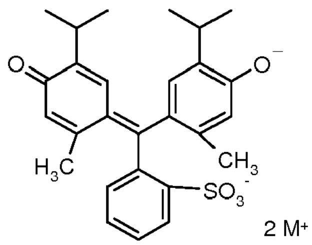

(8-a),

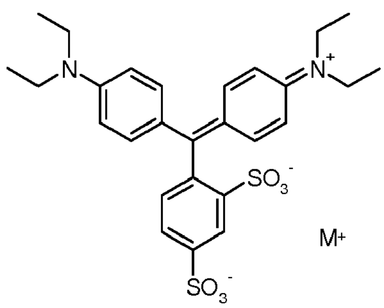

(8-b),

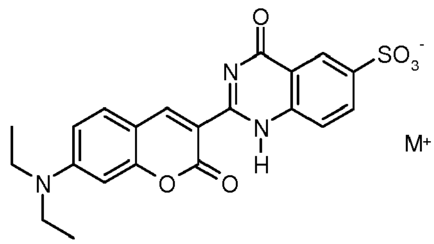

(9-a),

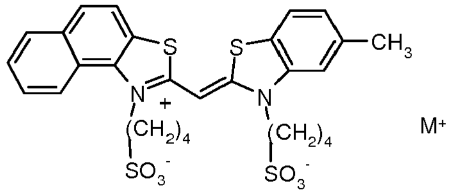

(10-a),

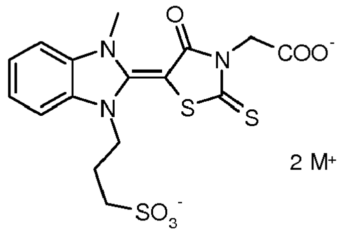

(10-b),

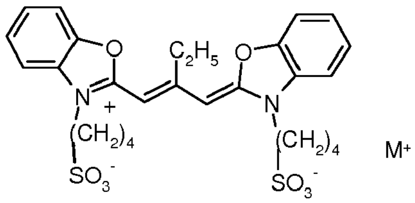

(11-a),

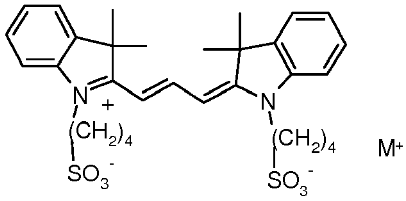

(11-b),

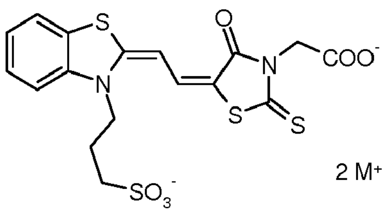

(11-c),

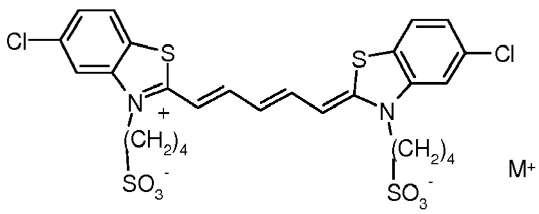

(12-a),

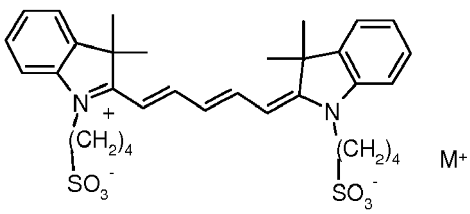

(12-b),

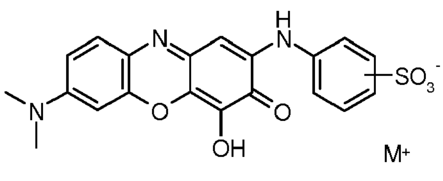

(13-c),

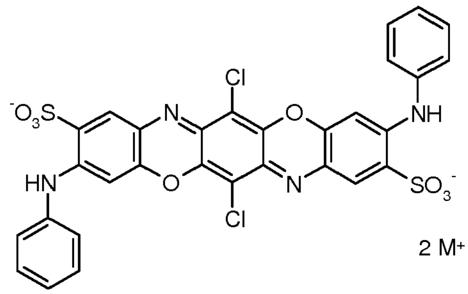

(13-a),

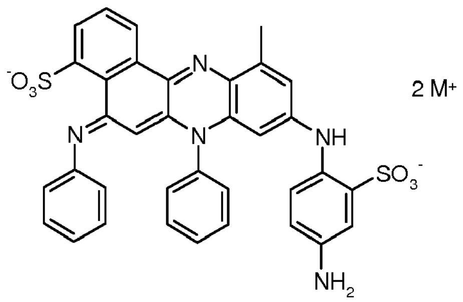

(13-b),

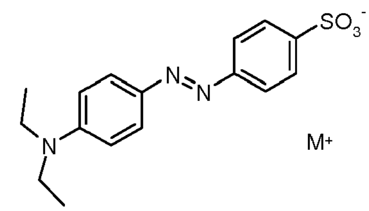

(14-a),

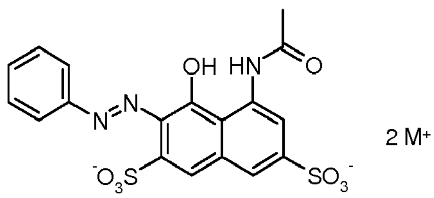

(15-a),

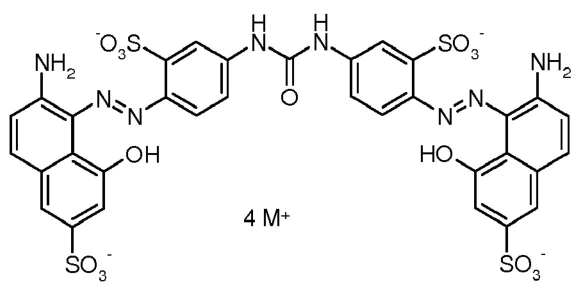

(15-b),

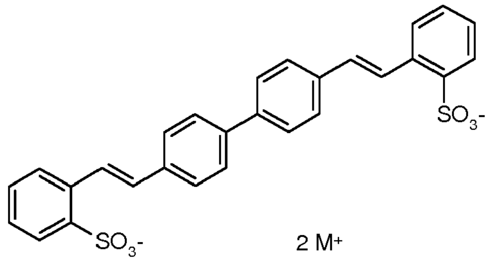

(16-a),

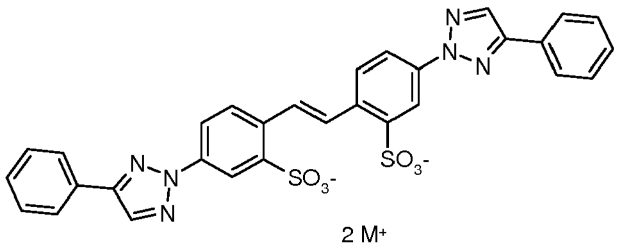

(16-b),

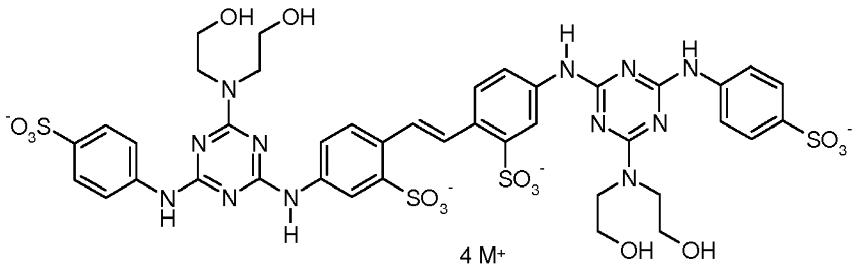

(16-c),

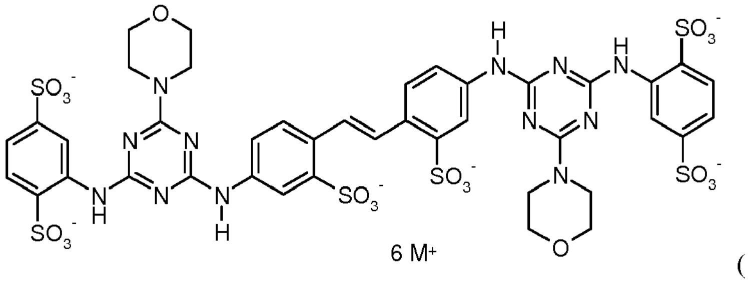

(16-d),

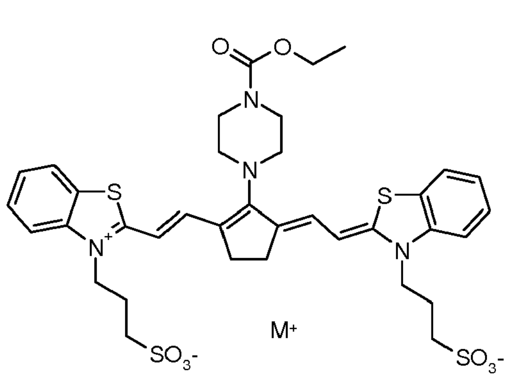

(17-a),

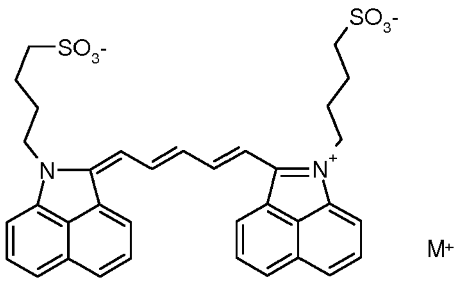

(17-b)

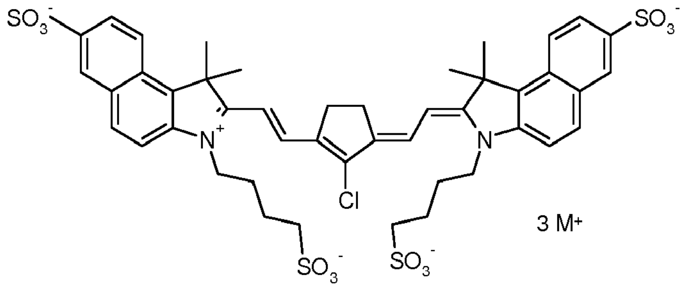

(17-c)

oder einer Mischung von mindestens zweien hiervon, wobei $M^+$ in den Formeln 1-a, 2-a, 2-b, 2-c, 3-a, 4-a, 5-a, 5-b, 5-c, 5-d, 5-e, 5-f, 5-g, 5-h, 5-i, 5-j, 6-a, 7-a, 7-b, 8-a, 8-b, 9-a, 10-a, 10-b, 11-a, 11-b, 11-c, 12-a, 12-b, 13-a, 13-b, 13-c, 14-a, 15-a, 15-b, 16-a, 16-b, 16-c, 16-d, 17-a, 17-b und 17-c für ein beliebiges Kation steht, vorzugsweise für ein Kation ausgewählt aus der Gruppe bestehend aus Ammonium-Ion, substituiertes Ammonium-Ion und Alkalimetallion oder einer Mischung von mindestens zweien hiervon, besonders bevorzugt ausgewählt aus der Gruppe bestehend aus Ammonium-Ion, Dimethyl(2-hydroxyethyl)ammonium, Bis(2-hydroxyethyl)ammonium, Tris(2-hydroxyethyl)ammonium, Bis(2-hydroxypropyl)ammonium, Tris(2-hydroxyproyl)ammonium, $Li^+$, $Na^+$, $K^+$ oder einer Mischung von mindestens zweien hiervon,

vorzugsweise ist der mindestens eine anionische Farbstoff in der eingefärbten Klebstoffschicht C ausgewählt ist aus der Gruppe bestehend aus

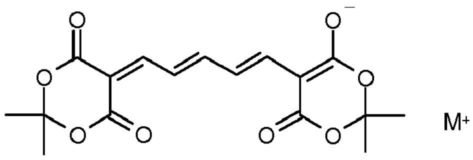

(2-c),

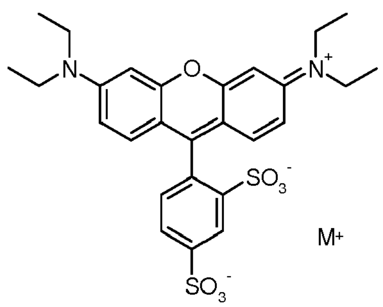

(5-a),

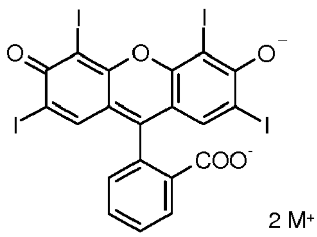

2 M+ (5-g),

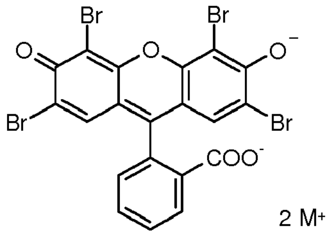

2 M+ (5-h),

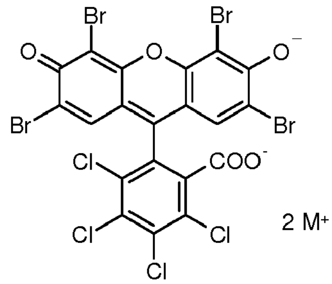

2 M+

(5-i),

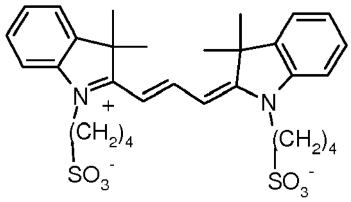

M+

(11-b),

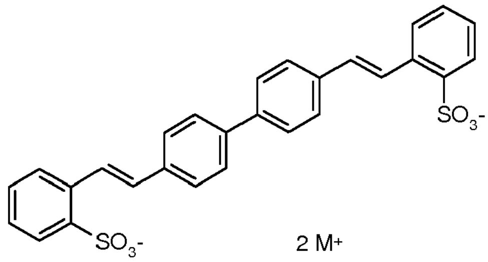

2 M+ (16-a),

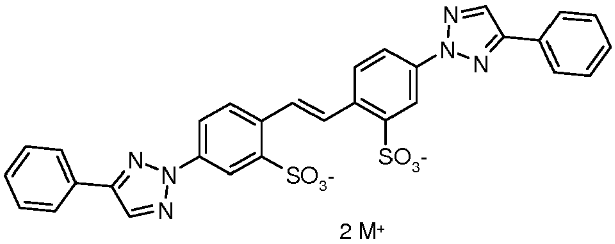

2 M+ (16-b),

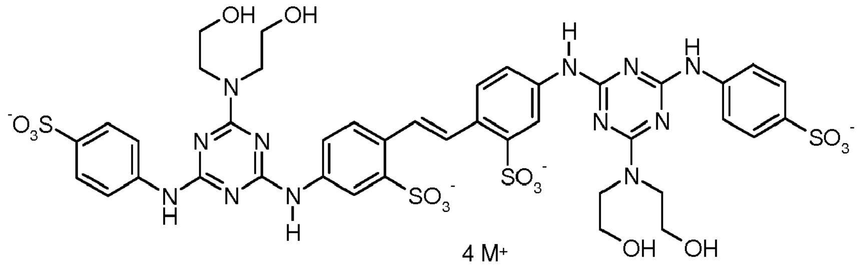

(16-c),

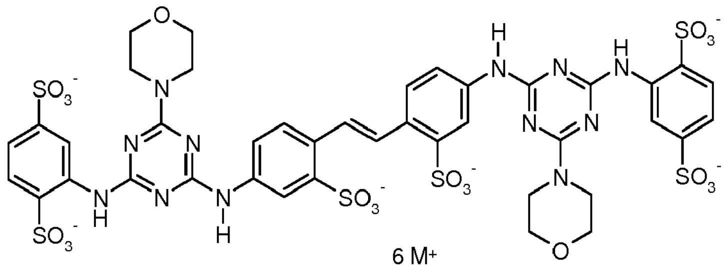

(16-d),

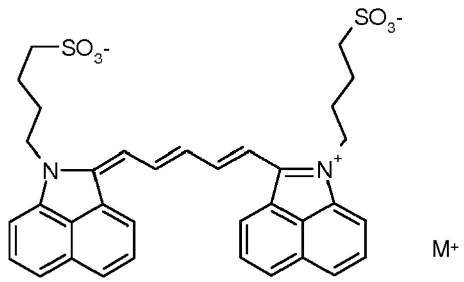

(17-b)

und

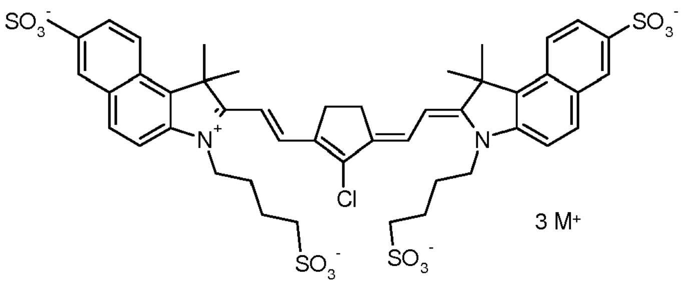

(17-c)

oder einer Mischung von mindestens zweien hiervon, wobei $M^+$ in den Formeln 2-c, 5-a, 5-g, 5-h, 5-i, 11-b, 16-a,16-b, 16-c, 16-d, 17-b und 17-c für ein beliebiges Kation steht, vorzugsweise für ein Kation ausgewählt aus der Gruppe bestehend aus Ammonium-Ion, substituiertes Ammonium-Ion und Alkalimetallion oder einer Mischung von mindestens zweien hiervon, besonders bevorzugt ausgewählt aus der Gruppe bestehend aus Ammonium-Ion, Dimethyl(2-hydroxyethyl)ammonium, Bis(2-hydroxyethyl)ammonium, Tris(2-hydroxyethyl)ammonium, Bis(2-hydroxypropyl)ammonium, Tris(2-hydroxyproyl)ammonium, $Li^+$, $Na^+$ oder $K^+$ oder einer Mischung von mindestens zweien hiervon,
besonders bevorzugt ist der mindestens eine anionische Farbstoff in der eingefärbten Klebstoffschicht C ausgewählt aus der Gruppe bestehend aus

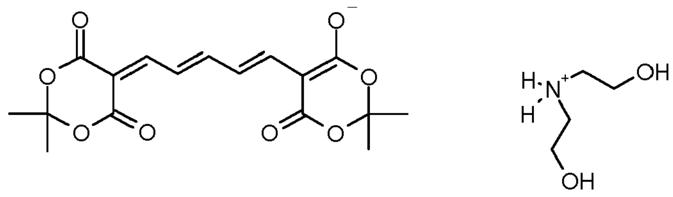

(2-d),

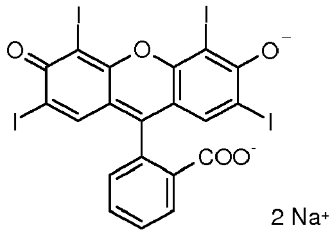

(5-k),

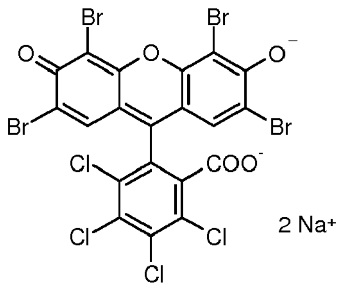

(5-l),

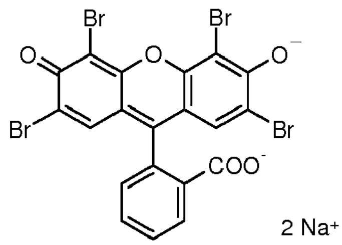

(5-m),

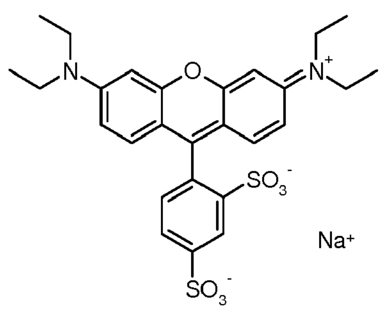

(5-n)

und

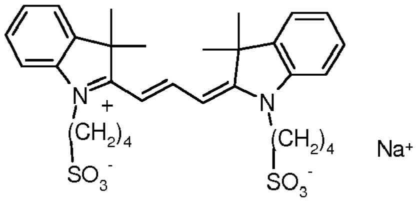

(11-d)

oder einer Mischung von mindestens zweien hiervon.

**11.** Schichtaufbau nach einem der Ansprüche 1 oder 4 bis 10, Schichtverbund nach einem der Ansprüche 2, 5, 7 oder 9 bis 10, oder Kit-of-parts nach einem der Ansprüche 3 bis 5 oder 7 bis 10, **dadurch gekennzeichnet, dass** die Gesamtmasse aller Farbstoffe in der eingefärbten Klebstoffschicht C 0.1 - 3.0 Gew.-%, vorzugsweise von 0.2 - 2.0 Gew.-%, besonders bevorzugt von 0.2 - 1 Gew.-% beträgt, bezogen auf die Gesamtmasse der getrockneten Klebstoffschicht C.

**12.** Schichtaufbau nach einem der Ansprüche 1 oder 4 bis 11, Schichtverbund nach einem der Ansprüche 2, 5, 7 oder 9 bis 11, oder Kit-of-parts nach einem der Ansprüche 3 bis 5 oder 7 bis 11, **dadurch gekennzeichnet, dass** der gefärbte Schichtverbund C-D einen Reflektionskoeffizienten für die Prisma-Messung von $R < 0.20$ aufweist, wobei der Reflektionskoeffiezent R das Verhältnis der reflektierten Intensität eines TIR-Strahls innerhalb eines Prismas mit dem gefärbten Schichtverbund C-D im Vergleich zu demselben Prisma ohne den gefärbten Schichtverbund C-D bei Beleuchtung von einer transparenten Prismaseite aus mit einer Wellenlänge des zum Belichten des Hologramms benutzten Lasers beschreibt, vorzugsweise ist $R \leq 0.12$ und besonders bevorzugt ist $R \leq 0.08$.

**13.** Schichtaufbau nach einem der Ansprüche 1 oder 4-12, Schichtverbund nach einem der Ansprüche 2, 5, 7 oder 9-12, oder Kit-of-parts nach einem der Ansprüche 3-5 oder 7-12, **dadurch gekennzeichnet, dass** die Substratschicht D mit einem schwarzen Pigment, einem schwarzen Farbstoff oder einer schwarzen Farbstoffmischung eingefärbt ist.

**14.** Schichtaufbau nach einem der Ansprüche 1 oder 4 bis 13, oder Kit-of-parts nach einem der Ansprüche 3 bis 5 oder 7 bis 13, **dadurch gekennzeichnet, dass** die Photopolymerschicht A Polyurethanmatrixpolymere, Schreibmonomere und Photoinitiatoren umfasst.

**15.** Verfahren zur Herstellung eines Schichtaufbaus nach einem der Ansprüche 1 oder 4 bis 14 umfassend die Schritte:

- Bereitstellen einer Photopolymerschicht A, wobei die Photopolymerschicht A vorzugsweise auf einer transparenten Substratschicht B vorliegt;
- Bereitstellen eines Schichtverbundes bestehend aus einer gefärbten Substratschicht D und einer flächig mit der Substratschicht D verbundenen und mit mindestens einem Farbstoff eingefärbten Klebstoffschicht C;
- ggf Bereitstellen einer transparenten Substratschicht E;
- Zusammenfügen und zumindest teilweises Verbinden der Photopolymerschicht A oder ggf des Schichtverbunds A-B und ggf der Substratschicht E mit dem Schichtverbund CD,

wobei die Schichten in der Reihenfolge A-C-D, A-B-C-D, B-A-C-D, A-E-C-D, A-C-D-E, E-A-C-D, B-A-E-C-D, A-B-E-C-D, E-B-A-C-D, E-A-B-C-D, B-A-C-D-E oder A-B-C-D-E unmittelbar aufeinander angeordnet sind.

**16.** Verfahren zur Herstellung eines Schichtverbunds nach einem der Ansprüche 2, 5, 7 oder 9 bis 13, **dadurch gekennzeichnet, dass** in einem Schritt mindestens ein anionischer Farbstoff in einer wässrigen Klebstoff-Dispersion gelöst wird, um eine gefärbte wässrige Klebstoff-Dispersion zu erhalten und in einem darauf folgenden Schritt die gefärbte Klebstoff-Dispersion auf einer gefärbten Substratschicht D aufgetragen und getrocknet wird, um einen Schichtverbund C-D zu erhalten.

**17.** Verfahren zur Herstellung eines Hologramms umfassend die folgenden Schritte:

a) Bereitstellen eines Schichtaufbaus nach einem der Ansprüche 1 oder 4 bis 14;
b) Erzeugung zumindest eines Hologramms in der Photopolymerschicht A des Schichtaufbaus;
c) Rückstandfreies Delaminieren und Entfernen des Schichtverbundes C-D oder C-D-E und ggf. E aus dem Schichtaufbau.

**18.** Belichteter Schichtaufbau enthaltend ein Hologramm, vorzugsweise ein Volumenhologramm, erhältlich durch das Verfahren nach Anspruch 17.

**19.** Holographisches Medium enthaltend einen belichteten Schichtaufbau enthaltend ein Hologramm nach Anspruch 18.

**20.** Optische Anzeige, umfassend einen belichteten Schichtaufbau enthaltend ein Hologramm nach Anspruch 18 oder ein holographisches Medium nach Anspruch 19, wobei die optische Anzeige vorzugsweise ausgewählt ist aus der Gruppe bestehend aus optischen Bauelementen, autostereoskopischen oder holographischen Displays, Projektionsleinwänden, Projektionsscheiben, Displays mit schaltbarem eingeschränktem Abstrahlverhalten für Privacyfilter und bidirektionalen Multiuserbildschirmen, virtuellen Bildschirmen, Headup-Displays, Head-mounted Displays, Leuchtsymbolen, Warnlampen, Signallampen, Scheinwerfern und Schautafeln.

**21.** Sicherheitsdokument, umfassend einen belichteten Schichtaufbau enthaltend ein Hologramm nach Anspruch 18 oder ein holographisches Medium nach Anspruch 19.

**22.** Verwendung eines Schichtaufbaus nach einem der Ansprüche 1 oder 4 bis 14, Schichtverbunds nach einem der Ansprüche 2, 5, 7 oder 9 bis 13, oder Kit-of-parts nach einem der Ansprüche 3 bis 5 oder 7 bis 14 zur Herstellung von Hologrammen, insbesondere zur Herstellung von In-Line Hologrammen, Off-Axis Hologrammen, Full-Aperture Transfer Hologrammen, Weißlicht-Transmissionshologrammen, Denisyukhologrammen, Off-Axis Reflektionshologrammen, Edge-Lit Hologrammen sowie holographischen Stereogrammen.

**23.** Verwendung eines Schichtverbundes nach einem der Ansprüche 2, 5, 7 oder 9 bis 13 als Anti-Halo-Schicht bei der Belichtung von holographisch beschreibbaren Photoschichten, vorzugsweise Photopolymerschichten.

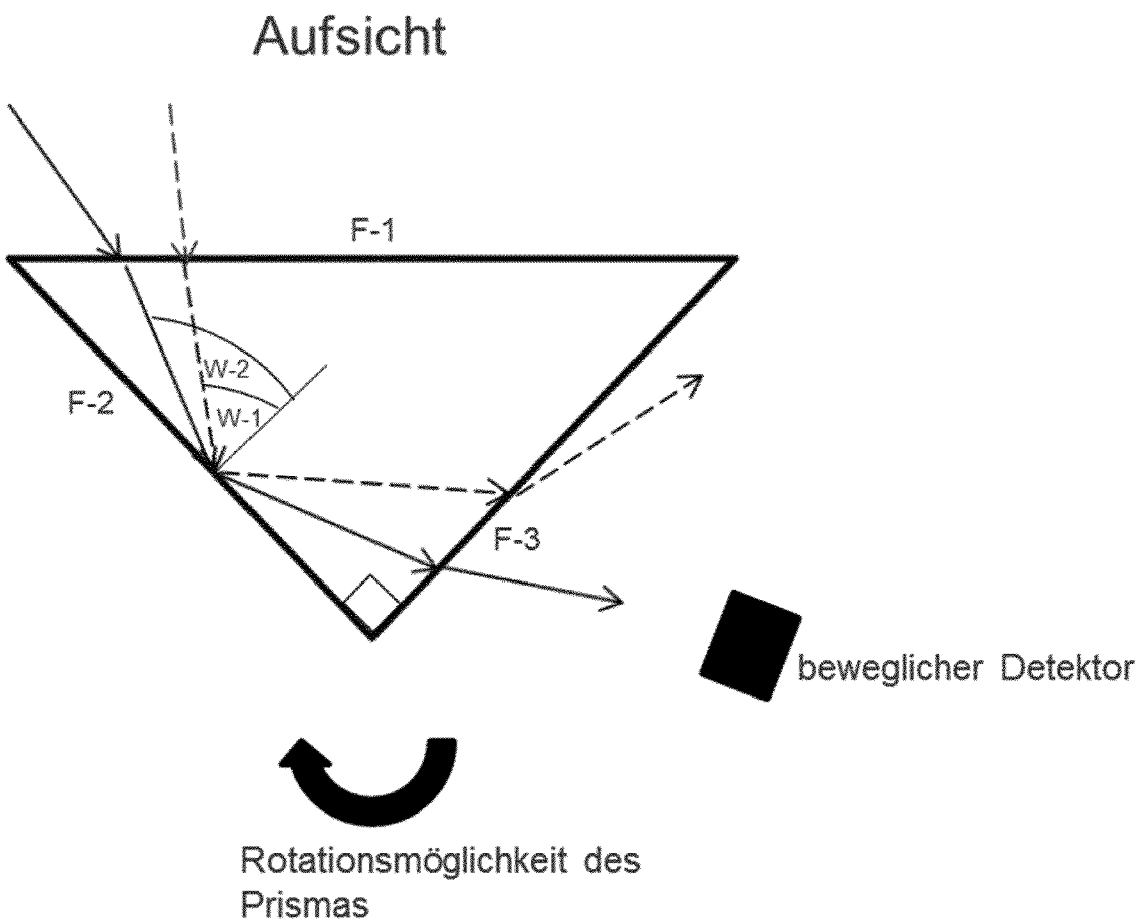
Aufsicht
F-1
F-2
W-2
W-1
F-3
beweglicher Detektor
Rotationsmöglichkeit des Prismas

Europäisches Patentamt
European Patent Office
Office européen des brevets

# EUROPÄISCHER RECHERCHENBERICHT

Nummer der Anmeldung
EP 19 19 0170

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 266 166 B1 (KATSUMATA MASAKI [JP] ET AL) 24. Juli 2001 (2001-07-24)<br>* Spalte 1, Zeilen 15-24, 42-50; Abbildungen 1-4 *<br>* Spalte 3, Zeilen 24-34, 61-63 *<br>* Spalte 6, Zeile 41 - Zeile 63 *<br>* Spalte 7, Zeile 14 - Zeile 26 *<br>* Spalte 11, Zeile 18 - Zeile 59 *<br>* Spalte 13, Zeile 1 - Spalte 15, Zeile 21 *<br>----- | 1-23 | INV.<br>G03H1/02<br>B32B7/06<br>B32B7/12<br>B32B27/20<br>G02B5/00<br>C09J11/00 |
| A | US 3 833 383 A (RYAN R ET AL)<br>3. September 1974 (1974-09-03)<br>* Spalte 1, Zeile 2 - Spalte 4, Zeile 33; Abbildung 1 *<br>----- | 1-23 | |
| A,D | EP 2 801 867 A1 (BAYER MATERIALSCIENCE AG [DE]) 12. November 2014 (2014-11-12)<br>* Absätze [0001] - [0026], [0113] - [0120], [0128]; Abbildungen 1-5, 8 *<br>----- | 1-23 | |

**RECHERCHIERTE SACHGEBIETE (IPC)**

G03H
C09D
C09B
B32B
G11B
G02B
C08J
B29C
C09J

Der vorliegende Recherchenbericht wurde für alle Patentansprüche erstellt

1

| Recherchenort | Abschlußdatum der Recherche | Prüfer |
|---|---|---|
| München | 16. Januar 2020 | Lutz, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 19 19 0170

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-01-2020

| Im Recherchenbericht angeführtes Patentdokument | Datum der Veröffentlichung | Mitglied(er) der Patentfamilie | Datum der Veröffentlichung |
|---|---|---|---|
| US 6266166 B1 | 24-07-2001 | KEINE | |
| US 3833383 A | 03-09-1974 | CA 1005677 A | 22-02-1977 |
| | | DE 2340236 A1 | 28-02-1974 |
| | | FR 2196502 A1 | 15-03-1974 |
| | | GB 1432633 A | 22-04-1976 |
| | | JP S4960547 A | 12-06-1974 |
| | | JP S5335721 B2 | 28-09-1978 |
| | | NL 7311377 A | 20-02-1974 |
| | | US 3833383 A | 03-09-1974 |
| EP 2801867 A1 | 12-11-2014 | CN 104143346 A | 12-11-2014 |
| | | EP 2801867 A1 | 12-11-2014 |
| | | JP 6497850 B2 | 10-04-2019 |
| | | JP 2014225013 A | 04-12-2014 |
| | | KR 20140132689 A | 18-11-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4942112 A
- US 5759721 A
- EP 1510862 A
- EP 1231511 A
- EP 211615 A
- WO 2003036389 A
- US 2002142227 A
- WO 2010037515 A
- WO 2008125229 A1
- US 5985490 A
- EP 2801867 A1
- US 4994347 A
- EP 0223587 A
- WO 2012062655 A
- US 2012062658 A
- US PS4066591 A
- US 3705164 A
- US 4198330 A
- US 4318833 A
- WO 2015091427 A
- EP 0963923 A


### In der Beschreibung aufgeführte Nicht-Patentliteratur


- **CUNNINGHAM et al.** *RadTech'98 North America UV/EB Conference Proceedings,* 19. April 1998
- Chemistry & Technology of UV & EB Formulations For Coatings. Inks & Paints. SITA Technology, 1991, vol. 3, 61-328
- Bd. 2 "Bindemittel für lösemittelhaltige und lösemittelfreie Systeme", Bd. 2 "Bindemittel für wasserverdünnbare Systeme. **KITTEL.** Lehrbuch der Lacke und Beschichtungen. S. Hirzel Verlag, vol. 2
- **ULRICH MEIER-WESTHUES.** Polyurethane. Vincentz Network GmbH Verlag
- **H. BERNETH.** Ullmann's Encyclopedia of Industrial Chemistry, Methine Dyes and Pigments. Wiley-VCH Verlag, 2008
- **T. GESSNER ; U. MAYER.** Ullmann's Encyclopedia of Industrial Chemistry, Triarylmethane and Diarylmethane Dyes. Wiley-VCH Verlag, 2000
- Ullmann's Encyclopedia of Industrial Chemistry, Azine Dyes. Wiley-VCH Verlag, 2008
- **K. HUNGER ; P. MISCHKE ; W. RIEPER ; R. RAUE ; K. KUNDE ; A. ENGEL.** Ullmann's Encyclopedia of Industrial Chemistry, Azo Dyes. Wiley-VCH Verlag, 2002
- **A. E. SIEGRIST ; C. ECKARDT ; J. KASCHIG ; E. SCHMIDT.** Ullmann's Encyclopedia of Industrial Chemistry, Optical Brighteners. Wiley-VCH Verlag, 2012
- **P. EHBETS ; H.P. HERZIG ; R. DÄNDLIKER.** TIR holography analyzed with coupled wave theory. *Optics Communications,* 1992, vol. 89 (1), ISSN 0030-4018, 5-11, https://doi.org/10.1016/0030-4018(92)90238-M